# EUROPÄISCHE PATENTSCHRIFT

(11) **EP 1 894 946 B1**
(45) Veröffentlichungstag und Bekanntmachung des Hinweises auf die Patenterteilung: **21.12.2011**
(21) Anmeldenummer: 07114362.2
(22) Anmeldetag: 15.08.2007
(51) Int. Cl.: C08C 19/08, C08C 19/02

(54) **Verfahren zum Metathese-Abbau von Nitrilkautschuken**
Method for metathesis decomposition of nitrile rubbers
Procédé de décomposition de caoutchouc nitrile par métathèse

(30) Priorität: 30.08.2006 DE 102006040569
(43) Veröffentlichungstag der Anmeldung: 05.03.2008
(73) Patentinhaber: LANXESS Deutschland GmbH, 51369 Leverkusen (DE)
(72) Erfinder: Obrecht, Werner, 47447, Moers (DE); Müller, Julia Maria, 89134, Blaustein (DE); Nuyken, Oskar, 81927, München (DE); Kellner, Monika, 81927, München (DE)

(56) Entgegenhaltungen:
- EP-A- 1 826 220
- WO-A-2005/080456

## Beschreibung

Die vorliegende Erfindung betrifft ein verbessertes Verfahren zum Metathese-Abbau von Nitrilkautschuk in Gegenwart eines Katalysators sowie eines speziellen Zusatzes.

Unter Nitrilkautschuk, abgekürzt auch als "NBR" bezeichnet, werden Kautschuke verstanden, bei denen es sich um Co- oder Terpolymere aus mindestens einem α,β-ungesättigten Nitril, mindestens einem konjugierten Dien und gegebenenfalls weiteren copolymerisierbaren Monomeren handelt.

Hydrierter Nitrilkautschuk, abgekürzt auch als "HNBR" bezeichnet, wird durch Hydrierung von Nitrilkautschuk hergestellt. Entsprechend sind in HNBR die C=C Doppelbindungen der einpolymerisierten Dieneinheiten ganz oder teilweise hydriert. Der Hydriergrad der einpolymerisierten Dieneinheiten liegt üblicherweise in einem Bereich von 50 bis 100%.

Hydrierter Nitrilkautschuk ist ein Spezialkautschuk, der über eine sehr gute Hitzebeständigkeit, eine hervorragende Beständigkeit gegen Ozon und Chemikalien sowie eine ausgezeichnete Ölbeständigkeit verfügt.

Die vorgenannten physikalischen und chemischen Eigenschaften des HNBR gehen einher mit sehr guten mechanischen Eigenschaften, insbesondere einer hohen Abriebfestigkeit. Aus diesem Grund hat HNBR breite Verwendung in den verschiedensten Anwendungsgebieten gefunden. HNBR wird beispielsweise eingesetzt für Dichtungen, Schläuche, Riemen und Dämpfungselemente im Automobilsektor, ferner für Statoren, Bohrlochdichtungen und Ventildichtungen im Bereich der Ölförderung sowie auch für zahlreiche Teile der Luftfahrtindustrie, der Elektroindustrie, des Maschinen- und des Schiffsbaus.

Am Markt kommerziell erhältliche HNBR Typen weisen üblicherweise eine Mooney-Viskosität (ML 1+4 bei 100°C) im Bereich von 55 bis 105 auf, was einem Gewichtsmittel des Molekulargewichts M_{w} (Bestimmungsmethode: Gelpermeationschromatographie (GPC) gegen Polystyroläquivalente) im Bereich von ca. 200.000 bis 500.000 entspricht. Die dabei zu messenden Polydispersitätsindizes PDI (PDI = M_{w}/Mₙ, wobei M_{w} das Gewichtsmittel und Mₙ das Zahlenmittel des Molekulargewichts darstellt), die eine Aussage über die Breite der Molekulargewichtsverteilung liefern, besitzen häufig einen Wert von 3 oder darüber. Der Restdoppelbindungsgehalt liegt üblicherweise in einem Bereich von 1 bis 18 % (bestimmt durch IR-Spektroskopie).

Der Verarbeitbarkeit von HNBR sind durch die relativ hohe Mooney-Viskosität starke Beschränkungen auferlegt. Für viele Anwendungen wäre ein HNBR Typ wünschenswert, der ein niedrigeres Molekulargewicht und damit eine niedrigere Mooney-Viskosität besitzt. Dies würde die Verarbeitbarkeit entscheidend verbessern.

In der Vergangenheit wurden zahlreiche Versuche unternommen, die Kettenlänge von HNBR durch Abbau zu verkürzen. Beispielsweise ist ein Molekulargewichtsabbau durch thermomechanische Behandlung (Mastikation) z. B. auf einem Walzwerk oder auch in einem Schneckenaggregat (EP-A-0 419 952) möglich. Dieser thermomechanische Abbau hat jedoch den Nachteil, dass durch partielle Oxidation funktionelle Gruppen wie Hydroxyl-, Keto-, Carbonsäure- und Ester-Gruppen in das Molekül eingebaut werden und zusätzlich die Mikrostrukur des Polymers substanziell geändert wird.

Die Herstellung von HNBR mit niedrigen Molmassen, entsprechend einer Mooney Viskosität (ML 1+4 bei 100°C) in einem Bereich kleiner 55 bzw. einem Zahlenmittel des Molekulargewichts von ca. Mₙ < 200.000 g /mol, war mittels etablierter Herstellungsverfahren lange Zeit nicht möglich, da einerseits bei der Hydrierung von NBR ein sprunghafter Anstieg der Mooney Viskosität erfolgt und andererseits die Molmasse des für die Hydrierung einzusetzenden NBR-Feedstocks nicht beliebig reduziert werden kann, da sonst die Aufarbeitung in den zur Verfügung stehenden großtechnischen Anlagen wegen zu hoher Klebrigkeit nicht mehr möglich ist. Die niedrigste Mooney Viskosität eines NBR-Feedstocks, die ohne Schwierigkeiten in einer etablierten großtechnischen Anlage aufarbeitbar ist, liegt bei ca. 30 Mooney-Einheiten (ML 1+4 bei 100°C). Die Mooney Viskosität des hydrierten Nitrilkautschuks, der mit einem solchen NBR-Feedstock erhalten wird, liegt in der Größenordnung von 55 Mooney-Einheiten (ML 1+4 bei 100°C). Die Bestimmung der Mooney-Viskosität erfolgt dabei jeweils gemäß ASTM Norm D1646.

Im neueren Stand der Technik wird dieses Problem gelöst, indem man das Molekulargewicht des Nitrilkautschuks vor der Hydrierung durch Abbau auf eine Mooney Viskosität (ML 1+4 bei 100°C) von weniger als 30 Mooney-Einheiten bzw. ein Zahlenmittel des Molekulargewichts von Mₙ < 70.000 g / mol reduziert. Den Abbau des Molekulargewichts erreicht man hierbei durch eine Metathese-Reaktion, bei der üblicherweise niedermolekulare 1-Olefine zugesetzt werden. Die Metathesereaktion wird zweckmäßigerweise im gleichen Lösungsmittel wie die nachfolgende Hydrierreaktion durchgeführt, damit man den abgebauten NBR-Feedstock nach Beendigung der Abbaureaktion nicht aus dem Lösungsmittel isolieren muss, bevor man ihn der Hydrierung unterwirft. Für die Katalyse der Metathese-Abbaureaktion verwendet man Metathesekatalysatoren, die gegenüber polaren Gruppen, insbesondere gegenüber Nitrilgruppen, tolerant sind.

In der WO-A-02/100905 und der WO-A-02/100941 wird ein Verfahren beschrieben, welches den Abbau von Nitrilkautschuk-Ausgangspolymeren durch Olefinmetathese und eine anschließende Hydrierung umfasst. Hierbei wird ein Nitrilkautschuk in einem ersten Schritt in Gegenwart eines Co-Olefins und eines speziellen Komplexkatalysators auf Osmium-, Ruthenium-, Molydän- oder Wolfram-Basis umgesetzt und in einem zweiten Schritt hydriert. Erhältlich sind auf diesem Weg hydrierte Nitrilkautschuke mit einem Gewichtsmittel des Molekulargewichts (M_{w}) im Bereich von 30.000 bis 250.000, einer Mooney-Viskosität (ML 1+4 bei 100 °C) im Bereich von 3 bis 50 und einem Polydispersitätsindex PDI von kleiner 2.5.

Metathesekatalysatoren sind allgemein beispielsweise in der WO-A-96/04289 und WO-A-97/06185 beschrieben. Sie besitzen die folgende prinzipielle Struktur: 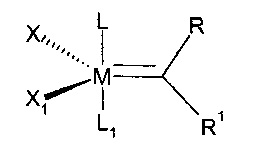 worin M für Osmium oder Ruthenium steht, R und R¹ organische Reste mit großer struktureller Variationsbreite darstellen, X und X₁ anionische Liganden und L sowie L₁ n eutrale Elektronen-Donoren darstellen. Unter dem gängigen Begriff "anionische Liganden" werden in der Literatur für derartige Metathese-Katalysatoren immer solche Liganden verstanden, die, wenn man sie als vom Metall-Zentrum entfernt betrachtet, bei geschlossener Elektronenschale negativ geladen wären.

Derartige Katalysatoren werden als geeignet für Ringschlussmetathesen (RCM), Kreuzmetathesen (CM) und Ringöffnungsmetathesen (ROMP) beschrieben.

Mit Katalysatoren aus der Gruppe der sogenannten **"Grubbs (I) Katalysatoren"** gelingt die Durchführung der Metathese von Nitrilkautschuk. Geeignet ist z.B. der nachfolgend dargestellte Katalysator Bis(tricyclohexylphosphin) benzyliden-rutheniumdichlorid.

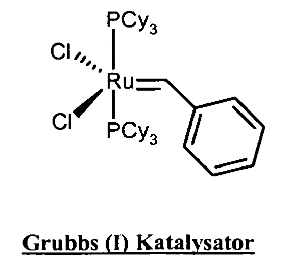

Nach Metathese und Hydrierung weisen die Nitrilkautschuke ein niedrigeres Molekulargewicht sowie eine engere Molekulargewichtsverteilung auf als die nach dem Stand der Technik herstellbaren hydrierten Nitrilkautschuke.

Die für die Durchführung der Metathese angewandten Mengen an Grubbs-(I)-Katalysator sind jedoch groß. Sie betragen gemäß den Beispielen in der WO-A-03/002613 307 ppm und 61 ppm Ru. Die notwendigen Reaktionszeiten sind darüber hinaus lang und die Molekulargewichte auch nach dem Abbau noch immer relativ hoch (siehe Beispiel 3 der WO-A-03/002613 mit M_{w} = 180000 g/mol und Mₙ = 71000g/mol).

US 2004/0127647 A1 beschreibt Blends auf der Basis niedermolekularer HNBR-Kautschuke mit bi- bzw. multimodaler Molekulargewichtsverteilung sowie Vulkanisate dieser Kautschuke. Für die Durchführung der Metathese werden nach den Beispielen 0,5 phr an Grubbs-I-Katalysator entsprechend 614 ppm Ruthenium verwendet.

Aus WO-A-00/71554 ist ferner eine Gruppe von Katalysatoren bekannt, die in der Fachwelt als **"Grubbs (II) Katalysatoren"** bezeichnet werden. Verwendet man einen solchen "Grubbs(II) Katalysator" wie z.B. 1,3-Bis(2,4,6-trimethylphenyl)-2-imidazolidenyliden) (tricyclohexylphosphin)ruthenium(phenylmethylen)dichlorid für die NBR-Metathese, gelingt diese auch ohne Verwendung eines Co-Olefins (US-A-2004/0132891). Nach der anschließenden Hydrierung, die in-situ durchgeführt wird, weist der hydrierte Nitrilkautschuk niedrigere Molekulargewichte und eine engere Molekulargewichtsverteilung (PDI) auf als bei Verwendung von Katalysatoren des Grubbs-(I)-Typs. Bezüglich des Molekulargewichts und der Molekulargewichtsverteilung verläuft somit der Metatheseabbau mit Katalysatoren des Typs Grubbs-II effizienter als mit Katalysatoren des Typs Grubbs-I. Allerdings sind die für diesen effizienten Metatheseabbau notwendigen Ruthenium-Mengen immer noch relativ hoch, und es werden immer noch lange Reaktionszeiten benötigt. 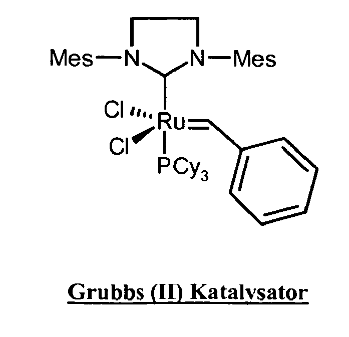 Allen zuvor genannten Verfahren zum Metatheseabbau von Nitrilkautschuk ist gemeinsam, dass relativ große Katalysatormengen eingesetzt werden müssen und lange Reaktionszeiten benötigt werden, um die gewünschten niedermolekularen Nitrilkautschuke herzustellen.

In J. Am. Chem. Soc. 1997, 119, 3887-3897 wird beschrieben, dass bei der nachfolgend dargestellten Ringschlussmetathese von Diethyldiallylmalonat 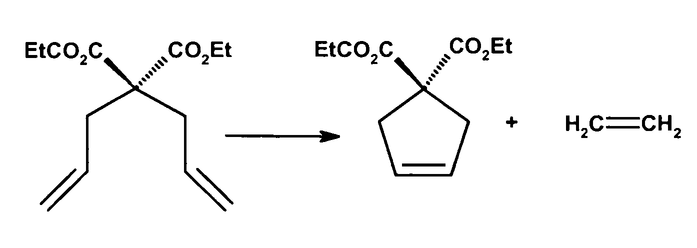 die Aktivität der Katalysatoren des Grubbs I Typs durch Zusätze von CuCl und CuCl₂ gesteigert werden kann. Erklärt wird diese Aktivitätssteigerung durch eine Verschiebung des Dissoziationsgleichgewichts, indem vom Grubbs I Katalysator abdissoziierender Phosphanligand durch die Kupferionen unter Bildung von Kupfer-Phosphankomplexen abgefangen wird. Beschrieben wird jedoch in J. Am. Chem. Soc. 1997, 119, 3887-3897, dass durch den Zusatz von Phosphanen in einer Menge von 0,25 bis 1,0 Äquivalenten bezogen auf 1 Äquivalent des Rutheniumcarbenkomplexes die Reaktionsgeschwindigkeit der Ringschlussmetathese reduziert wird.

Es bestand daher die Aufgabe, Katalysator-Systeme zu finden, die bei Anwendung im Metathese-Abbau von Nitrilkautschuken eine erhöhte Aktivität aufweisen, um dadurch die notwendigen Katalysatormengen, insbesondere die enthaltenen Edelmetallmengen, zu reduzieren und die Reaktionsgeschwindigkeit herabzusetzen.

Es wurde nun gefunden, dass die Aktivität von Metathese-Katalysatoren beim Abbau von Nitrilkautschuken gesteigert werden kann, wenn man sie in Kombination mit einem Phosphan oder Diphosphan einsetzt. Dies ist umso überraschender, als ein Fachmann ausgehend von J. Am. Chem. Soc. 1997,119, 3887-3897 eben dies nicht erwartet hätte.

**Gegenstand der Erfindung** ist somit ein Verfahren zum Metathese-Abbau von Nitrilkautschuk in Gegenwart eines Katalysators und eines Phosphans oder eines Diphosphans, wobei 0,01-1 Äquivalente des Phosphan s bzw. Diphosphans bezogen auf 1 Äquivalent Katalysator eingesetzt werden.

Im Rahmen dieser Anmeldung und Erfindung können alle im Folgenden genannten, allgemeinen oder in Vorzugsbereichen genannten Definitionen von Resten, Parametern oder Erläuterungen untereinander, also auch zwischen den jeweiligen Bereichen und Vorzugsbereichen in beliebiger Weise kombiniert werden.

Der im Rahmen dieser Anmeldung im Zusammenhang mit dem Metathese-Katalysator oder den Phosphanen bzw. Diphosphanen verwendete Begriff "substituiert" bedeutet, dass ein WasserstoffAtom an einem angegebenen Rest oder Atom durch eine der jeweils angegebenen Gruppen ersetzt ist, mit der Maßgabe, dass die Wertigkeit des angegebenen Atoms nicht überschritten wird und die Substitution zu einer stabilen Verbindung führt.

Als Phosphane werden üblicherweise solche der allgemeinen Formel (IA) eingesetzt, 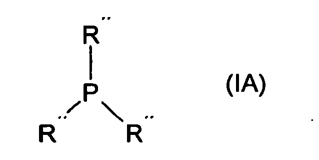 wobei
- alle R": gleich oder verschieden sind und Alkyl, Alkenyl, Alkadienyl, Alkoxy, Aryl, Heteroaryl, Cycloalkyl, Cycloalkenyl, Cycloalkadienyl, Halogen oder Trimethylsilyl bedeuten,

Die Reste R" können dabei weiter substituiert sein.

Als Diphosphane werden üblicherweise solche der allgemeinen Formel (IB) eingesetzt, 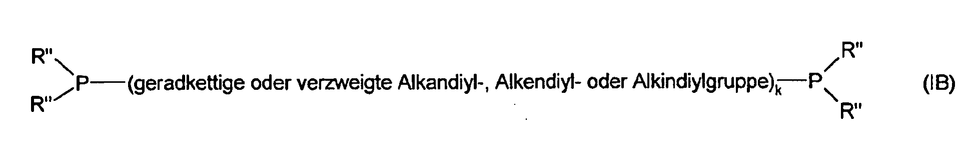 worin
- alle R": gleich oder verschieden sind und die gleichen Bedeutungen besitzen wie in der allgemeinen Formel (IA),
- k: 0 oder 1 ist.

Derartige Phosphane oder Diphosphane der allgemeinen Formeln (IA) und (IB) sind nach dem Fachmann bekannten Methoden herstellbar oder aber käuflich erhältlich.

Die **Alkyl-Reste** in den Resten R" der Phosphane bzw. Diphosphane der allgemeinen Formeln (IA) und (IB) sind gleich oder verschieden und stehen üblicherweise jeweils für einen geradkettigen oder verzweigten C₁-C₃₀-Alkylrest, bevorzugt C₁-C₂₄-Alkylrest, besonders bevorzugt C₁-C₁₈-Alkylrest. C₁-C₁₈-Alkyl umfasst beispielsweise Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, 1,1-Dimethylpropyl, 1,2-Dimethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, n-Heptyl, n-Octyl, n-Nonyl, n-Decyl, n-Undexyl, n-Dodecyl, n-Tridecyl, n-Tetradecyl, n-Hexadecyl und n-Octadecyl.

Alle vorgenannten Alkyl-Reste sind optional ein- oder mehrfach substituiert, beispielsweise durch C₅-C₂₄-Aryl-Reste, bevorzugt Phenyl, Halogen, bevorzugt Fluor, Chlor oder Brom, CN, OH, NH₂ oder NR'₂-Reste, wobei R' wiederum C₁-C₃₀-Alkyl oder C₅-C₂₄-Aryl bedeuten kann.

Die **Alkenyl-Reste** in den Resten R" der Phosphane bzw. Diphosphane der allgemeinen Formeln (IA) und (IB) sind gleich oder verschieden und stehen üblicherweise für C₂-C₃₀-Alkenyl, bevorzugt für C₂-C₂₀-Alkenyl. Besonders bevorzugt handelt es sich bei dem Alkenylrest um einen Vinylrest oder einen Allylrest.

Die **Alkadienyl-Reste** in den Resten R" der Phosphane bzw. Diphosphane der allgemeinen Formeln (IA) und (IB) sind gleich oder verschieden und stehen üblicherweise für C₄-C₃₀-Alkadienyl, bevorzugt für C₄-C₂₀-Alkadienyl. Besonders bevorzugt handelt es sich bei dem Alkadienylrest um Butadienyl oder Pentadienyl.

Die **Alkoxy-Reste** in den Resten R" der Phosphane bzw. Diphosphane der allgemeinen Formeln (IA) und (IB) sind gleich oder verschieden und bedeuten üblicherweise C₁-C₂₀-Alkoxy-, bevorzugt C₁-C₁₀-Alkoxy, besonders bevorzugt Methoxy, Ethoxy, n-Propoxy, iso-Propoxy, n-Butoxy, sec.-Butoxy, tert.-Butoxy, n-Pentoxy und n-Hexoxy.

Die **Aryl-Reste** in den Resten R" der Phosphane bzw. Diphosphane der allgemeinen Formeln (IA) und (IB) sind ebenfalls gleich oder verschieden und stehen üblicherweise für einen C₅-C₂₄-Arylrest, bevorzugt C₆-C₁₄-Arylrest, besonders bevorzugt C₆-C₁₂-Arylrest. Beispiele für C₅-C₂₄-Aryl sind Phenyl, o-, p-, m-Tolyl, Naphthyl, Phenanthrenyl, Anthracenyl und Fluorenyl.

Diese Arylreste sind optional ein- oder mehrfach substituiert, beispielsweise durch geradkettiges oder verzweigtes C₁-C₃₀-Alkyl (es resultieren sogenannte Alkaryl-Reste), Halogen, bevorzugt Fluor, Chlor oder Brom, Sulfonat (SO₃Na), geradkettiges oder verweigtes C₁-C₃₀-Alkoxy, bevorzugt Methoxy oder Ethoxy, Hydroxy, NH₂ oder NR'₂-Reste, wobei R' wiederum geradkettiges oder verzweigtes C₁-C₃₀-Alkyl oder C₅-C₂₄-Aryl bedeuten kann, oder durch weitere C₅-C₂₄-Arylreste, so dass ein oder mehrere der R" Reste dann einen Biphenyl oder Binaphthyl-Rest darstellen, der optional wiederum durch alle vorgenannten Substituenten ein- oder mehrfach substituiert sein kann.

Die **Heteroaryl-Reste** in den Resten R" der Phosphane bzw. Diphosphane der allgemeinen Formeln (IA) und (IB) sind gleich oder verschieden und besitzen die gleiche Bedeutung wie die Aryl-Reste, wobei jedoch ein- oder mehrere der Gerüstkohlenstoff-Atome durch ein Heteroatom, ausgewählt aus der Gruppe Stickstoff, Schwefel und Sauerstoff, ersetzt sind. Beispiele für solche Heteroaryl-Reste sind Pyridinyl, Oxazolyl, Benzofuranyl, Dibenzofuranyl und Chinolinyl.

Die **Cycloalkyl-Reste** in den Resten R" der Phosphane bzw. Diphosphane der allgemeinen Formeln (IA) und (IB) sind gleich oder verschieden und bedeuten üblicherweise einen C₃-C₂₀-Cycloalkylrest, bevorzugt einen C₃-C₈-Cycloalkylrest, besonders bevorzugt Cyclopentyl und Cyclohexyl.

Die **Cycloalkenyl-Reste** in den Resten R der Phosphane bzw. Diphosphane der allgemeinen Formeln (IA) und (IB) sind gleich oder verschieden, weisen im Ringgerüst eine C=C Doppelbindung auf und bedeuten üblicherweise C₅-C₈ Cycloalkenyl, bevorzugt Cyclopentenyl und Cyclohexenyl.

Die **Cycloalkadienyl-Reste** in den Resten R" der Phosphane bzw. Diphosphane der allgemeinen Formeln (IA) und (IB) sind gleich oder verschieden, weisen im Ringgerüst zwei C=C Doppelbindungen auf und stehen üblicherweise für C₅-C₈ Cycloalkadienyl, bevorzugt für Cyclopentadienyl oder Cyclohexadienyl.

Die **Halogen Reste** in den Resten R" der Phosphane bzw. Diphosphane der allgemeinen Formeln (IA) und (IB) sind gleich oder verschieden und bedeuten Fluor, Chlor oder Brom.

Besonders bevorzugt sind als Phosphane der allgemeinen Formel (IA) Trialkyl-, Tricycloalkyl-, Triaryl-, Trialkaryl-, Triaralkyl-, Diaryl-monoalkyl-, Diaryl-monocycloalkyl-, Dialkyl-monoaryl-, Dialkyl-monocycloalkyl- oder Dicycloalkyl-monoaryl-Phosphane, wobei alle vorgenannten Reste wiederum durch die zuvor genannten Substituenten ein- oder mehrfach substituiert sein können.

Inbesondere bevorzugt sind Phosphane der allgemeinen Formel (IA), bei denen die Reste R" gleich oder verschieden sind und für Phenyl, Cyclohexyl, Cyclohexenyl, Cyclopentyl, Cyclopentadienyl, Phenylsulfonat oder Cyclohexylsulfonat stehen.

Ganz besonders bevorzugt werden als Phosphane der allgemeinen Formel (IA) PPh₃, P(p-Tol)₃, P(o-Tol)₃, PPh(CH₃)₂, P(CF₃)₃, P(p-FC₆H₄)₃, P(_{P}-CF₃C₆H₄)₃, P(C₆H₄-SO₃Na)₃, P(CH₂C₆H₄-SO₃Na)₃, P(iso-Pr)₃, P(CHCH₃(CH_{Z}CH₃))₃, P(cyclopentyl)₃, P(cyclohexyl)₃, P(neopentyl)₃, P(C₆H₅CH₂)(C₆H₅)₂, P(NCCH₂CH₂)₂(C₆H₅), PL(CH₃)₃C]₂Cl, P[(CH₃)₃C]₂(CH₃), P(tert.-Bu)₂(biph), P(C₆H₁₁)₂Cl, P(CH₃)(OCH₂CH₃)₂, P(CH₂=CHCH₂)₃, P(C₄H₃O)₃, P(CH₂OH)₃, P(m-CH₃OC₆H₄)₃, P(C₆F₅)₃, P[(CH₃)₃Si]₃, P[(CH₃O)₃C₆H₂]₃ eingesetzt, wobei Ph für Phenyl, Tol für Tolyl, biph für Biphenyl, Bu für Butyl und Pr für Propyl stehen.

In den Diphosphanen der allgemeinen Formel (IB) steht k für 0 oder 1, bevorzugt für 1.

Die geradkettige oder verzweigte Alkandiyl-, Alkendiyl- oder Alkindiylgruppe in der allgemeinen Formel (IB) ist bevorzugt eine geradkettige oder verzweigte C₁-C₂₀-Alkandiyl-, C₂-C₂₀-Alkendiyl- oder C₂-C₂₀-Alkindiylgruppe, besonders bevorzugt eine geradkettige oder verzweigte C₁-C₈-Alkandiyl-, C₂-C₆-Alkendiyl- oder C₂-C₆-Alkindiylgruppe.

C₁-C₈-Alkandiyl steht für einen geradkettigen oder verzweigten Alkandiylrest mit 1 bis 8 Kohlenstoffatomen. Besonders bevorzugt ist ein geradkettiger oder verzweigter Alkandiylrest mit 1 bis 6 Kohlenstoffatomen, insbesondere mit 2 bis 4 Kohlenstoffatomen. Vorzugsweise seien genannt Methylen, Ethylen, Propylen, Propan-1,2-diyl, Propan-2,2-diyl, Butan-1,3-diyl, Butan-2,4-diyl, Pentan-2,4-diyl und 2-Methyl-pentan-2,4-diyl.

C₂-C₆-Alkendiyl steht für einen geradkettigen oder verzweigten Alkendiylrest mit 2 bis 6 Kohlenstoffatomen. Bevorzugt ist ein geradkettiger oder verzweigter Alkendiylrest mit 2 bis 4, besonders bevorzugt mit 2 bis 3 Kohlenstoffatomen. Vorzugsweise seien genannt: Vinylen, Allylen, Prop-1-en-1,2-diyl und But-2-en-1,4-diyl.

C₂-C₆-Alkindiyl steht für einen geradkettigen oder verzweigten Alkindiylrest mit 2 bis 6 Kohlenstoffatomen. Bevorzugt ist ein geradkettiger oder verzweigter Alkindiylrest mit 2 bis 4, besonders bevorzugt mit 2 bis 3 Kohlenstoffatomen. Vorzugsweise seien genannt: Ethindiyl und Propindiyl.

Besonders bevorzugte Diphosphane der allgemeinen Formel (IB) sind Cl₂PCH₂CH₂PCl₂, (C₆H₁₁)₂PCH₂P(C₆H₁₁), (CH₃)₂PCH₂CH₂P(CH₃)₂, (C₆H₅)₂PCCP(C₆H₅)₂, (C₆H₅)₂PCH=CHP(C₆H₅)₂, (C₆F₅)₂PCH₂CH₂P(C₆F₅)₂, (C₆H₅)₂P(CH₂)₄P(C₆H₅)₂, (C₆H₅)₂PCH(CH₃)CH(CH₃)P(C₆H₅)₂ und (C₆H₅)₂PCH(CH₃)CH₂P(C₆H₅)₂.

Das Phosphan bzw. Diphosphan wird in einer Menge im Bereich von 0,01 bis 1 Äquivalenten, bevorzugt in einer Menge im Bereich von 0,05 bis 0,5 Äquivalenten und besonders bevorzugt in einer Menge im Bereich von 0,10 bis 0,20 Äquivalenten Phosphan bzw. Diphosphan eingesetzt, jeweils bezogen auf 1 Äquivalent des Metathese-Katalysators.

Die Phosphane oder Diphosphane der allgemeinen Formeln (IA) und (IB) werden im erfindungsgemäßen Verfahren der Metathese-Reaktion von außen zugesetzt.

Durch den erfindungsgemäßen Zusatz der Phosphane bzw. Diphosphane gelingt beim Metathese-Abbau von Nitrilkautschuken eine Aktivitätssteigerung bei allen bekannten Metathese-Katalysatoren.

Als Katalysatoren werden im erfindungsgemäßgen Verfahren **Verbindungen der allgemeinen Formel (A)** eingesetzt, 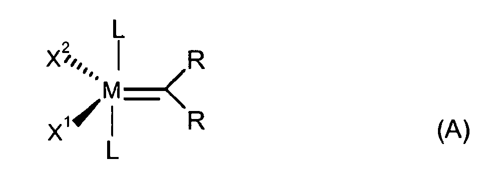 worin
- M: Osmium oder Ruthenium bedeutet,
- R: gleich oder verschieden sind und Alkyl-, bevorzugt C₁-C₃₀-Alkyl-, Cycloalkyl-, bevorzugt C₃-C₂₀-Cycloalkyl-, Alkenyl-, bevorzugt C₂-C₂₀-Alkenyl-, Alkinyl-, bevorzugt C₂-C₂₀-Alkinyl-, Aryl-, bevorzugt C₅-C₂₄-Aryl-, Carboxylat-, bevorzugt C₁-C₂₀-Carboxylat-, Alkoxy-, bevorzugt C₁-C₂₀-Alkoxy-, Alkenyloxy-, bevorzugt C₂-C₂₀-Alkenyloxy-, Alkinyloxy-, bevorzugt C₂-C₂₀-Alkinyloxy-, Aryloxy-, bevorzugt C₅-C₂₄-Aryloxy, Alkoxycarbonyl-, bevorzugt C₂-C₂₀-Alkoxycarbonyl-, Alkylamino-, bevorzugt C₁-C₃₀-Alkylamino, Alkylthio-, bevorzugt C₁-C₃₀-Alkylthio, Arylthio-, bevorzugt C₅-C₂₄-Arylthio, Alkylsulfonyl-, bevorzugt C₁-C₂₀-Alkylsulfonyl, oder Alkylsulfinyl, bevorzugt C₁-C₂₀-Alkylsulfinyl bedeuten, die alle jeweils optional durch ein oder mehrere Alkyl-, Halogen-, Alkoxy-, Aryl- oder Heteroaryl-Reste substituiert sein können,
- X¹ und X²: gleich oder verschieden sind und zwei Liganden, bevorzugt anionische Liganden, darstellen, und
- L: gleiche oder verschiedene Liganden, bevorzugt neutrale Elektronen-Donoren darstellen.
In den Katalysatoren der allgemeinen Formel (A) sind **X¹ und X²** gleich oder verschieden und stellen zwei Liganden, bevorzugt anionische Liganden, dar.

X¹ und X² stehen üblicherweise für Wasserstoff, Halogen, Pseudohalogen, geradkettiges oder verzweigtes C₁-C₃₀-Alkyl, C₅-C₂₄-Aryl, C₁-C₂₀-Alkoxy, C₅-C₂₄-Aryloxy, C₃-C₂₀-Alkyldiketonat, C₅-C₂₄-Aryldiketonat, C₁-C₂₀-Carboxylat, C₁-C₂₀- Alkylsulfonat, C₅-C₂₄-Arylsulfonat, C₁-C₂₀-Alkylthiol, C₅-C₂₄-Arylthiol, C₁-C₂₀-Alkylsulfonyl oder C₁-C₂₀-Alkylsulfinyl.

Die vorgenannten Reste X¹ und X² können ferner durch ein oder mehrere weitere Reste substituiert sein, beispielsweise durch Halogen, bevorzugt Fluor, geradkettiges oder verzweigtes C₁-C₁₀-Alkyl, C₁-C₁₀-Alkoxy oder C₅-C₂₄-Aryl, wobei auch diese Reste gegebenenfalls wiederum durch ein oder mehrere Substituenten substituiert sein können, die aus der Gruppe bestehend aus Halogen, bevorzugt Fluor, C₁-C₅-Alkyl, C₁-C₅-Alkoxy und Phenyl ausgewählt sind.

In einer bevorzugten Ausführungsform sind X¹ und X² gleich oder verschieden und bedeuten Halogen, insbesondere Fluor, Chlor, Brom oder Jod, Benzoat, C₁-C₅-Carboxylat, C₁-C₅-Alkyl, Phenoxy, C₁-C₅-Alkoxy, C₁-C₅-Alkylthiol, C₆-C₂₄-Arylthiol, C₆-C₂₄-Aryl oder C₁-C₅-Alkylsulfonat.

In einer besonders bevorzugten Ausführungsform sind X¹ und X² identisch und bedeuten Halogen, insbesondere Chlor, CF₃COO, CH₃COO, CFH₂COO, (CH₃)₃CO, (CF₃)₂(CH₃)CO, (CF₃)(CH₃)₂CO, PhO (Phenoxy), MeO (Methoxy), EtO (Ethoxy), Tosylat (p-CH₃-C₆H₄-SO₃), Mesylat (2,4,6-Trimethylphenyl) oder CF₃SO₃ (Trifluormethansulfonat).

In der allgemeinen Formel (A) steht L für gleiche oder verschiedene Liganden, bevorzugt neutrale Elektronen-Donoren.

Die beiden Liganden L können beispielsweise unabhängig voneinander einen Phosphin-, sulfonierten Phosphin-, Phosphat-, Phosphinit-, Phosphonit-, Arsin-, Stibin-, Ether-, Amin-, Amid-, Sulfoxid-, Carboxyl-, Nitrosyl-, Pyridin-, Thioether- oder einen Imidazolidin ("Im")-Liganden bedeuten.

Bevorzugt bedeuten die beiden Liganden L unabhängig voneinander einen C₅-C₂₄-Aryl-, C₁-C₅-Alkyl- oder C₃-C₂₀-Cycloalkyl-Phosphin-Liganden, einen C₅-C₂₄-Aryl- oder C₁-C₁₀-Alkylsulfonierten Phosphin-Liganden, einen C₅-C₂₄-Aryl- oder C₁-C₁₀-Alkyl-Phosphinit-Liganden, einen C₅-C₂₄-Aryl- oder C₁-C₁₀-Alkylphosphonit-Liganden, einen C₅-C₂₄-Aryl- oder C₁-C₁₀-Alkylphosphit-Liganden, einen C₅-C₂₄-Aryl- oder C₁-C₁₀-Alkylarsin-Liganden, einen C₅-C₂₄-Aryl- oder C₁-C₁₀-Alkylamin-Liganden, einen Pyridin-Liganden, einen C₅-C₂₄-Aryl- oder C₁-C₁₀-Alkyl-Sulfoxid-Liganden, einen C₅-C₂₄-Aryl- oder C₁-C₁₀-Alkyl-Ether-Liganden oder einen C₅-C₂₄-Aryl- oder C₁-C₁₀-Alkylamid-Liganden, die alle jeweils durch eine Phenylgrupppe substituiert sein können, die wiederum gegebenenfalls durch einen Halogen-, C₁-C₅ Alkyl - oder C₁-C₅ Alkoxy-Rest substituiert ist.

Die Bedeutung Phosphin schließt beispielsweise PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-Pr)₃, P(CHCH₃(CH₂CH₃))₃, P(Cyclopentyl)₃, P(Cyclohexyl)₃ und P(Neopentyl)₃ ein, wobei Ph für Phenyl, Tol für Tolyl und Pr für Propyl steht.

Phosphinit schließt beispielsweise Triphenylphosphinit, Tricyclohexylphosphinit, Triisopropylphosphinit und Methyldiphenylphosphinit ein.

Phosphit schließt beispielsweise Triphenylphosphit, Tricyclohexylphosphit, Tri-tert.-Butylphosphit, Triisopropylphosphit und Methyldiphenylphosphit ein.

Stibin schließt beispielsweise Triphenylstibin, Tricyclohexylstibin und Trimethylstiben ein.

Sulfonat schließt beispielsweise Trifluoromethansulfonat, Tosylat und Mesylat ein.

Sulfoxid schließt beispielsweise CH₃S(=O)CH₃ und (C₆H₅)₂SO ein.

Thioether schließt beispielsweise CH₃SCH₃, C₆H₅SCH₃, CH₃OCH₂CH₂SCH₃ und Tetrahydrothiophen ein.

Der Imidazolidinrest (Im) weist üblicherweise eine Struktur der allgemeinen Formeln (IIa) oder (IIb) auf, 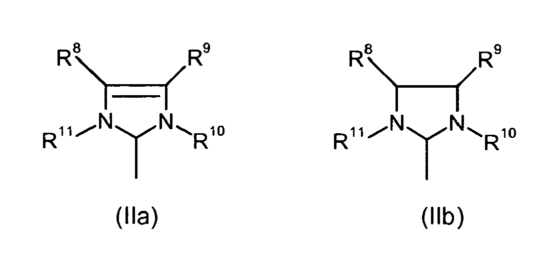 worin
- R⁸, R⁹, R¹⁰, R¹¹: gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₅-C₂₄-Aryl, C₁-C₂₀-Carboxylat, C₁-C₂₀-Alkoxy, C₂-C₂₀-Alkenyloxy, C₂-C₂₀-Alkinyloxy, C₅-C₂₀-Aryloxy, C₂-C₂₀-Alkoxycarbonyl, C₁-C₂₀-Alkylthio, C₅-C₂₀-Arylthio, C₁-C₂₀-Alkylsulfonyl, C₁-C₂₀-Alkylsulfonat, C₅-C₂₀-Arylsulfonat oder C₁-C₂₀-Alkylsulfinyl bedeuten.
Gegebenenfalls kann einer oder mehrere der Reste R⁸, R⁹, R¹⁰, R¹¹ unabhängig voneinander durch einen oder mehrere Substituenten, vorzugsweise geradkettiges oder verzweigtes C₁-C₁₀-Alkyl, C₃-C₈-Cycloalkyl, C₁-C₁₀-Alkoxy oder C₅-C₂₄-Aryl substituiert sein, wobei diese vorgenannten Substituenten wiederum durch ein oder mehrere Reste, vorzugsweise ausgewählt aus der Gruppe Halogen, insbesondere Chlor oder Brom, C₁-C₅-Alkyl, C₁-C₅-Alkoxy oder Phenyl substituiert sein können.

In einer bevorzugten Ausführungsform der Katalysatoren der allgemeinen Formel (A) bedeuten R⁸ und R⁹ unabhängig voneinander Wasserstoff, C₅-C₂₄-Aryl, besonders bevorzugt Phenyl, geradkettiges oder verzweigtes C₁-C₁₀-Alkyl, besonders bevorzugt Propyl oder Butyl, oder bilden zusammen unter Einschluss der Kohlenstoffatome, an die sie gebunden sind, einen Cycloalkyl- oder Aryl-Rest, wobei alle vorgenannten Reste gegebenenfalls wiederum durch ein oder mehrere weitere Reste substituiert sein können, ausgewählt aus der Gruppe umfassend geradkettiges oder verzweigtes C₁-C₁₀-Alkyl, C₁-C₁₀-Alkoxy, C₆-C₂₄-Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

In einer weiteren bevorzugten Ausführungsform der Katalysatoren der allgemeinen Formel (B) sind die Reste R¹⁰ und R¹¹ gleich und verschieden und bedeuten geradkettiges oder verzweigtes C₁-C₁₀-Alkyl, besonders bevorzugt i-Propyl oder Neopentyl, C₃-C₁₀-Cycloalkyl, bevorzugt Adamantyl, C₆-C₂₄-Aryl, besonders bevorzugt Phenyl, C₁-C₁₀-Alkylsulfonat, besonders bevorzugt Methansulfonat, C₆-C₁₀-Arylsulfonat, besonders bevorzugt p-Toluolsulfonat.

Gegebenenfalls sind die vorgenannten Reste als Bedeutungen von R¹⁰ und R¹¹ substituiert durch einen oder mehrere weitere Reste ausgewählt aus der Gruppe bestehend aus geradkettigem oder verzweigtem C₁-C₅-Alkyl, insbesondere Methyl, C₁-C₅-Alkoxy, Aryl und einer funktionellen Grupppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

Insbesondere können die Reste R¹⁰ und R¹¹ gleich und verschieden sein und bedeuten i-Propyl, Neopentyl, Adamantyl oder Mesityl.

Verschiedenste Vertreter der Katalysatoren der Formel (A) sind prinzipiell bekannt, so z.B. aus der WO-A-96/04289 und der WO-A-97/06185.

Besonders bevorzugt stehen beide Liganden L in der allgemeinen Formel (A) für gleiche oder verschiedene Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Weiterhin besonders bevorzugt steht in der allgemeinen Formel (A) ein Ligand L für einen Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Zwei insbesondere bevorzugte Katalysatoren, die unter die allgemeine Formel (A) fallen, besitzen die folgenden Struktur en (III) **(Grubbs (I)-Katalysator)** und (IV) **(Grubbs (II)-Katalysator)**, wobei Cy für Cyclohexyl und Mes jeweils für einen 2,4,6-Trimethylphenyl-Rest steht.

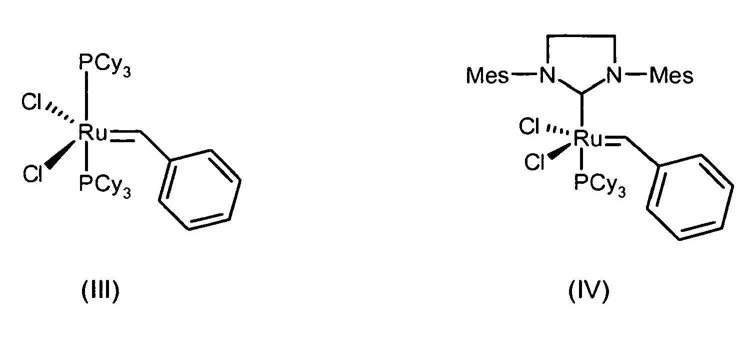

Als Katalysatoren werden i m erfindungsgemäßen Verfahren ferner auch **Katalysatoren der allgemeinen Formel (B)** eingesetzt, 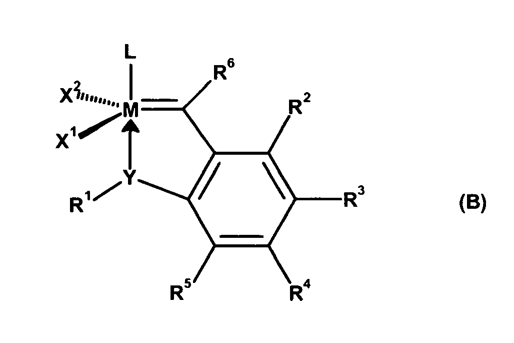 worin
- M: Ruthenium oder Osmium bedeutet,
- Y: Sauerstoff (O), Schwefel (S), einen Rest N-R¹ oder einen Rest P-R¹ bedeutet, wobei R¹ die nachfolgend genannten Bedeutungen besitzt,
- X¹ und X²: gleiche oder verschiedene, bevorzugt anionische Liganden sind,
- R¹: einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellt, die alle jeweils optional durch ein oder mehrere Alkyl-, Halogen-, Alkoxy-, Aryl- oder Heteroaryl-Reste substituiert sein können,
- R², R³, R⁴ und R⁵: gleich oder verschieden sind und Wasserstoff, organische oder anorganische Reste darstellen,
- R⁶: Wasserstoff, einen Alkyl-, Alkenyl-, Alkinyl- oder einen Aryl-Rest bedeutet und
- L: ein Ligand ist, der die gleichen Bedeutungen besitzt wie in der allgemeinen Formel (A) genannt.

Die Katalysatoren der allgemeinen Formel (B) sind prinzipiell bekannt. Vertreter dieser Verbindungsklasse sind die Katalysatoren, die von Hoveyda et al. in US 2002/0107138 A1 und Angew Chem. Int. Ed. 2003, 42, 4592 beschrieben sind, und die Katalysatoren, die von Grela in WO-A-2004/035596**,** Eur. J. Org. Chem 2003, 963-966 und Angew. Chem. Int. Ed. 2002, 41, 4038 sowie in J. Org. Chem. 2004, 69, 6894-96 und Chem. Eur. J 2004,10, 777-784 beschrieben werden. Diese Katalysatoren sind käuflich erhältlich bzw. gemäß den angegebenen Literaturstellen herstellbar.

In den Katalysatoren der allgemeinen Formel (B) steht L für einen Liganden, der üblicherweise eine Elektronen-Donor-Funktion besitzt und die gleichen allgemeinen, bevorzugten und besonders bevorzugten Bedeutungen annehmen kann wie L in der allgemeinen Formel (A).

Darüber hinaus gilt, dass L in der allgemeinen Formel (B) bevorzugt einen P(R⁷)₃ Rest, wobei R⁷ unabhängig voneinander C₁-C₆ Alkyl, C₃-C₈-Cycloalkyl oder Aryl bedeuten, oder aber einen gegebenenfalls substituierten Imidazolidinrest ("Im") der allgemeinen Formeln (IIa) oder (IIb) darstellt.

**C₁-C₆-Alkyl** steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl und n-Hexyl.

**C₃-C₈-Cycloalkyl** umfasst Cyclopropyl, Cyclobutyl, Cylopentyl, Cyclohexyl, Cycloheptyl und Cyclooctyl.

Aryl umfasst einen aromatischen Rest mit 5 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphtyl, Phenanthrenyl oder Anthracenyl genannt.

Der Imidazolidinrest **(Im)** weist üblicherweise eine Struktur der allgemeinen Formeln (IIa) oder (IIb) auf, 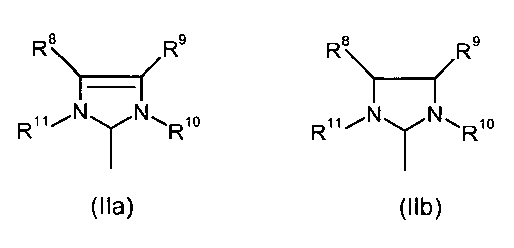 worin
- R⁸, R⁹, R¹⁰, R¹¹: gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₅-C₂₄-Aryl, C₁-C₂₀-Carboxylat, C₁-C₂₀-Alkoxy, C₂-C₂₀-Alkenyloxy, C₂-C₂₀-Alkinyloxy, C₅-C₂₀-Aryloxy, C₂-C₂₀-Alkoxycarbonyl, C₁-C₂₀-Alkylthio, C₅-C₂₀-Arylthio, C₁-C₂₀-Alkylsulfonyl, C₁-C₂₀-Alkylsulfonat, C₅-C₂₀-Arylsulfonatoder C₁-C₂₀-Alkylsulfinyl bedeuten.

Gegebenenfalls kann einer oder mehrere der Reste R⁸, R⁹, R¹⁰, R¹¹ unabhängig voneinander durch einen oder mehrere Substituenten, vorzugsweise geradkettiges oder verzweigtes C₁-C₁₀-Alkyl, C₃-C₈-Cycloalkyl, C₁-C₁₀-Alkoxy oder C₅-C₂₄-Aryl substituiert sein, wobei diese vorgenannten Substituenten wiederum durch ein oder mehrere Reste, vorzugsweise ausgewählt aus der Gruppe bestehend aus Halogen, insbesondere Chlor oder Brom, C₁-C₅-Alkyl, C₁-C₅-Alkoxy und Phenyl substituiert sein können.

In einer bevorzugten Ausführungsform der Katalysatoren der allgemeinen Formel (B) bedeuten R⁸ und R⁹ unabhängig voneinander Wasserstoff, C₅-C₂₄-Aryl, besonders bevorzugt Phenyl, geradkettiges oder verzweigtes C₁-C₁₀-Alkyl, besonders bevorzugt Propyl oder Butyl, oder bilden zusammen unter Einschluss der Kohlenstoffatome, an die sie gebunden sind, einen Cycloalkyl- oder Aryl-Rest, wobei alle vorgenannten Reste wiederum durch ein oder mehrere weitere Substituenten substituiert sein können, ausgewählt aus der Gruppe bestehend aus geradkettigem oder verzweigtem C₁-C₁₀-Alkyl, C₁-C₁₀-Alkoxy, C₆-C₂₄-Aryl und einer funktionelle n Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

In einer bevorzugten Ausführungsform der Katalysatoren der allgemeinen Formel (B) sind die Reste R¹⁰ und R¹¹ gleich und verschieden und bedeuten geradkettiges oder verzweigtes C₁-C₁₀-Alkyl, besonders bevorzugt i-Propyl oder Neopentyl, C₃-C₁₀-Cycloalkyl, bevorzugt Adamantyl, C₆-C₂₄-Aryl, besonders bevorzugt Phenyl, C₁-C₁₀-Alkylsulfonat, besonders bevorzugt Methansulfonat, C₆-C₁₀-Arylsulfonat, besonders bevorzugt p-Toluolsulfonat.

Gegebenenfalls sind die vorgenannten Reste als Bedeutungen von R¹⁰ und R¹¹ substituiert durch einen oder mehrere weitere Reste ausgewählt aus der Gruppe bestehend aus geradkettigem oder verzweigtem C₁-C₅-Alkyl, insbesondere Methyl, C₁-C₅-Alkoxy, Aryl und einer funktionellen Grupppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

Insbesondere können die Reste R¹⁰ und R¹¹ gleich und verschieden sein und bedeuten i-Propyl, Neopentyl, Adamantyl oder Mesityl.

Besonders bevorzugte Imidazolidinreste (Im) haben die nachfolgenden Strukturen (Va-f), wobei Mes jeweils für einen 2,4,6-Trimethylphenyl-Rest steht,

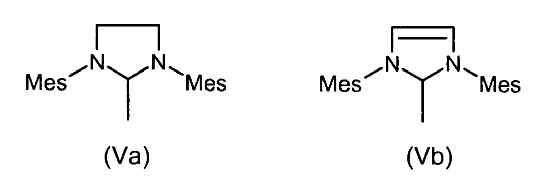

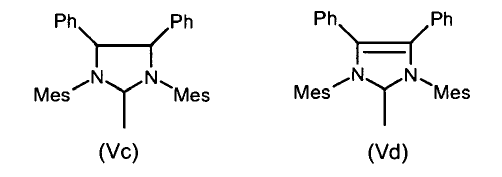

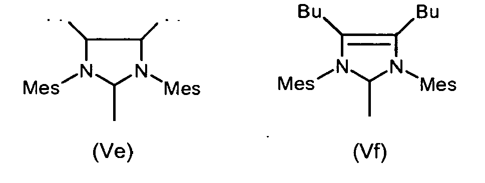

In den Katalysatoren der allgemeinen Formel (B) sind **X¹ und X²** gleich oder verschieden und können beispielsweise Wasserstoff, Halogen, Pseudohalogen, geradkettige oder verzweigte C₁-C₃₀-Alkyl, C₅-C₂₄-Aryl, C₁-C₂₀-Alkoxy, C₅-C₂₄-Aryloxy, C₃-C₂₀-Alkyldiketonat, C₅-C₂₄-Aryldiketonat, C₁-C₂₀-Carboxylat, C₁-C₂₀-Alkylsulfonat, C₅-C₂₄-Arylsulfonat, C₁-C₂₀-Alkylthiol, C₅-C₂₄-Arylthiol, C₁-C₂₀-Alkylsulfonyl oder C₁-C₂₀-Alkylsulfinyl bedeuten.

Die vorgenannten Reste X¹ und X² können ferner durch ein oder mehrere weitere Reste substituiert sein, beispielsweise durch Halogen, bevorzugt Fluor, C₁-C₁₀-Alkyl, C₁-C₁₀-Alkoxy oder C₅-C₂₄-Aryl-Reste, wobei auch die letzteren Reste wiederum durch ein oder mehrere Substituenten substituiert sein können, die aus der Gruppe bestehend aus Halogen, bevorzugt Fluor, C₁-C₅-Alkyl, C₁-C₅-Alkoxy und Phenyl ausgewählt sind.

In einer bevorzugten Ausführungsform sind X und X¹ gleich oder verschieden und bedeuten Halogen, insbesondere Fluor, Chlor, Brom oder Jod, Benzoat, C₁-C₅-Carboxylat, C₁-C₅-Alkyl, Phenoxy, C₁-C₅-Alkoxy, C₁-C₅-Alkylthiol, C₆-C₂₄-Arylthiol, C₆-C₂₄-Aryl oder C₁-C₅-Alkylsulfonat.

In einer besonders bevorzugten Ausführungsform sind X und X¹ identisch und bedeuten Halogen, insbesondere Chlor, CF₃COO, CH₃COO, CFH₂COO, (CH₃)₃CO, (CF₃)₂(CH₃)CO, (CF₃)(CH₃)₂CO, PhO (Phenoxy), MeO (Methoxy), EtO (Ethoxy), Tosylat (p-CH₃-C₆H₄-SO₃), Mesylat (2,4,6-Trimethylphenyl) oder CF3S03 (Trifluormethansulfonat).

In der allgemeinen Formel (B) bedeutet der Rest R¹ einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest, die alle jeweils optional durch ein oder mehrere Alkyl-, Halogen-, Alkoxy-, Aryl- oder Heteroaryl-Reste substituiert sein können.

Üblicherweise bedeutet der Rest R¹ einen C₁-C₃₀-Alkyl, C₃-C₂₀-Cylcoalkyl, C₂-C₂₀-Alkenyl, C₂-C₂₀-Alkinyl, C₅-C₂₄-Aryl, C₁-C₂₀-Alkoxy, C₂-C₂₀-Alkenyloxy, C₂-C₂₀-Alkinyloxy, C₅-C₂₄-Aryloxy, C₂-C₂₀-Alkoxycarbonyl, C₁-C₂₀-Alkylamino-, C₁-C₂₀-Alkylthio, C₅-C₂₄-Arylthio, C₁-C₂₀-Alkylsulfonyl oder C₁-C₂₀-Alkylsulfinyl Rest, die alle jeweils optional durch ein oder mehrere Alkyl-, Halogen-, Alkoxy-, Aryl- oder Heteroaryl-Reste substituiert sein können.

Bevorzugt steht R¹ für einen C₃-C₂₀-Cylcoalkyl-Rest, einen C₆-C₂₄-Aryl-Rest oder einen geradkettigen oder verzweigten C₁-C₃₀-Alkyl-Rest, wobei letztere gegebenenfalls durch ein oder mehrere Doppel- oder Dreifachbindungen oder auch ein oder mehrere Heteroatome, bevorzugt Sauerstoff oder Stickstoff, unterbrochen sein kann. Besonders bevorzugt steht R¹ für einen geradkettigen oder verzweigten C₁-C₁₂-Alkyl-Rest.

Der C₃-C₂₀-Cycloalkyl-Rest umfasst beispielsweise Cyclopropyl, Cyclobutyl, Cylopentyl, Cyclohexyl, Cycloheptyl und Cyclooctyl.

Bei dem C₁-C₁₂-Alkyl-Rest kann es sich beispielsweise um Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, n-Hexyl, n-Heptyl, n-Octyl, n-Decyl oder n-Dodecyl handeln. Insbesondere steht R¹ für Methyl oder Isopropyl.

Der C₆-C₂₄-Aryl-Rest steht für einen aromatischen Rest mit 56bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphtyl, Phenanthrenyl oder Anthracenyl genannt.

In der allgemeinen Formel (B) sind die Reste R², R³, R⁴ und R⁵ gleich oder verschieden und können Wasserstoff, organische oder anorganische Reste darstellen.

In einer geeigneten Ausführungsform sind R², R³, R⁴, R⁵ gleich oder verschieden und bedeuten Wasserstoff, Halogen, Nitro, CF₃, Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio, Alkylsulfonyl- oder Alkylsulfinyl-Reste darstellen, die alle jeweils optional durch ein oder mehrere Alkyl-, Alkoxy-, Halogen-, Aryl- oder Heteroaryl-Reste substituiert sein können.

Üblicherweise sind R², R³, R⁴, R⁵ gleich oder verschieden und bedeuten Wasserstoff, Halogen, bevorzugt Chlor oder Brom, Nitro, CF₃, C₁-C₃₀-Alkyl, C₃-C₂₀-Cylcoalkyl, C₂-C₂₀-Alkenyl, C₂-C₂₀-Alkinyl, C₅-C₂₄-Aryl, C₁-C₂₀-Alkoxy, C₂-C₂₀-Alkenyloxy, C₂-C₂₀-Alkinyloxy, C₅-C₂₄-Aryloxy, C₂-C₂₀-Alkoxycarbonyl, C₁-C₂₀-Alkylamino-, C₁-C₂₀-Alkylthio, C₅-C₂₄-Arylthio, C₁-C₂₀-Alkylsulfonyl oder C₁-C₂₀-Alkylsulfinyl Reste, die alle jeweils optional durch ein oder mehrere C₁-C₃₀-Alkyl-, C₁-C₂₀-Alkoxy-, Halogen-, C₅-C₂₄-Aryl- oder Heteroaryl-Reste substituiert sein können.

In einer besonders bewährten Ausführungsform sind R², R³, R⁴, R⁵ sind gleich oder verschieden und stehen für Nitro, geradkettige oder verzweigte C₁-C₃₀-Alkyl-, C₅-C₂₀-Cylcoalkyl-, geradkettige oder verzweigte C₁-C₂₀-Alkoxy-Reste oder C₅-C₂₄-Aryl-Reste, bevorzugt Phenyl oder Naphthyl. Die C₁-C₃₀-Alkyl-Reste sowie C₁-C₂₀-Alkoxy-Reste können optional durch ein oder mehrere Doppel- oder Dreifachbindungen oder auch ein oder mehrere Heteroatome, bevorzugt Sauerstoff oder Stickstoff, unterbrochen sein.

Ferner können auch zwei oder mehr der Reste R², R³, R⁴ oder R⁵ über aliphatische oder aromatische Strukturen verbrückt sein. R³ und R⁴ können beispielsweise unter Einbeziehung der KohlenstoffAtome, an die sie im Phenylring der Formel (B) gebunden sind, einen ankondensierten Phenylring bilden, so dass insgesamt eine Naphthylstruktur resultiert.

In der allgemeinen Formel (B) bedeutet R⁶ Wasserstoff, einen Alkyl-, Alkenyl-, Alkinyl- oder einen Aryl-Rest. Bevorzugt bedeutet R⁶ Wasserstoff, einen C₁-C₃₀-Alkyl, einen C₂-C₂₀-Alkenyl-, einen C₂-C₂₀-Alkinyl oder einen C₅-C₂₄-Aryl-Rest. Besonders bevorzugt ist R⁶ Wasserstoff.

Für die Durchführung des erfindungsgemäßen Verfahrens werden ferner **Katalysatoren gemäß der allgemeinen Formel (B1)** eingesetzt, 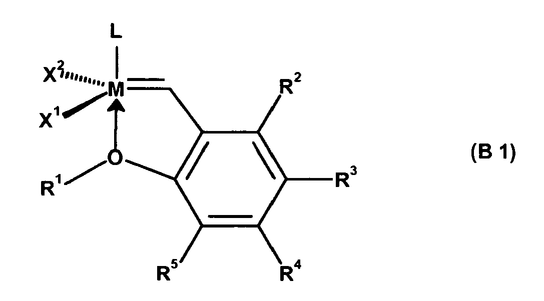 worin
- M, L, X¹, X², R¹, R², R³, R⁴ und R⁵: die für die allgemeine Formel (B) genannten allgemeinen, bevorzugten und besonders bevorzugten Bedeutungen besitzen können.

Diese Katalysatoren sind beispielsweise aus US 2002/0107138 A1 (Hoveyda et al.**)** prinzipiell bekannt und können nach dort angegebenen Herstellverfahren erhalten werden.

Besonders bevorzugt werden im erfindungsgemäßen Verfahren Katalysatoren der allgemeinen Formel (B1) eingesetzt, wobei
- M: Ruthenium darstellt,
- X¹ und X²: gleichzeitig Halogen, insbesondere gleichzeitig Chlor bedeuten,
- R¹: für einen geradkettigen oder verzweigten C₁-C₁₂ Alkylrest steht,
- R², R³, R⁴, R⁵: die für die allgemeine Formel (B) genannten allgemeinen und bevorzugten Bedeutungen besitzen und
- L: die für die allgemeine Formel (B) genannten allgemeinen und bevorzugten Bedeutungen besitzt.

Inbesondere bevorzugt werden im erfindungsgemäßen Verfahren Katalysatoren der allgemeinen Formel (B1) eingesetzt, wobei
- M: Ruthenium darstellt,
- X¹ und X²: gleichzeitig Chlor bedeuten,
- R¹: für einen Isopropyl-Rest steht,
- R², R³, R⁴, R⁵: alle Wasserstoff bedeuten und
- L: einen gegebenenfalls substituierten Imidazolidin-Rest der Formeln (IIa) oder (IIb) darstellt, 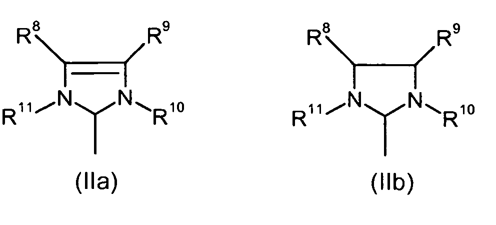
worin
- R⁸, R⁹, R¹⁰, R¹¹: gleich oder verschieden sind und Wasserstoff, geradkettiges oder verzweigtes C₁-C₃₀-Alkyl, C₃-C₂₀-Cylcoalkyl, C₂-C₂₀-Alkenyl, C₂-C₂₀-Alkinyl, C₅-C₂₄-Aryl, C₁-C₂₀-Carboxylat, C₁-C₂₀-Alkoxy, C₂-C₂₀-Alkenyloxy, C₂-C₂₀-Alkinyloxy, C₅-C₂₄-Aryloxy, C₂-C₂₀-Alkoxycarbonyl, C₁-C₂₀-Alkylthio, C₅-C₂₄-Arylthio, C₁-C₂₀-Alkylsulfonyl, C₁-C₂₀-Alkylsulfonat, C₅-C₂₄-Arylsulfonat oder C₁-C₂₀-Alkylsulfinyl bedeuten.

Ganz besonders bevorzugt wird im erfindungsgemäßen Verfahren als Katalysator, der unter die allgemeine Strukturformel (B1) fällt, derjenige der Formel (VI) eingesetzt, wobei Mes jeweils für einen 2,4,6-Trimethylphenyl-Rest steht,

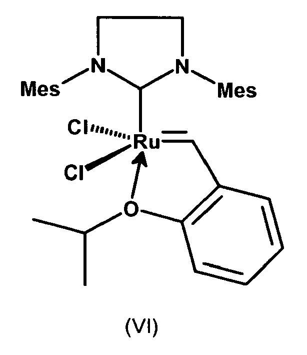

Dieser Katalysator wird in der Literatur auch als "Hoveyda-Katalysator" bezeichnet.

Weiterhin werden im erfindungsgemäßen Verfahren als Katalysatoren, die unter die allgemeine Strukturformel (B1) fallen, diejenigen der folgenden Formeln (VII), (VIII), (IX), (X), (XI), (XII) und (XIII) eingesetzt, wobei Mes jeweils einen 2,4,6-Trimethylphenyl-Rest bedeutet.

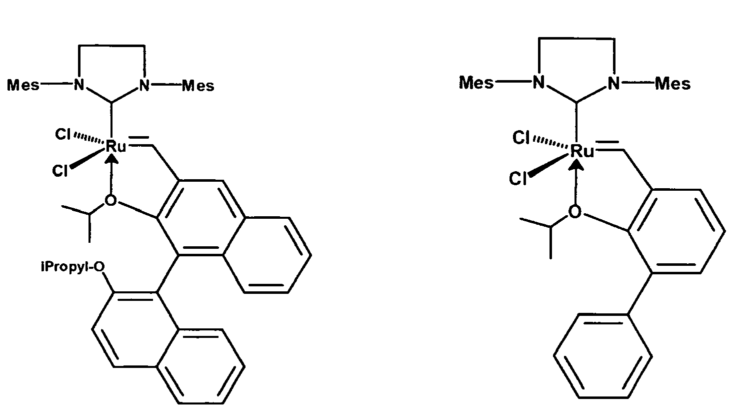

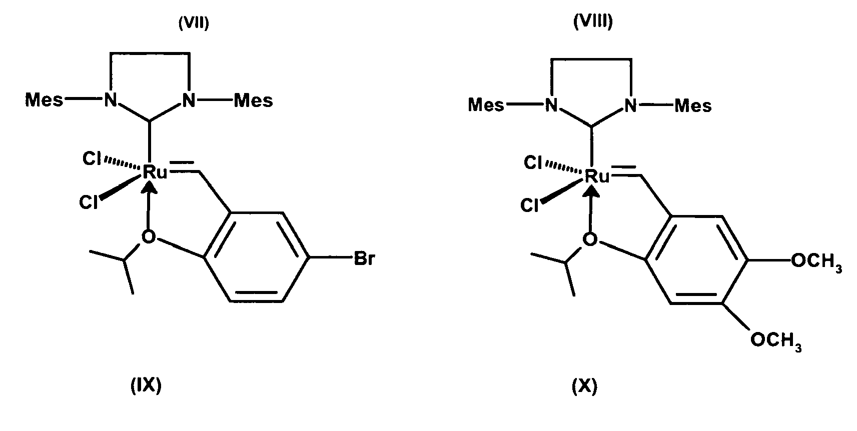

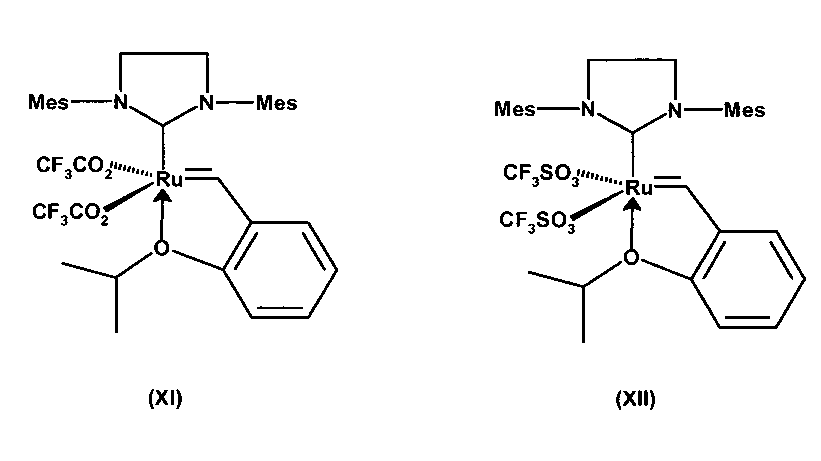

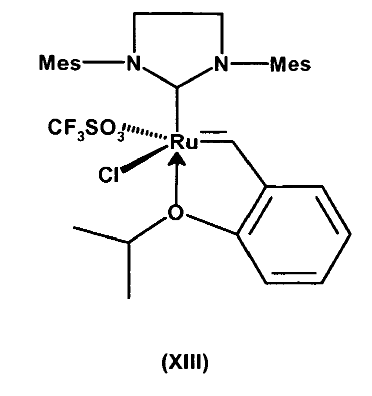

Im erfindungsgemäßen Verfahren werden ferner auch **Katalysatoren gemäß der allgemeinen Formel (B2)** eingesetzt, 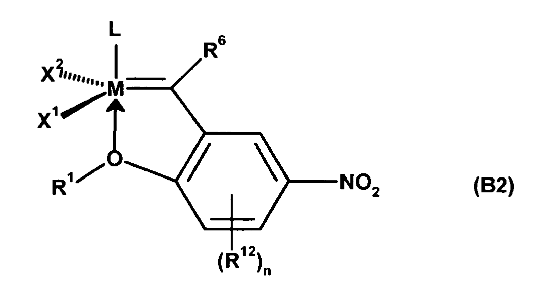 worin
- M, L, X¹, X², R¹ und R⁶: die für die Formel (B) genannten allgemeinen und bevorzugten Bedeutungen haben,
- R¹²: gleich oder verschieden sind und die für die Reste R², R³, R⁴ und R⁵ in der Formel (B) genannten allgemeinen und bevorzugten Bedeutungen, ausgenommen Wasserstoff, besitzen und
- n: gleich 0, 1, 2 oder 3 ist.

Diese Katalysatoren sind beispielsweise aus WO-A-2004/035596 (Grela**)** prinzipiell bekannt und können nach dort angegebenen Herstellverfahren erhalten werden.

Besonders bevorzugt werden im erfindungsgemäßen Verfahren Katalysatoren der allgemeinen Formel (B2) eingesetzt, wobei
- M: Ruthenium darstellt,
- X¹ und X²: gleichzeitig Halogen, insbesondere gleichzeitig Chlor bedeuten,
- R¹: für einen geradkettigen oder verzweigten C₁-C₁₂ Alkylrest steht,
- R¹²: die für die allgemeine Formel (B) genannten Bedeutungen besitzt,
- n: gleich 0, 1, 2 oder 3 ist,
- R⁶: Wasserstoff bedeutet und
- L: die für die allgemeine Formel (B) genannten Bedeutungen besitzt,

Inbesondere bevorzugt werden im erfindungsgemäßen Verfahren Katalysatoren der allgemeinen Formel (B2) eingesetzt, wobei
- M: Ruthenium darstellt,
- X¹ und X²: gleichzeitig Chlor bedeuten,
- R¹: für einen Isopropyl-Rest steht,
- n: gleich 0 ist und
- L: einen gegebenenfalls substituierten Imidazolidin-Rest der Formeln (IIa) oder (IIb) darstellt, 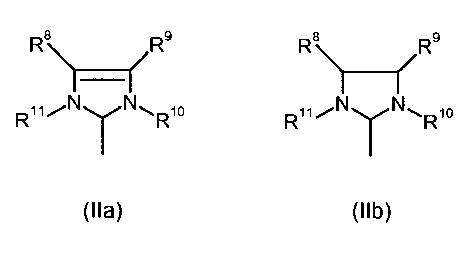
worin
- R⁸, R⁹, R¹⁰, R¹¹: gleich oder verschieden sind und Wasserstoff, geradkettiges oder verzweigtes, cyclisches oder acyclisches C₁-C₃₀-Alkyl, C₂-C₂₀-Alkenyl, C₂-C₂₀-Alkinyl, C₅-C₂₄-Aryl, C₁-C₂₀-Carboxylat, C₁-C₂₀-Alkoxy, C₂-C₂₀-Alkenyloxy, C₂-C₂₀-Alkinyloxy, C₅-C₂₄-Aryloxy, C₂-C₂₀-Alkoxycarbonyl, C₁-C₂₀-Alkylthio, C₅-C₂₄-Arylthio, C₁-C₂₀-Alkylsulfonyl, C₁-C₂₀-Alkylsulfonat, C₅-C₂₄-Arylsulfonat oder C₁-C₂₀-Alkylsulfinyl bedeuten.

Ein besonders bevorzugt eingesetzter Katalysator, der unter die allgemeine Formel (B2) fällt, besitzt die Struktur (XIV) 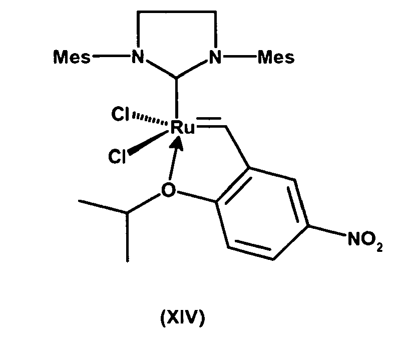 und wird in der Literatur auch als "Grela-Katalysator" bezeichnet.

Ein weiterer für das erfindungsgemäße Verfahren geeigneter Katalysator, der unter die allgemeine Formel (B2) fällt, besitzt folgende Struktur (XV), wobei Mes jeweils für einen 2,4,6-Trimethylphenyl-Rest steht,

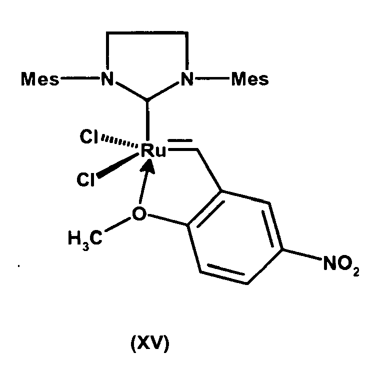

In einer alternativen Ausführungsform werden im erfindungsgemäßen Verfahren auch dendritisch aufgebaute **Katalysatoren der allgemeinen Formel (B3)** eingesetzt, 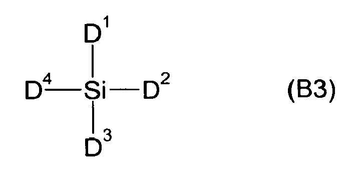 worin D¹, D², D³ und D⁴ jeweils eine Struktur der nachfolgend dargestellten allgemeinen Formel (XVI) aufweisen, die über die Methylengruppe an das Silicium der Formel (B3) angebunden ist und 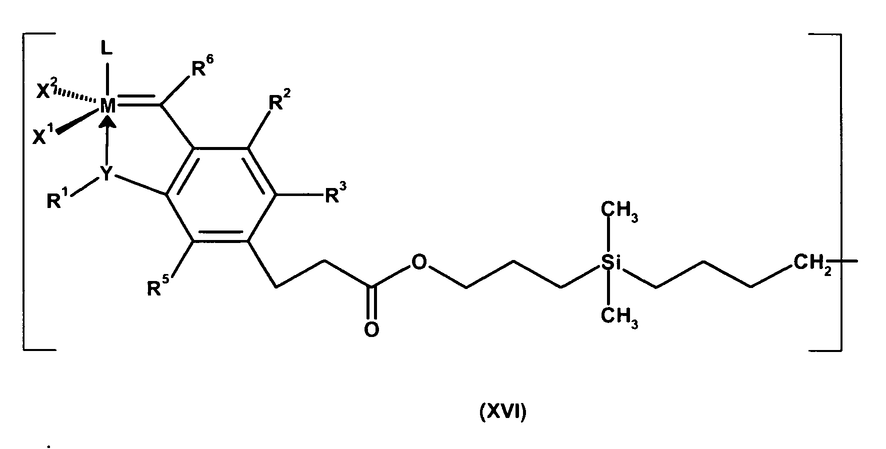 worin
- M, L, X¹, X², R¹, R², R³, R⁵ und R⁶: die für die allgemeine Formel (B) genannten Bedeutungen besitzen und auch die zuvor genannten bevorzugten Bedeutungen besitzen können.

Derartige Katalysatoren gemäß der allgemeinen Formel (B3) sind aus US 2002/0107138 A1 bekannt und gemäß den dort gemachten Angaben herstellbar.

In einer weiteren alternativen Ausführungsform ist ein Katalysator der Formel (B4) einsetzbar, 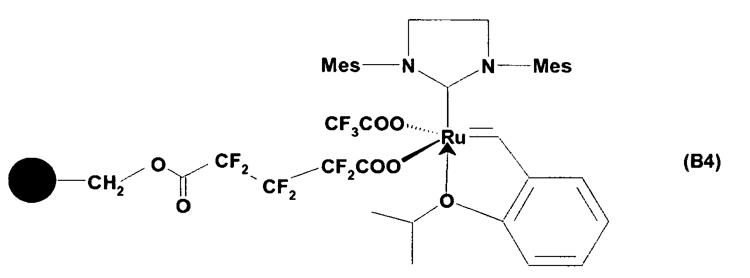 worin das Symbol
●
für einen Träger steht.

Bevorzugt handelt es sich bei dem Träger um ein Poly(styroldivinylbenzol)-Copolymer (PS-DVB).

Dieser Katalysatoren gemäß Formel (B4) sind aus Chem. Eur. J. 2004 10, 777-784 prinzipiell bekannt und nach dort beschriebenen Herstellmethoden erhältlich.

Alle vorgenannten Katalysatoren des Typs (B) können entweder als solche im Reaktionsgemisch der NBR-Metathese eingesetzt werden oder aber auch auf einem festen Träger aufgebracht und immobilisiert werden. Als feste Phasen bzw. Träger sind solche Materialien geeignet, die einerseits inert gegenüber dem Reaktionsgemisch der Metathese sind und zum anderen die Aktivität des Katalysators nicht beeinträchtigen. Einsetzbar sind zur Immobilisierung des Katalysators beispielsweise Metalle, Glas, Polymere, Keramik, organische Polymerkügelchen oder auch anorganische Sol-Gele.

Im erfindungsgemäßen Verfahren werden ferner auch **Katalysatoren der allgemeinen Formel (C)** eingesetzt, 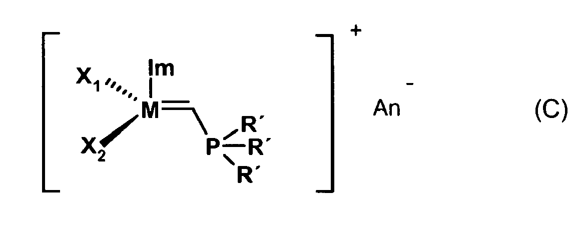 worin
- M: Ruthenium oder Osmium bedeutet,
- X¹ und X²: gleich oder verschieden sein können und anionische Liganden darstellen,
- R': gleich oder verschieden sind und organische Reste darstellen,
- Im: einen gegebenenfalls substituierten Imidazolidinrest darstellt und
- An: ein Anion darstellt.

Diese Katalysatoren sind prinzipiell bekannt (siehe z.B. Angew. Chem. Int. Ed. 2004, 43, 6161-6165).

X¹ und X² können in der allgemeinen Formel (C) die gleichen allgemeinen, bevorzugten und besonders bevorzugten Bedeutungen besitzen wie in Formel (B).

Der Imidazolidinrest (Im) weist üblicherweise eine Struktur der allgemeinen Formeln (IIa) oder (IIb) auf, die bereits für den Katalysator-Typ der Formeln (A) und (B) genannt wurden und kann auch alle dort als bevorzugt genannten Strukturen, insbesondere die der Formeln (Va)-(Vf) aufweisen.

Die Reste R' sind in der allgemeinen Formel (C) gleich oder verschieden und bedeuten einen geradkettigen oder verzweigten C₁-C₃₀-Alkyl-, C₅-C₃₀-Cylcoalkyl- oder Aryl-Rest, wobei die C₁-C₃₀-Alkylreste gegebenenfalls durch ein oder mehrere Doppel- oder Dreifachbindungen oder auch ein oder mehrere Heteroatome, bevorzugt Sauerstoff oder Stickstoff, unterbrochen sein können.

**Aryl** umfasst einen aromatischen Rest mit 5 bis 24 Gerüstkohlenstoffatomen. Als bevorzugte mono-, bi- o der tricyclische carbocyclische aromatische Reste mit 6 bis 10 Gerüstkohlenstoffatomen seien beispielsweise Phenyl, Biphenyl, Naphtyl, Phenanthrenyl oder Anthracenyl genannt.

Bevorzugt sind die Reste R' in der allgemeinen Formel (C) gleich und bedeuten Phenyl, Cyclohexyl, Cyclopentyl, Isopropyl, o-Tolyl o-Xylyl oder Mesityl.

Im erfindungsgemäßen Verfahren werden ferner **Katalysatoren der allgemeinen Formel (D)** eingesetzt, 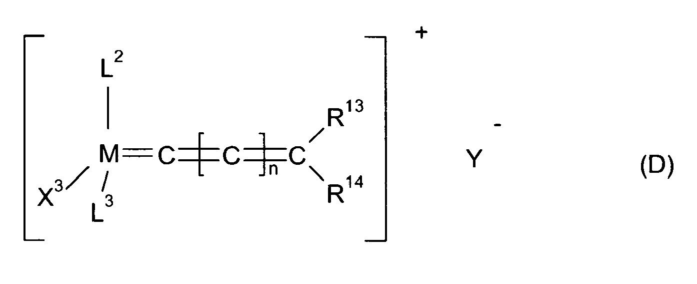 worin
- M: Ruthenium oder Osmium bedeutet,
- R¹³ und R¹⁴: unabhängig voneinander Wasserstoff, C₁-C₂₀-Alkyl, C₂-C₂₀-Alkenyl, C₂-C₂₀ Alkinyl, C₅-C₂₄-Aryl, C₁-C₂₀-Carboxylat, C₁-C₂₀-Alkoxy, C₂-C₂₀-Alkenyloxy, C₂-C₂₀-Alkinyloxy, C₅-C₂₄-Aryloxy, C₂-C₂₀-Alkoxycarbonyl, C₁-C₂₀-Alkylthio, C₁-C₂₀-Alkylsulfonyl oder C₁-C₂₀ Alkylsulfinyl bedeuten,
- X³: ein anionischer Ligand ist,
- L²: ein neutraler π-gebundener Ligand ist, unabhängig davon, ob mono- oder polycyclisch,
- L³: ein Ligand aus der Gruppe der Phosphine, sulfonierten Phosphine, fluorierten Phosphine, funktionalisierten Phosphine mit bis zu drei Aminoalkyl-, Ammoniumalkyl-, Alkoxyalkyl-, Alkoxycarbonylalkyl-, Hydrocarbonylalkyl-, Hydroxyalkyl- oder Ketoalkyl-Gruppen, Phosphite, Phosphinite, Phosphonite, Phosphinamine, Arsine, Stibine, Ether, Amine, Amide, Imine, Sulfoxide, Thioether und Pyridine,
- Y⁻: ein nicht-koordinierendes Anion und
- n: 0, 1, 2, 3, 4 oder 5 ist.

Im erfindungsgemäßen Verfahren werden ferner **Katalysatoren der allgemeinen Formel (E)** eingesetzt, 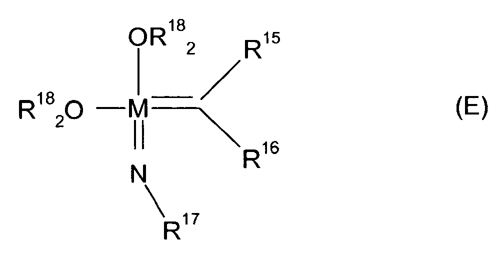 worin
- M²: Molybdän oder Wolfram bedeutet,
- R¹⁵ und R¹⁶: gleich oder verschieden sind und Wasserstoff, C₁-C₂₀-Alkyl, C₂-C₂₀-Alkenyl, C₂-C₂₀-Alkinyl, C₅-C₂₄-Aryl, C₁-C₂₀-Carboxylat, C₁-C₂₀-Alkoxy, C₂-C₂₀-Alkenyloxy, C₂-C₂₀-Alkinyloxy, C₅-C₂₄-Aryloxy, C₂-C₂₀-Alkoxycarbonyl, C₁-C₂₀-Alkylthio, C₁-C₂₀-Alkylsulfonyl oder C₁-C₂₀ Alkylsulfinyl bedeuten,
- R¹⁷ and R¹⁸: gleich oder verschieden sind und einen substituierten oder einen halogen-substituierten C₁-C₂₀-Alkyl, C₅-C₂₄-Aryl, C₆-C₃₀-Aralkyl-Rest oder Silikon-enthaltende Analoga davon darstellen.

Im erfindungsgemäßen Verfahren werden ferner **Katalysatoren der allgemeinen Formel (F)** eingesetzt, 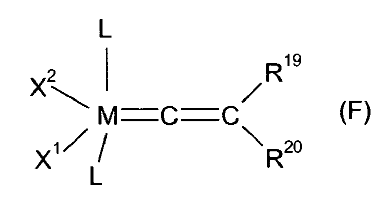 worin
- M: Ruthenium oder Osmium bedeutet,
- X¹ und X²: gleich oder verschieden sind und anionische Liganden darstellen, die alle Bedeutungen von X¹ und X² in der allgemeinen Formeln (A) und (B) annehmen können,
- L: gleiche oder verschiedene Liganden darstellt, die alle allgemeinen und bevorzugten Bedeutungen von L in den allgemeinen Formeln (A) und (B) annehmen können,
- R¹⁹ and R²⁰: gleich oder verschieden sind und Wasserstoff oder substituiertes oder unsubstituiertes Alkyl bedeuten.

Die Menge des Metathese-Katalysators bezogen auf den eingesetzten Nitrilkautschuk hängt von der Natur sowie katalytischen Aktivität des speziellen Katalysators ab. Die Menge an eingesetztem Katalysator beträgt üblicherweise 1 bis 1.000 ppm Edelmetall, bevorzugt 2 bis 500 ppm, insbesondere 5 bis 250 ppm, bezogen auf den eingesetzten Nitrilkautschuk.

Die Phosphane der allgemeinen Formel (IA) bzw. die Diphosphane der allgemeinen Formel (IB) werden entweder in fester oder aber in gelöster Form entweder separat oder zusammen mit der Lösung des Katalysators zur Lösung des Nitrilkautschuks gegeben.

Die NBR-Metathese kann in Abwesenheit oder aber in Gegenwart eines Co-Olefins durchgeführt werden. Bei diesem handelt es sich bevorzugt um ein geradkettiges oder verzweigtes C₂-C₁₆-Olefin. Geeignet sind beispielsweise Ethylen, Propylen, Isobuten, Styrol, 1-Hexen oder 1-Octen. Bevorzugt wird 1 -Hexen oder 1-Octen verwendet. Sofern das Co-Olefin flüssig ist (wie beispielsweise 1-Hexen), liegt die Menge des Co-Olefins bevorzugt in einem Bereich von 0,2 - 20 Gew.% bezogen auf den eingesetzten NBR. Sofern das Co-Olefin ein Gas ist, wie beispielsweise Ethylen, wird die Menge des Co-Olefins so gewählt, dass sich im Reaktionsgefäß bei Raumtemperatur ein Druck im Bereich von 1 x 10⁵ Pa - 1 x 10⁷ Pa einstellt, bevorzugt ein Druck im Bereich von 5,2 x 10⁵ Pa bis 4 x 10⁶ Pa.

Die Metathese-Reaktion kann in einem geeigneten Lösungsmittel durchgeführt werden, welches den eingesetzten Katalyator nicht deaktiviert und die Reaktion auch nicht in irgendeiner anderen Weise negativ beeinflusst. Bevorzugte Lösungsmittel umfassen, sind aber nicht begrenzt auf, Dichlormethan, Benzol, Toluol, Methylethylketon, Aceton, Tetrahydrofuran, Tetrahydropyran, Dioxan und Cyclohexan. Das besonders bevorzugte Lösungsmittel ist Chlorbenzol. In manchen Fällen, wenn das Co-Olefin selbst als Lösungsmittel fungieren kann, so z.B. bei 1-Hexen, kann auch auf den Zusatz eines weiteren zusätzlichen Lösungsmittels verzichtet werden.

Die Konzentration des eingesetzten Nitrilkautschuks in der Reaktionsmischung der Metathese ist nicht kritisch, aber es ist natürlich zu beachten, dass die Reaktion nicht durch eine viel zu hohe Viskosität der Reaktionsmischung und die damit verbundenen Mischungsprobleme negativ beeinflusst werden sollte. Bevorzugt liegt die Konzentration des NBR in der Reaktionsmischung im Bereich von 1 bis 20 Gew.%, besonders bevorzugt im Bereich von 5 bis 15 Gew.%, bezogen auf die gesamte Reaktionsmischung.

Der Metathese Abbau wird üblicherweise bei einer Temperatur im Bereich von 10 °C bis 150 °C durchgeführt, bevorzugt bei einer Temperatur im Bereich von 20 bis 100 °C.

Die Reaktionszeit hängt von einer Reihe von Faktoren ab, beispielsweise vom Typ des NBR, der Art des Katalysators, der verwendeten Katalysator-Konzentration und der Reaktionstemperatur. Typischerweise ist die Reaktion innerhalb von drei Stunden unter normalen Bedingungen beendet. Der Fortschritt der Metathese kann durch Standard-Analytik überwacht werden, z.B. durch GPCmessungen oder durch Bestimmung der Viskosität.

### Nitrilkautschuke:

Als Nitrilkautschuke ("NBR") können in die Metathese-Reaktion Co- oder Terpolymere eingesetzt werden, welche Wiederholungseinheiten mindestens eines konjugierten Diens, mindestens eines α,β-ungesättigten Nitrils und gegebenenfalls einer oder mehrerer weiterer copolymerisierbarer Monomere enthalten.

Das konjugierte Dien kann von jeder Natur sein. Bevorzugt werden (C₄-C₆) konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als α,β-ungesättigtes Nitril kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Einen besonders bevorzugten Nitrilkautschuk stellt somit ein Copolymer aus Acrylnitril und 1,3-Butadien dar.

Neben dem konjugierten Dien und dem α,β-ungesättigten Nitril können noch ein oder mehrere weitere dem Fachmann bekannte, copolymerisierbare Monomere eingesetzt werden, z.B. α,β-ungesättigte Mono- oder Dicarbonsäuren, deren Ester oder Amide. Als α,β-ungesättigte Mono- oder Dicarbonsäuren sind dabei Fumarsäure, Maleinsäure, Acrylsäure und Methacrylsäure bevorzugt. Als Ester der α,β-ungesättigten Carbonsäuren werden vorzugsweise deren Alkylester und Alkoxyalkylester eingesetzt. Besonders bevorzugte Alkylester der α,β-ungesättigten Carbonsäuren sind Methylacrylat, Ethylacrylat, Butylacrylat, Butylmethacrylat, 2-Ethylhexylacrylat, 2-Ethylhexylmethacrylat und Octylacrylat. Besonders bevorzugte Alkoxyalkylester der α,β-ungesättigten Carbonsäuren sind Methoxyethyl(meth)acrylat, Ethoxyethyl(meth)acrylat und Methoxyethyl-(meth)acrylat. Einsetzbar sind auch Mischungen von Alkylestern, wie z.B. den vorgenannten, mit Alkoxyalkylestern, z.B. in Form der vorgenannten.

Die Anteile an konjugiertem Dien und α,β-ungesättigtem Nitril in den einzusetzenden NBR-Polymeren können in weiten Bereichen schwanken. Der Anteil des oder der Summe der konjugierten Diene liegt üblicherweise im Bereich von 40 bis 90 Gew.-%, bevorzugt im Bereich von 60 bis 85 Gew. %, bezogen auf das Gesamtpolymer. Der Anteil des oder der Summe der α,β-ungesättigten Nitrile liegt üblicherweise bei 10 bis 60 Gew.-%, bevorzugt bei 15 bis 40 Gew.-%, bezogen auf das Gesamtpolymer. Die Anteile der Monomere summieren sich jeweils zu 100 Gew.-% auf. Die zusätzlichen Monomere können in Mengen von 0 bis 40 Gew.%, bevorzugt 0,1 bis 40 Gew.-%, besonders bevorzugt 1 bis 30 Gew.-%, bezogen auf das Gesamtpolymer, vorliegen. In diesem Fall werden entsprechende Anteile des oder der konjugierten Diene und/oder des oder der α,β-ungesättigten Nitrile durch die Anteile der zusätzlichen Monomere ersetzt, wobei sich die Anteile aller Monomere jeweils zu 100 Gew.-% aufsummieren.

Die Herstellung der Nitrilkautschuke durch Polymerisation der vorgenannten Monomere ist dem Fachmann hinlänglich bekannt und in der Polymerliteratur umfangreich beschrieben.

Nitrilkautschuke, die im erfindungsgemäßen Sinn verwendet werden können, sind ferner käuflich erhältlich, z.B. als Produkte aus der Produktreihe der Marken Perbunan^{®} und Krynac^{®} von der Lanxess Deutschland GmbH.

Die zur Metathese eingesetzten Nitrilkautschuke besitzen eine Mooney-Viskosität (ML 1+4 bei 100°C) im Bereich von 30 bis 70, bevorzugt von 30 bis 50. Dies entspricht einem Gewichtsmittel des Molekulargewicht M_{w} im Bereich von 200.000 bis 500.000, bevorzugt im Bereich von 200.000 bis 400.000. Die eingesetzten Nitrilkautschuke besitzen ferner eine Polydispersität PDI = M_{w}/Mₙ, wobei M_{w} das Gewichtsmittel und Mₙ das Zahlenmittel des Molekulargewichts darstellt, im Bereich von 2,0 bis 6,0 und bevorzugt im Bereich von 2,0 bis 4,0.

Die Bestimmung der Mooney-Viskosität erfolgt dabei gemäß ASTM Norm D 1646.

### Durch Metathese abgebaute Nitrilkautschuke:

Die durch das erfindungsgemäße Metathese-Verfahren erhaltenen Nitrilkautschuke besitzen eine Mooney-Viskosität (ML 1+4 bei 100°C) im Bereich von 5 bis 30, bevorzugt von 5 bis 20. Dies entspricht einem Gewichtsmittel des Molekulargewicht M_{w} im Bereich von 10.000 bis 200.000, bevorzugt im Bereich von 10.000 bis 150.000. Die erhaltenen Nitrilkautschuke besitzen ferner eine Polydispersität PDI = M_{w}/Mₙ, wobei Mₙ das Zahlenmittel des Molekulargewichts darstellt, im Bereich von 1,5 bis 4,0 bevorzugt im Bereich von 1,7 bis 3.

### Hydrierung:

An den Metathese Abbau in Gegenwart des Katalysators sowie Phosphans bzw. Diphosphans kann sich eine Hydrierung der erhaltenen abgebauten Nitrilkautschuke anschließen. Diese Hydrierung kann in der dem Fachmann bekannten Art und Weise erfolgen.

Es ist möglich, die Hydrierung unter Einsatz homogener oder heterogener Hydrierkatalysatoren durchzuführen. Es ist ferner möglich, die Hydrierung in-situ durchzuführen, d.h. in dem gleichen Reaktionsgefäß, in dem zuvor auch der Metathese-Abbau erfolgte und ohne Notwendigkeit den abgebauten Nitrilkautschuk zu isolieren. Der Hydrierkatalysator wird dazu einfach dem Reaktionsgefäß zugesetzt.

Die eingesetzten Katalysatoren basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe z.B.US-A-3,700,637**,** DE-A-25 39 132**,** EP-A- 0 134 023**,** DE-OS- 35 41 689**,** DE-OS- 35 40 918**,** EP-A-0 298 386**,** DE-OS- 35 29 252**,** DE-OS- 34 33 392**,** US-A-4,464,515 **und** US-A-4,503,196).

Geeignete Katalysatoren und Lösungsmittel für eine Hydrierung in homogener Phase werden im folgenden beschrieben und sind auch aus DE-A-25 39 132 und der EP-A-0 471 250 bekannt

Die selektive Hydrierung kann beispielsweise in Gegenwart eines Rhodium- oder Ruthenium-haltigen Katalysators erreicht werden. Einsetzbar ist beispielsweise ein Katalysator der allgemeinen Formel

(R¹ₘB)₁ M Xₙ,

worin M Ruthenium oder Rhodium ist, R¹ gleich oder verschieden sind und eine C₁-C₈ Alkylgruppe, eine C₄-C₈ Cycloalkylgruppe, eine C₆-C₁₅ Aryl-Gruppe oder eine C₇-C₁₅ Aralkylgruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis(triphenylphosphin)-rhodium-hydrid der Formel (C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicherweise ist es sinnvoll, den Katalysator zusammen mit einem Co-Katalysator zu verwenden, der ein Ligand der Formel R¹ₘB ist, wobei R¹, m und B die zuvor für den Katalysator genannten Bedeutungen besitzen. Bevorzugt ist m gleich 3, B gleich Phosphor und die Reste R¹ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkyl-monocycloalkyl, Dicycloalkyl-monoaryl oder Dicyclalkyl-monoaryl-Resten.

Beispiele von Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.% eingesetzt, bezogen auf das Gewicht des zu hydrierenden Nitrilkautschuks. Bevorzugt liegt ferner das Gewichtsverhältnis des Rhodiumhaltigen Katalysators zum Co-Katalysator im Bereich von 1:3 bis 1:55, bevorzugt im Bereich von 1:5 bis 1:45. Bezogen auf 100 Gewichtsteile des zu hydrierenden Nitrilkautschuks werden geeigneterweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist dem Fachmann aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150 °C und einem Druck im Bereich von 50 bis 150 bar für 2 bis 10 h mit Wasserstoff beaufschlagt.

Unter Hydrierung wird im Rahmen dieser Erfindung eine Umsetzung der im Ausgangs-Nitrilkautschuk vorhandenen Doppelbindungen zu mindestens 50 %, bevorzugt 70-100%, besonders bevorzugt 80-100%, verstanden.

Bei Einsatz heterogener Katalysatoren handelt es sich üblicherweise um geträgerte Katalysatoren auf der Basis von Palladium, die z. B. auf Kohle, Kieselsäure, Calciumcarbonat oder Bariumsulfat geträgert sind.

Nach Abschluss der Hydrierung erhält man einen hydrierten Nitrilkautschuk mit einer Mooney-Viskosität (ML 1+4 bei 100°C), gemessen gemäß ASTM Norm D 1646, im Bereich von 10 bis 50, bevorzugt von 10 bis 30. Dies entspricht einem Gewichtsmittel des Molekulargewicht M_{w} im Bereich von 2.000 bis 400.000 g/mol, bevorzugt im Bereich von 20.000 bis 200.000. Die erhaltenen hydrierten Nitrilkautschuke besitzen ferner eine Polydispersität PDI= M_{w}/Mₙ, wobei M_{w} das Gewichtsmittel und Mₙ das Zahlenmittel des Molekulargewichts darstellt, im Bereich von 1 bis 5 und bevorzugt im Bereich von 1,5 bis 3.

Durch den erfindungsgemäßen Einsatz der Phosphane der allgemeinen Formel (IA) bzw. Diphosphane der allgemeinen Formel (IB) kann die Aktivität der Metathese-Katalysatoren deutlich gesteigert werden. Durch die Phosphan/Diphosphan-Zusätze können eine deutlich höhere Reaktionsgeschwindigkeit und bei vergleichbaren Reaktionszeiten niedrigere Molmassen (Mw und Mn) erhalten werden. Zudem zeichnen sich die abgebauten Nitrilkautschuke dadurch aus, dass sie gelfrei sind.

### BEISPIELE

In den nachfolgenden Beispielen wurden folgende Katalysatoren eingesetzt:

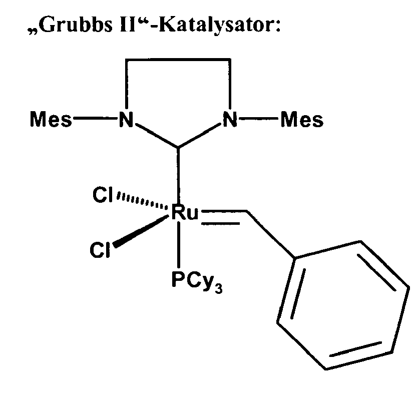

Der Grubbs-II-Katalysator wurde von der Firma Materia (Pasadena/Kalifornien) bezogen.

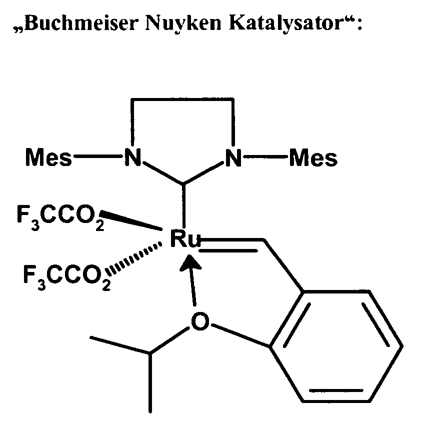

Der Buchmeiser-Nuyken-Katalsator (Molgewicht: 781,75 g/mol) wurde nach der in Adv. Synth. Catal. 2003, 345, 996 publizierten Synthese hergestellt.

Als **Phosphan-Zusätze** wurden Tricyclohexylphosphan (Molgewicht = 280,23 g/mol, abgekürzt als PCy₃) und Triphenylphosphan (Molgewicht: 262,09; abgekürzt: PPh₃) verwendet: Tricyclohexylphosphan und Triphenylphosphan wurden von Aldrich bezogen.

Für die Metathesereaktionen wurde als Substrat der Nitrilkautschuk Perbunan^{®} NT 3435 der Lanxess Deutschland GmbH eingesetzt.

Dieser Nitrilkautschuk wies folgende charakteristischen Kenngrößen auf:

| | |
|---|---|
| Acrylnitrilgehalt: | 35 Gew.% |
| Mooneywert (ML 1+4 bei 100°C): | 34 Mooneyeinheiten |
| Restfeuchte: | 1,8 Gew.% |
| Mw: | 240.000 g/mol |
| Mn: | 100.000 g/mol |
| PDI (Mw / Mn): | 2,4 |

Nachfolgend wird dieser Nitrilkautschuk mit NBR abgekürzt.

Es wurden folgende Versuche durchgeführt:

| **Versuchs-Nr.** | **Katalysator** | **NBR-Typ** | **Phosphan** | **Molverhältnis (Katalysator : Phosphan)** |
|---|---|---|---|---|
| 1.0. (Vergleich) | Grubbs-II | NT 3435 | - | - |
| 1.1. | Grubbs-II | NT 3435 | Tricyclohexylphosphan | 1: 0,12 |
| 1.2. (Vergleich) | Grubbs-II | NT 3435 | Tricyclohexylphosphan | 1:1,2 |
| 1.3. (Vergleich) | Grubbs-II | NT 3435 | Tricyclohexylphosphan | 1:10 |
| 2.1. | Grubbs-II | NT 3435 | Triphenylphosphan | 1: 0,12 |
| 2.2. (Vergleich) | Grubbs-II | NT 3435 | Triphenylphosphan | 1:10 |
| 2.3. (Vergleich) | Grubbs-II | NT 3435 | Triphenylphosphan | 1:1000 |
| 3.0. (Vergleich) | Buchmeiser-Nuyken | NT 3435 | - | - |
| 3.1. | Buchmeiser-Nuyken | NT 3435 | Tricyclohexylphosphan | 1:0,12 |

Für den Metatheseabbau wurde Chlorbenzol (nachfolgend "MCB" genannt / Firma Aldrich) als Lösungsmittel verwendet, das vor Einsatz destilliert und bei Raumtemperatur durch Durchleiten von Argon inertisiert wurde.

Bei den Versuchen wurden auf 40 g NBR jeweils in Summe 293,3 g MCB eingesetzt (12%ige Lösungen bezogen auf NBR).

Für die erfindungsgemäßen Beispiele mit den Phosphanzusätzen wurden 40 g NBR in 268,30 g MCB während eines Zeitraums von 10 h bei Raumtemperatur gelöst. Bei den Vergleichsversuchen ohne Phosphanzusätze wurden auf 40 g NBR 273,3 g MCB eingesetzt. Bei den erfindungsgemäßen Beispielen wurden zuerst die in den Tabellen angegebenen Phosphanmengen (jeweils gelöst in 5 g MCB) und dann jeweils 0,8 g (2 phr) 1-Hexen zugegeben. Vor der Katalysatorzugabe wurde der Reaktionsansatz 30 min bei Raumtemperatur gerührt. Die Metathesekatalysatoren wurden als Lösung in MCB sofort nach der Herstellung der Katalysatorlösungen zugegeben, wobei die in den Tabellen angegebenen Katalysatormengen jeweils in 20 g MCB bei Raumtemperatur unter Argon gelöst wurden. Sämtliche Reaktionen wurden bei Raumtemperatur durchgeführt.

Nach den in den nachfolgenden Tabellen angegebenen Reaktionszeiten wurden von den Reaktionslösungen jeweils ca. 3 ml entnommen und zur Abstoppung unmittelbar mit ca. 1 ml Ethylvinylether versetzt und anschließend mit 5 ml DMAc (*N,N*-Dimethylacetamid) der Firma Aldrich verdünnt. Von diesen Lösungen wurden jeweils 2 ml in ein GPC-Gläschen gegeben und mit DMAc auf 3 ml verdünnt. Vor Durchführung der GPC-Analyse wurden die Lösungen jeweils mittels eines 0,2µm-Spritzenfilters aus Teflon (Chromafil PTFE 0,2 µm; Firma Machery-Nagel) filtriert. Im Anschluss daran erfolgte die GPC-Analyse mit einem Gerät der Firma Fa. Waters (Mod. 510). Für die Analytik wurde eine Kombination von 4 Säulen der Polymer Laboratories verwendet: 1) PLgel 5µm Mixed-C, 300 x 7,5mm, 2) PLgel 5µm Mixed-C, 300 x 7,5mm, 3) PLgel 3µm Mixed-E, 300 x 7,5mm, und 4) PLgel 3µm Mixed-E, 300 x 7,5mm.

Die Kalibrierung der GPC-Säulen erfolgte mit linearem Poly(methylmethacrylat) der Firma Polymer Standards Services. Als Detektor wurde ein RI-Detektor der Firma Waters (Waters 410) verwendet. Die Analytik wurde mit einer Flussrate von 0,5 mL/min durchgeführt, wobei als Eluent DMAc verwendet wurde. Die Auswertung der GPC-Kurven erfolgte mit Software der Firma Millenium.

Mittels GPC-Analyse wurden folgende charakteristischen Kenngrößen sowohl für den NBR-Originalkautschuk (vor dem Abbau) als auch für die abgebauten Nitrilkautschuke bestimmt:
M_{w} [kg/mol]: Gewichtsmittel der Molmasse
Mₙ [kg/mol]: Zahlenmittel der Molmasse
PDI: Breite der Molmassenverteilung (M_{w}/Mₙ)

### Versuchsserie 1.0

### Metathese-Abbau mit Grubbs-II-Katalysator ohne Phosphanzusatz (Vergleichsversuch)

| Versuchs-Serie | Zusatz | | | | Zeit [min.] | Mw [kg/mol] | Mn [kg/mol] | PDI |
|---|---|---|---|---|---|---|---|---|
| 1.0. | Art | Menge [g] | Lösungsmittel | | 0 | 240 | 100 | 2,4 |
| | | | Art | Menge [g] | 30 | 185 | 84 | 2,13 |
| | | | | | 60 | 165 | 79 | 2,11 |
| | | | | | 185 | 77 | 38 | 2,03 |
| | | | | | 425 | 60 | 35 | 1,71 |
| | - | - | - | - | 1300 | 53 | 29 | 1,82 |

### Versuchsserie 1.1

### Metathese-Abbau mit einem Molverhältnis (Grubbs-II-Katalysator : PCy₃) = 1 : 0,12 (erfindungsgemäß)

| Versuchs-Serie | Zusatz | | | | Zeit [min.] | Mw [kg/mol] | Mn [kg/mol] | PDI |
|---|---|---|---|---|---|---|---|---|
| 1.1. | Art | Menge [g] | Lsg.-mittel | | 0 | 240 | 100 | 2,4 |
| | | | Art | Menge [g] | 30 | 97 | 49 | 1,96 |
| | | | | | 60 | 71 | 39 | 1,84 |
| | | | | | 185 | 47 | 28 | 1,66 |
| | | | | | 425 | 41 | 26 | 1,61 |
| | PCy₃ | 0,0008 | MCB | 4 | 1300 | - | - | - |

Bei dem erfindungsgemäßen Beispiel 1.1. unter Zusatz von Tricyclohexylphosphan wurden gegenüber dem phosphanfreien Vergleichsersuch 1.0. eine höhere Reaktionsgeschwindigkeit und bei vergleichbaren Reaktionszeiten niedrigere Molmassen (Mw und Mn) als beim Vergleichsversuch erhalten. Außerdem waren die abgebauten NBR-Proben gelfrei.

### Versuchsserie 1.2

### Metathese-Abbau mit einem Molverhältnis (Grubbs-II-Katalysator : PCy₃) = 1 : 1,2 (Vergleichsversuch)

| Versuchs-Serie | Zusatz | | | | Zeit [min.] | Mw [kg/mol] | Mn [kg/mol] | PDI |
|---|---|---|---|---|---|---|---|---|
| 1.2. | Art | Menge [g] | Lsg.-mittel | | 0 | 240 | 100 | 2,4 |
| | | | Art | Menge [g] | 30 | 180 | 87 | 2,0 |
| | | | | | 60 | 149 | 79 | 1,9 |
| | | | | | 185 | 99 | 63 | 1,6 |
| | | | | | 425 | 57 | 34 | 1,7 |
| | PCy₃ | 0,008 | MCB | 4 | 1300 | 51 | 30 | 1,7 |

Bei der Versuchsserie 1.2. mit Zusatz von 1,2 Äquivalenten Tricyclohexylphosphan pro Äquivalent Katalysator wurden gegenüber dem phosphanfreien Vergleichsversuch (1.0.) eine nahezu identische Reaktionsgeschwindigkeit und vergleichbare Molmassen (Mw und Mn) nach langen Reaktionszeiten gefunden.

### Versuchsserie 1.3:

### Metathese-Abbau mit einem Molverhältnis (Grubbs-II-Katalysator : PCy₃) = 1 : 10 (Vergleichsversuch)

| Versuchs-Serie | Zusatz | | | | Zeit [min.] | Mw [kg/mol] | Mn [kg/mol] | PDI |
|---|---|---|---|---|---|---|---|---|
| 1.3. | Art | Menge [g] | Lsg.-mittel | | 0 | 240 | 100 | 2,4 |
| | | | Art | Menge [g] | 30 | 236 | 100 | 2,4 |
| | | | | | 60 | 206 | 85 | 2,4 |
| | | | | | 185 | 159 | 77 | 2,1 |
| | | | | | 425 | 130 | 68 | 1,9 |
| | PCY₃ | 0,061 | MCB | 4 | 1300 | - | - | - |

Bei dem Vergleichsversuch 1.3. mit einem Zusatz 10 Äquivalenten Tricyclohexylphosphan pro Äquivalent Katalysator zeigte sich, dass der Metatheseabbau langsamer und die Molmassen (Mw und Mn) nach langen Reaktionszeiten sogar noch höher als bei dem Referenzversuch ohne Phosphanzusatz (1.0.) sind.

### Versuchsserie 2.1:

### Metathese-Abbau mit einem Molverhältnis (Grubbs-II-Katalysator : PPh₃) = 1 : 0,12 (erfindungsgemäß)

| Versuchs-Serie | Zusatz | | | | Zeit [min.] | Mw [kg/mol] | Mn [kg/mol] | PDI |
|---|---|---|---|---|---|---|---|---|
| 2.1. | Art | Menge [g] | Lsg.-mittel | | 0 | 240 | 100 | 2,4 |
| | | | Art | Menge [g] | 30 | 111 | 51 | 2,17 |
| | | | | | 60 | 76 | 40 | 1,88 |
| | | | | | 185 | 57 | 34 | 1,87 |
| | | | | | 425 | 55 | 30 | 1,69 |
| | PPh₃ | 0,00075 | MCB | 4 | 1300 | - | - | - |

Mit Versuch 2.1. wurde demonstriert, dass der Metatheseabbau durch Zusatz von Tripenylphosphan im Molverhältnis Grubbs-II-Katalysator : PPh₃ = 1:0,12 gegenüber dem Vergleichsversuch ohne Phosphanzusatz (Versuchsserie 1.0.) beschleunigt und die Molmassen (Mw und Mn) nach langen Reaktionszeiten niedriger sind. Außerdem waren die abgebauten NBR-Proben gelfrei.

### Versuchsserie 2.2:

### Metathese-Abbau mit einem Molverhältnis (Grubbs-II-Katalysator : PPh₃)= 1 : 10 (Vergleich)

| Versuchs-Serie | Zusatz | | | | Zeit [min.] | Mw [kg/mol] | Mn [kg/mol] | PDI |
|---|---|---|---|---|---|---|---|---|
| 2.2. | Art | Menge [g] | Lsg.-mittel | | 0 | 240 | 100 | 2,4 |
| | | | Art | Menge [g] | 30 | 208 | 97 | 2,1 |
| | | | | | 60 | 169 | 81 | 2,1 |
| | | | | | 185 | 140 | 71 | 2,0 |
| | | | | | 425 | 107 | 56 | 1,9 |
| | PPh₃ | 0,062 | MCB | 4 | 1300 | - | - | - |

Bei Vergleichsversuch 2.2. mit einem Zusatz von 10 Äquivalenten Triphenylphosphan pro Äquivalent Katalysator zeigte sich, dass der Metatheseabbau langsamer und die Molmassen (Mw und Mn) nach langen Reaktionszeiten sogar noch höher als bei dem Vergleichsversuch ohne Phosphanzusatz (Versuchsserie 1.0.) sind.

### Versuchsserie 2.3

### Metathese-Abbau mit einem Molverhältnis (Grubbs-II-Katalysator : PPh₃) = 1 : 1000 (Vergleich)

| Versuchs-Serie | Zusatz | | | | Zeit [min.] | Mw [kg/mol] | Mn [kg/mol] | PDI |
|---|---|---|---|---|---|---|---|---|
| 2.3. | Art | Menge [g] | Lsg.-mittel | | 0 | 240 | 100 | 2,4 |
| | | | Art | Menge [g] | 30 | 224 | 100 | 2,2 |
| | | | | | 60 | - | - | - |
| | | | | | 185 | 198 | 95 | 2,1 |
| | | | | | 425 | 178 | 75 | 2,4 |
| | PPh₃ | 6,20 | MCB | 8 | 1300 | | | |

Bei dem Vergleichsversuch 2.3. mit einem Zusatz von Triphenylphosphan (Molverhältnis Phosphan : Katalysator = 1000:1) zeigte sich, dass der Metatheseabbau langsamer und die Molmassen (Mw und Mn) nach langen Reaktionszeiten höher als bei dem Referenzversuch ohne Phosphanzusatz (1.0.) sind.

In den nachfolgenden Versuchsserien 3.0 und 3.1 wurden jeweils 40 g NBR eingesetzt, 36.8 mg des Buchmeiser/Nuyken Katalysators, entsprechend 0,092 Gewichtsteilen pro 100 Gewichtsteile NBR und 0,8 g 1-Hexen, entsprechend 2, 0 Gewichtsteilen pro 100 Gewichtsteile NBR.

### Versuchsserie 3.0

### Metathese-Abbau mit Buchmeiser-Nuyken-Katalysator ohne Phosphanzusatz (Vergleichsversuch)

| Versuchs-Serie | Zusatz | | | | Zeit [min.] | Mw [kg/mol] | Mn [kg/mol] | PDI |
|---|---|---|---|---|---|---|---|---|
| 3.0. | Art | Menge [g] | Lsg.-mittel | | 0 | 240 | 100 | 2,4 |
| | | | Art | Menge [g] | 30 | 221 | 79 | 2,8 |
| | | | | | 60 | 219 | 78 | 2,8 |
| | | | | | 185 | - | - | - |
| | | | | | 425 | 130 | 67 | 1,9 |
| | - | - | - | - | 1300 | - | - | - |

### Versuchsserie 3.1

### Metathese-Abbau mit einem Molverhältnis (Buchmeiser-Nuyken-Katalysator : PCy₃) = 1 : 0,12 (erfindungsgemäß)

| Versuchs-Serie | Zusatz | | | | Zeit [min.] | Mw [kg/mol] | Mn [kg/mol] | PDI |
|---|---|---|---|---|---|---|---|---|
| 3.1 | Art | Menge [g] | Lsg.-mittel | | 0 | 240 | 100 | 2,4 |
| | | | Art | Menge [g] | 30 | 129 | 56 | 2,3 |
| | | | | | 60 | - | - | - |
| | | | | | 185 | 117 | 58 | 2,0 |
| | | | | | 425 | 111 | 57 | 1,9 |
| | PCy₃ | 0,0016 | MCB | 4 | 1300 | - | - | - |

Bei dem erfindungsgemäßen Versuch 3.1. wurde gezeigt, dass die Geschwindigkeit des Metatheseabbaus mit dem Buchmeiser/Nuyken-Katalysator durch den Zusatz von Tricyclohexylphosphan (Molverhältnis Katalysator : Phosphan = 1 : 0,12) erhöht und die Molmassen (Mw und Mn) nach langen Reaktionszeiten niedriger als bei dem Referenzversuch ohne Phosphanzusatz (3.0) sind. Außerdem waren die abgebauten NBR-Proben gelfrei.

## Patentansprüche

1. Verfahren zum Metathese-Abbau von Nitrilkautschuk in Gegenwart eines Katalysators und eines Phosphans oder Diphosphans, wobei 0,01 bis 1 Äquivalent Phosphan bzw. Diphosphan bezogen auf 1 Äquivalent Katalysator eingesetzt werden.

2. Verfahren gemäß Anspruch 1, wobei das Phosphan bzw. Diphosphan in einer Menge im Bereich von 0,05 bis 0,5 Äquivalenten, bevorzugt in einer Menge im Bereich von 0,10 bis 0,20 Äquivalenten, jeweils bezogen auf 1 Äquivalent Katalysator, eingesetzt wird.

3. Verfahren gemäß Anspruch 1 oder 2, wobei als Phosphan eine Verbindung der allgemeinen Formel (IA) eingesetzt wird, 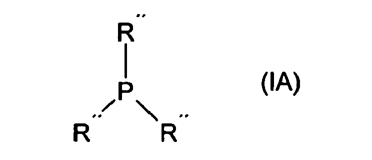 worin
alle R" gleich oder verschieden sind und Alkyl, Alkenyl, Alkadienyl, Alkoxy, Aryl, Heteroaryl, Cycloalkyl, Cycloalkenyl, Cycloalkadienyl, Halogen oder Trimethylsilyl bedeuten.

4. Verfahren gemäß Anspruch 1 oder 2, wobei als Diphosphan eine Verbindung der allgemeinen Formel (IB) eingesetzt wird, 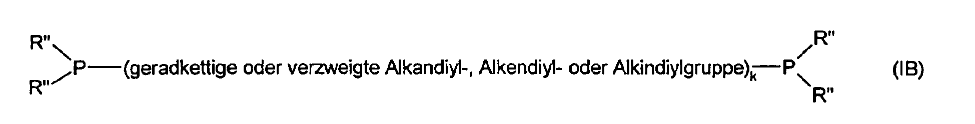 wobei
alle R" gleich oder verschieden sind und Alkyl, Alkenyl, Alkadienyl, Alkoxy, Aryl, Heteroaryl, Cycloalkyl, Cycloalkenyl, Cycloalkadienyl, Halogen oder Trimethylsilyl bedeuten,
k 0 oder 1 ist.

5. Verfahren gemäß Anspruch 3, wobei als Phosphane der allgemeinen Formel (IA) Trialkyl-, Tricycloalkyl-, Triaryl-, Trialkaryl-, Triaralkyl-, Diaryl-monoalkyl-, Diarylmonocycloalkyl-, Dialkyl-monoaryl-, Dialkyl-monocycloalkyl- oder Dicycloalkyl-monoaryl-Phosphane eingesetzt werden.

6. Verfahren gemäß Anspruch 3 oder 5, wobei Phosphane der allgemeinen Formel (IA) eingesetzt werden, bei denen alle R" gleich oder verschieden sind und für Phenyl, Cyclohexyl, Cyclohexenyl, Cyclopentyl, Cyclopentadienyl, Phenylsulfonat oder Cyclohexylsulfonat stehen.

7. Verfahren gemäß Anspruch 3, wobei als Phosphane der allgemeinen Formel (IA) PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-Pr)₃, P(CHCH₃(CH₂CH₃))₃, P(cyclopentyl)3_{,} P(cyclohexyl)₃, P(neopentyl)₃, P(C₆H₅CH₂)(C₆H₅)₂, P(NCCH₂CH₂)₂(C₆H₅), PUCH₃)₃C]₂Cl, P[(CH₃)₃C]₂(CH₃), P(tert.-Bu)₂(biph), P(C₆H₁₁)₂Cl, P(CH₃)(OCH₂CH₃)₂, P(CH₂=CHCH₂)₃, P(C₄H₃O)₃, P(CH₂OH)₃, P(m-CH₃OC₆H₄)₃, P(C₆F₅)₃, P[(CH₃)₃Si]₃ oder P[(CH₃O)₃C₆H₂]₃ eingesetzt werden, wobei Tol für Tolyl, biph für Biphenyl, Bu für Butyl und Pr für Propyl stehen.

8. Verfahren gemäß Anspruch 4, wobei als Diphosphane der allgemeinen Formel (IB) Cl₂PCH₂CH₂PCl₂, (C₆H₁₁)PCH₂P(C₆H₁₁), (CH₃)₂PCH₂CH₂P(CH₃)₂, (C₆H₅)₂PCCP(C₆H₅)₂, (C₆H₅)₂PCH=CHP(C₆H₅)₂, (C₆F₅)₂PCH₂CH₂P(C₆F₅)₂, (C₆H₅)₂P(CH₂)₄P(C₆H₅)₂, (C₆H₅)₂PCH(CH₃)CH(CH₃)P(C₆H₅)₂ oder (C₆H₅)₂PCH(CH₃)CH₂P(C₆H₅)₂ eingesetzt werden.

9. Verfahren gemäß einem oder mehreren der Ansprüche 1 bis 8, wobei als Katalysator eine Verbindung der allgemeinen Formel (A) eingesetzt wird, 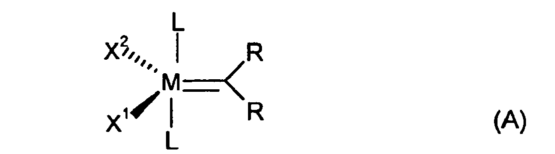 worin
M Osmium oder Ruthenium bedeutet,
R gleich oder verschieden sind und einen Alkyl-, bevorzugt C₁-C₃₀-Alkyl-, Cycloalkyl-, bevorzugt C₃-C₂₀-Cycloalkyl-, Alkenyl-, bevorzugt C₂-C₂₀- Alkenyl-, Alkinyl-, bevorzugt C₂-C₂₀-Alkinyl-, Aryl-, bevorzugt C₅-C₂₄- Aryl-, Carboxylat-, bevorzugt C₁-C₂₀-Carboxylat-, Alkoxy-, bevorzugt C₁- C₂₀-Alkoxy-, Alkenyloxy-, bevorzugt C₂-C₂₀-Alkenyloxy-, Alkinyloxy-, bevorzugt C₂-C₂₀-Alkinyloxy-, Aryloxy-, bevorzugt C₅-C₂₄-Aryloxy, Alkoxycarbonyl-, bevorzugt C₂-C₂₀-Alkoxycarbonyl-, Alkylamino-, bevorzugt C₁-C₃₀-Alkylamino, Alkylthio-, bevorzugt C₁-C₃₀-Alkylthio, Arylthio-, bevorzugt C₃-C₂₄-Arylthio, Alkylsulfonyl-, bevorzugt C₁-C₂₀- Alkylsulfonyl, oder Alkylsulfinyl, bevorzugt C₁-C₂₀-Alkylsulfinyl-Rest darstellen, die alle jeweils optional durch ein oder mehrere Alkyl-, Halogen-, Alkoxy-, Aryl- oder Heteroaryl-Reste substituiert sein können,
X¹ und X² gleich oder verschieden sind und zwei Liganden, bevorzugt anionische Liganden, darstellen, und
L gleiche oder verschiedene Liganden, bevorzugt neutrale Elektronen- Donoren darstellen.

10. Verfahren gemäß Anspruch 9, wobei X¹ und X² gleich oder verschieden sind und Wasserstoff, Halogen, Pseudohalogen, geradkettige oder verzweigte C₁-C₃₀-Alkyl, C₅-C₂₄-Aryl, C₁-C₂₀-Alkoxy, C₅-C₂₄-Aryloxy, C₃-C₂₀-Alkyldiketonat, C₅-C₂₄-Aryldiketonat, C₁-C₂₀-Carboxylat, C₁-C₂₀-Alkytsutfonat, C₅-C₂₄-Arylsulfonat, C₁-C₂₀-Alkylthiol, C₅-C₂₄-Arylthiol, C₁-C₂₀-Alkylsulfonyl oder C₁-C₂₀-Alkylsulfinyl-Reste bedeuten.

11. Verfahren gemäß Anspruch 9, wobei X¹ und X² gleich oder verschieden sind und Halogen, insbesondere Fluor, Chlor, Brom oder Jod, Benzoat, C₁-C₅-Carboxylat,-C₁-C₅-Alkyl, Phenoxy, C₁-C₅-Alkoxy, C₁-C₅-Alkylthiol, C₅-C₂₄-Arylthiol, C₅-C₂₄-Aryl oder C₁-C₅-Alkylsulfonat bedeuten.

12. Verfahren gemäß Anspruch 9, wobei X¹ und X² identisch sind und Halogen, insbesondere Chlor, CF₃COO, CH₃COO, CFH₂COO, (CH₃)₃CO, (CF₃)₂(CH₃)CO, (CF₃)(CH₃)₂CO, PhO (Phenoxy), MeO (Methoxy), EtO (Ethoxy), Tosylat (p-CH₃-C₆H₄-SO₃), Mesylat (2,4,6-Trimethylphenyl) oder CF₃SO₃ (Trifluormethansulfonat) bedeuten.

13. Verfahren gemäß Anspruch 9, wobei die beiden Liganden L unabhängig voneinander einen Phosphin-, sulfonierten Phosphin-, Phosphat-, Phosphinit-, Phosphonit-, Arsin-, Stibin-, Ether-, Amin-, Amid-, Sulfoxid-, Carboxyl-, Nitrosyl-, Pyridin-, Thioether- oder einen Imidazolidin("Im")-Liganden bedeuten.

14. Verfahren gemäß Anspruch 13, wobei der Imidazolidinrest (Im) eine Struktur der allgemeinen Formeln (IIa) oder (IIb) auf weist, 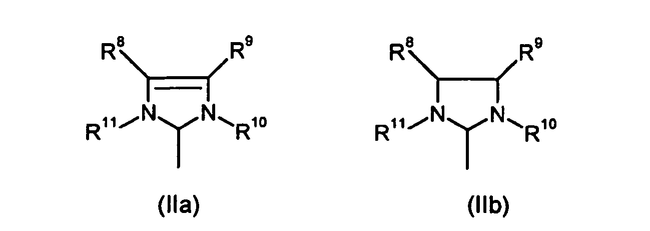 worin
R⁸, R⁹, R¹⁰, R¹¹ gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀- Alkinyl, C₅-C₂₄-Aryl, C₁-C₂₀-Carboxylat, C₁-C₂₀-Alkoxy, C₂-C₂₀- Alkenyloxy, C₂-C₂₀-Alkinyloxy, C₅-C₂₀-Aryloxy, C₂-C₂₀-Alkoxycarbonyl, C₁-C₂₀-Alkylthio, C₅-C₂₀-Arylthio, C₁-C₂₀-Alkylsulfonyl, C₁-C₂₀- Alkylsulfonat, C₅-C₂₀-Arylsulfonat oder C₁-C₂₀-Alkylsulfinyl bedeuten.

15. Verfahren gemäß einem oder mehreren der Ansprüche 1-14, wobei der Katalysator die Struktur (III) oder (IV) besitzt, wobei Cy jeweils für Cylcohexyl und Mesjeweils für 2,4,6-Trimethylphenyl steht.

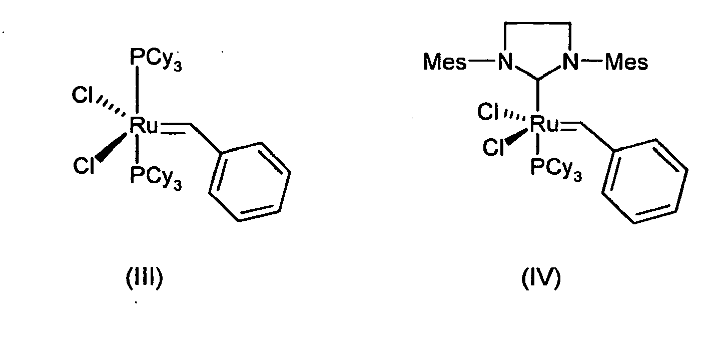

16. Verfahren gemäß einem oder mehreren der Ansprüche 1-8, wobei ein Katalysator der allgemeinen Formel (B) eingesetzt wird, 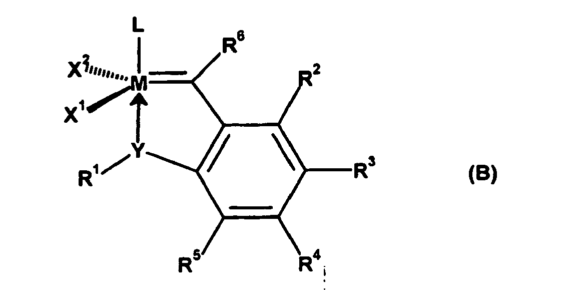 worin
M Ruthenium oder Osmium bedeutet,
Y Sauerstoff (O), Schwefel (S), einen Rest N-R¹ oder einen Rest P-R¹ bedeutet,
X¹ und X² gleiche oder verschiedene Liganden sind,
R¹ einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellt, die alle jeweils optional durch ein oder mehrere Alkyl-, Halogen-, Alkoxy-, Aryl- oder Heteroaryl- Reste substituiert sein können,
R², R³, R⁴ und R⁵ gleich oder verschieden sind und Wasserstoff, organische oder anorganische Reste darstellen,
R⁶ Wasserstoff, einen Alkyl-, Alkenyl-, Alkinyl- oder einen Aryl-Rest bedeutet und
L ein Ligand ist, der die gleichen Bedeutungen besitzt, wie der Ligand L in der in Anspruch 9 genannten Formel (A).

17. Verfahren gemäß Anspruch 16, wobei L einen P(R⁷)₃ Rest darstellt, wobei R⁷ unabhängig voneinander C₁-C₆-Alkyl, C₃-C₈-Cycloalkyl oder Aryl bedeuten, oder aber einen gegebenenfalls substituierten Imidazolidinrest ("Im"), der bevorzugt die Struktur der in Anspruch 14 genannten allgemeinen Formeln (IIa) und (IIb) besitzt und besonders bevorzugt eine der nachfolgenden Strukturen (Va-f) aufweist, wobei Mes jeweils für einen 2,4,6-Trimethylphenyl-Rest steht,

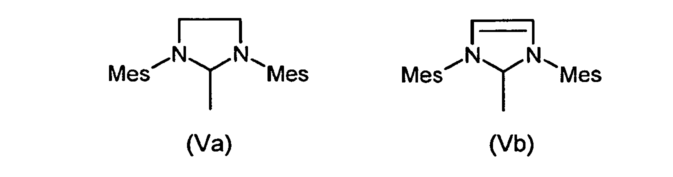

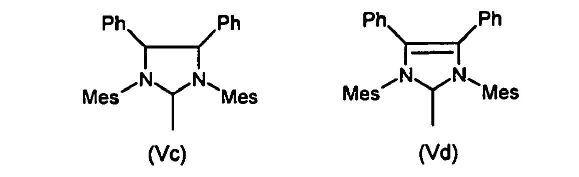

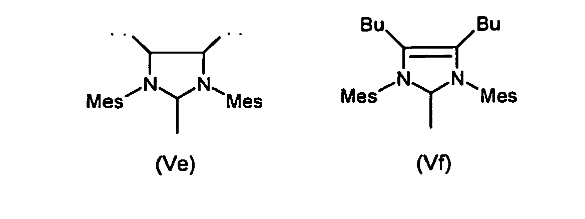

18. Verfahren gemäß Anspruch 16 oder 17, wobei X¹ und X² in der allgemeinen Formel (B) die Bedeutungen annimmt, die X¹ und X² in den Ansprüchen 9-12 besitzen.

19. Verfahren gemäß einem oder mehreren der Ansprüche 16-18, wobei ein Katalysator gemäß
der allgemeinen Formel (B 1) eingesetzt wird, 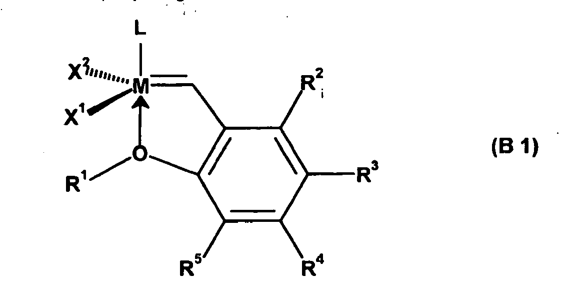 worin
M, L, X¹, X² , R¹, R², R³, R⁴ und R⁵ die für die allgemeine Formel (B) in Anspruch 16 genannten Bedeutungen besitzen.

20. Verfahren gemäß Anspruch 19, wobei ein Katalysator gemäß der allgemeinen Formel (B 1 ) eingesetzt wird, worin
M Ruthenium bedeutet,
X¹ und X² gleichzeitig Halogen, insbesondere Chlor bedeuten,
R¹ für einen geradkettigen oder verzweigten C₁-C₁₂ Alkylrest steht,
R², R³, R⁴, R⁵ die für die allgemeine Formel (B) in Anspruch 16 genannten Bedeutungen besitzen und
L die für die allgemeine Formel (B) in Anspruch 16 genannten Bedeutungen besitzt.

21. Verfahren gemäß Anspruch 19, wobei ein Katalysator gemäß der allgemeinen Formel (B1) eingesetzt wird, worin
M Ruthenium darstellt,
X¹ und X² gleichzeitig Chlor bedeuten,
R¹ für einen Isopropyl-Rest steht,
R², R³, R⁴, R⁵ alle Wasserstoff bedeuten und
L einen gegebenenfalls substituierten Imidazolidin-Rest der Formeln (IIa) oder (IIb) darstellt, 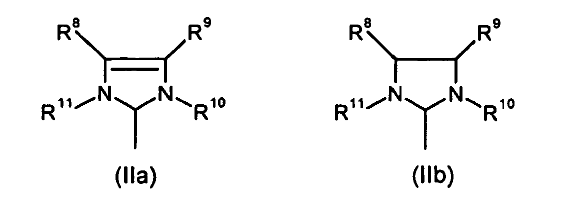 worin
R⁸, R⁹ R¹⁰, R¹¹ gleich oder verschieden sind und Wasserstoff, geradkettiges oder verzweigtes C₁-C₃₀-Alkyl, C₃-C₂₀- Cylcoalkyl, C₂-C₂₀-Alkenyl, C₂-C₂₀-Alkinyl, C₅-C₂₄- Aryl, C₁-C₂₀-Carboxylat, C₁-C₂₀-Alkoxy, C₂-C₂₀- Alkenyloxy, C₂-C₂₀-Alkinyloxy, C₅-C₂₄-Aryloxy, C₂- C₂₀-Alkoxycarbonyl, C₁-C₂₀-Alkylthio, C₅-C₂₄- Arylthio, C₁-C₂₀-Alkylsulfonyl, C₁-C₂₀-Alkylsulfonat, C₅-C₂₄-Arylsulfonat oder C₁-C₂₀-Alkylsulfinyl bedeuten.

22. Verfahren gemäß Anspruch 19, wobei als Katalysator der allgemeinen Strukturformel (B1) ein Katalysator der nachfolgenden Strukturen (VI), (VII), (VIII), (IX), (X), (XI), (XII) oder (XIII) eingesetzt wird, wobei Mes jeweils einen 2,4,6-Trimethylphenyl-Rest bedeutet.

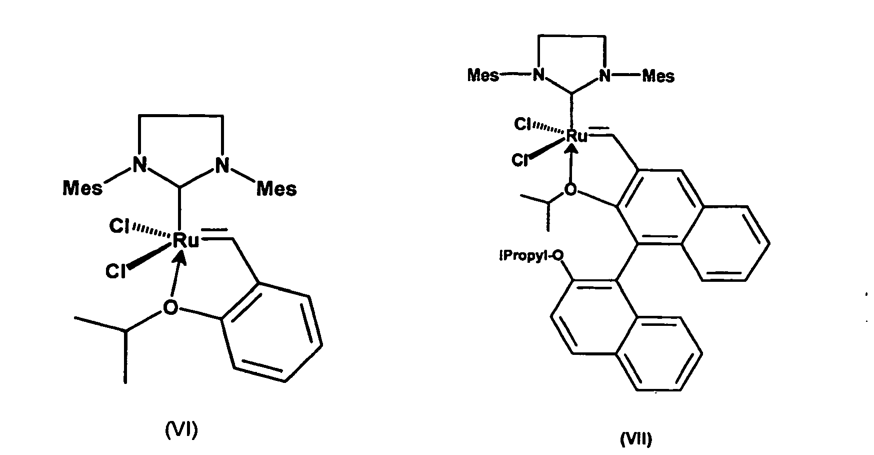

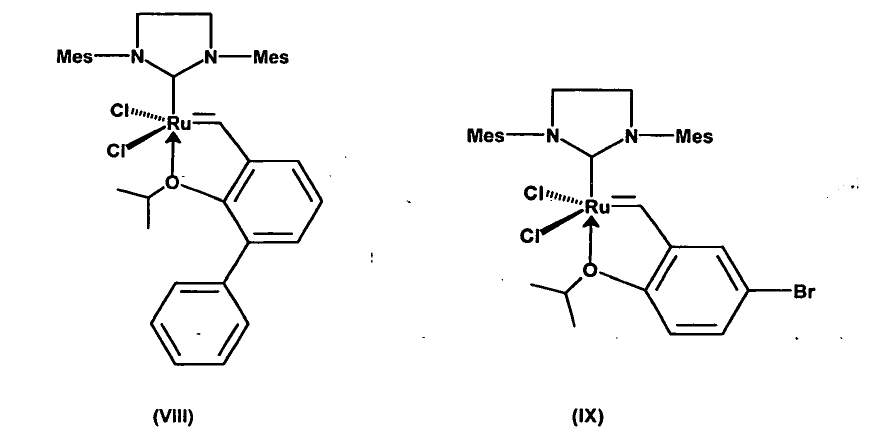

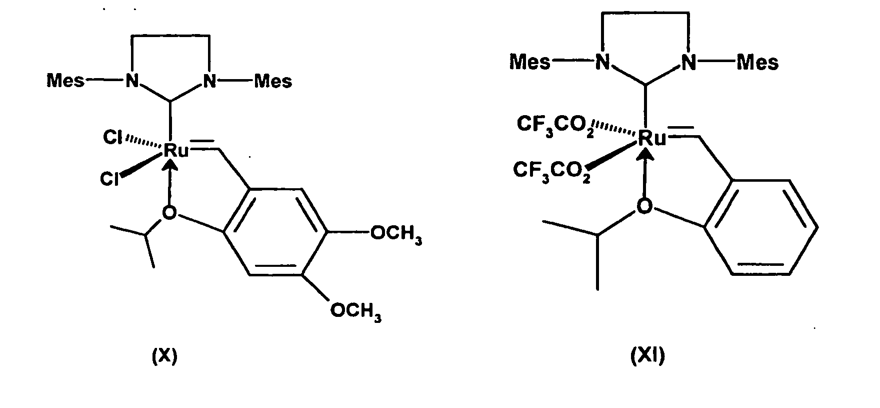

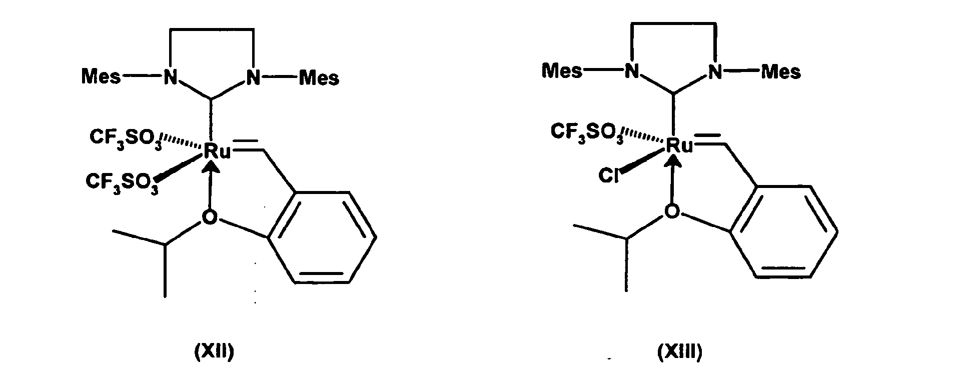

23. Verfahren gemäß einem oder mehreren der Ansprüche 16-18, wobei ein Katalysator der allgemeinen Formel (B2) eingesetzt wird, 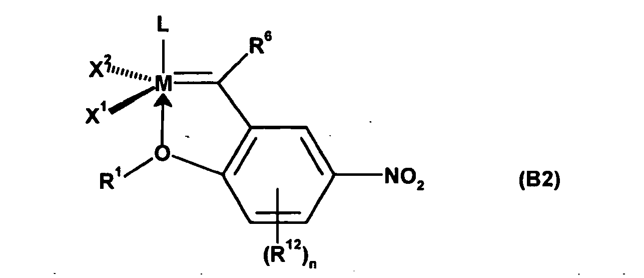 worin
M, L, X¹, X², R¹ und R⁶ die für die allgemeine Formel (B) in Anspruch 16 genannten Bedeutungen haben,
R¹² gleich oder verschieden sind und die für die Reste R², R³, R⁴ und R⁵ in der allgemeinen Formel (B) in Anspruch 16 genannten Bedeutungen, ausgenommen Wasserstoff, besitzen und
n gleich 0, 1, 2 oder 3 ist.

24. Verfahren gemäß Anspruch 23, wobei der Katalysator der folgenden Strukturen (XIV) oder (XV) eingesetzt wird, wobei Mes jeweils einen 2,4,6-Trimethylphenyl-Rest bedeutet.

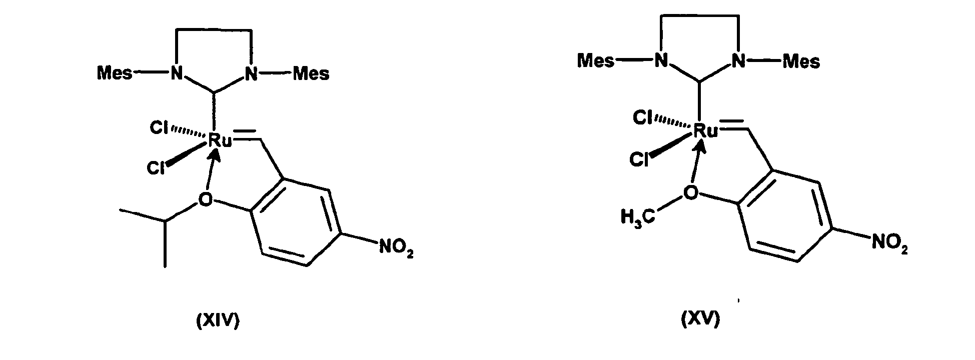

25. Verfahren gemäß einem oder mehreren der Ansprüche 16-18, wobei ein Katalysator der allgemeinen Formel (B3) eingesetzt wird, 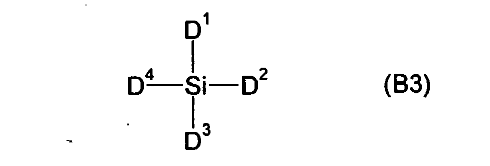 worin D¹, D², D³ und D⁴ jeweils eine Struktur der nachfolgend dargestellten allgemeinen Formel (XVI) aufweisen, die über die Methylengruppe an das Silicium der Formel (B3) angebunden ist und 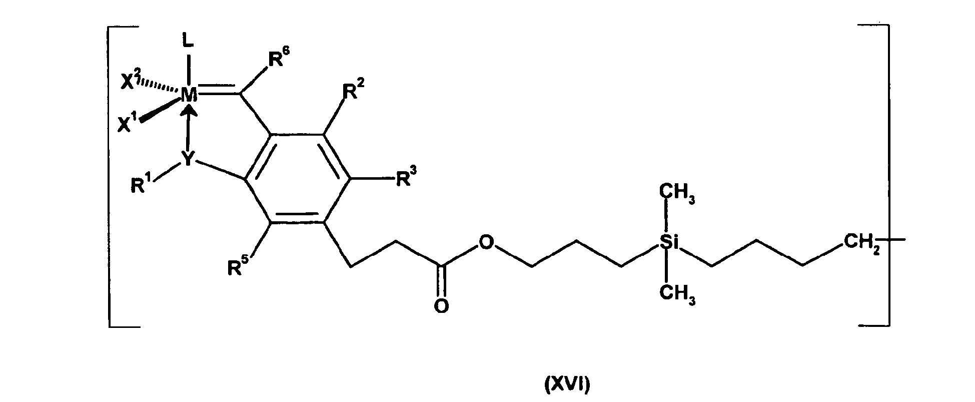 worin
M, L, X¹, X², R¹, R², R³, R⁵ und R⁶ die für die allgemeine Formel (B) in Anspruch 16 genannten Bedeutungen besitzen.

26. Verfahren gemäß einem oder mehreren der Ansprüche 1-8, wobei ein Katalysator allgemeinen Formel (B4) eingesetzt wird, 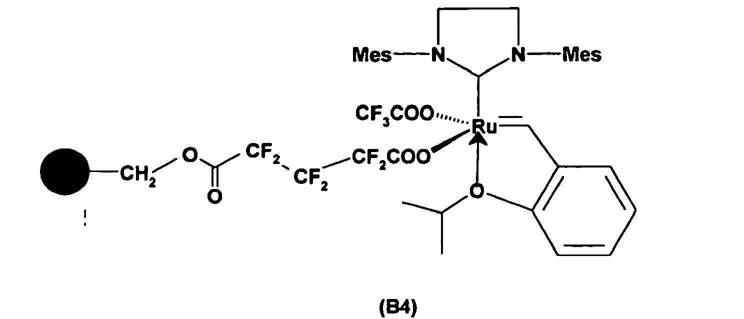 worin das Symbol 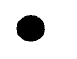
für einen Träger steht.

27. Verfahren gemäß einem oder mehreren der Ansprüche 1-8, wobei ein Katalysator der allgemeinen Formel (C) eingesetzt wird. 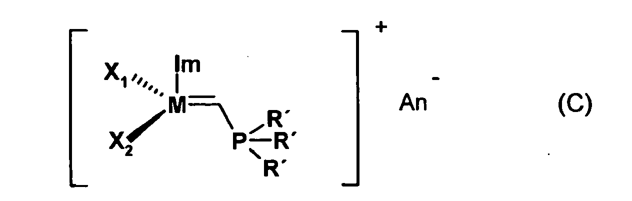 worin
M Ruthenium oder Osmium bedeutet,
X¹ und X² gleich oder verschieden sind und anionische Liganden darstellen,
R' gleich oder verschieden sind und organische Reste darstellen,
Im einen gegebenenfalls substituierten Imidazolidinrest darstellt und
An ein Anion darstellt.

28. Verfahren nach einem oder mehreren der Ansprüche 1-8, wobei ein Katalysator der allgemeinen Formel (D) eingesetzt wird, 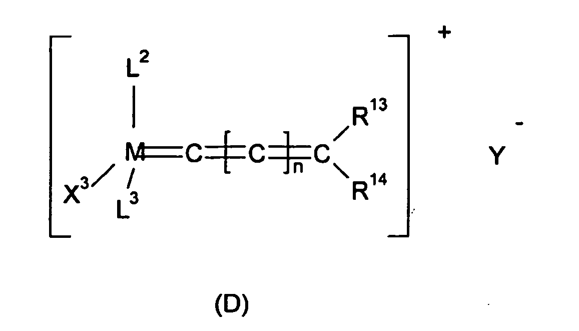 worin
M Ruthenium oder Osmium bedeutet,
R¹³ und R¹⁴ unabhängig voneinander Wasserstoff, C₁-C₂₀-Alkyl, C₂-C₂₀-Alkenyl, C₂- C₂₀ Alkinyl, C₅-C₂₄-Aryl, C₁-C₂₀-Carboxylat, C₁-C₂₀-Alkoxy, C₂-C₂₀- Alkenyloxy, C₂-C₂₀-Alkinyloxy, C₅-C₂₄-Aryloxy, C₂-C₂₀-Alkoxycarbonyl, C₁-C₂₀-Alkylthio, C₁-C₂₀ -Alkylsulfonyl oder C₁-C₂₀ Alkylsulfinyl bedeuten,
X³ ein anionischer Ligand ist,
L² ein neutraler π-gebundener Ligand ist, unabhängig davon, ob mono- oder polycyclisch,
L³ ein Ligand aus der Gruppe der Phosphine, sulfonierten Phosphine, fluorierten Phosphine, funktionalisierten Phosphine mit bis zu drei Aminoalkyl-, Ammoniumalkyl, Alkoxyalkyl, Alkoxycarbonylalkyl, Hydrocarbonylalkyl-, Hydroxyalkyl- oder Ketoalkyl-Gruppen, Phosphite, Phosphinite, Phosphonite, Phosphinamine, Arsine, Stibene, Ether, Amine, Amides, Imine, Sulfoxide, Thioether und Pyridine darstellt,
Y⁻ ein nicht-koordinierendes Anion ist und
n 0,1,2,3,4 oder 5 ist.

29. Verfahren gemäß einem oder mehreren der Ansprüche 1-8, wobei ein Katalysator der allgemeinen Formel (E) eingesetzt wird, 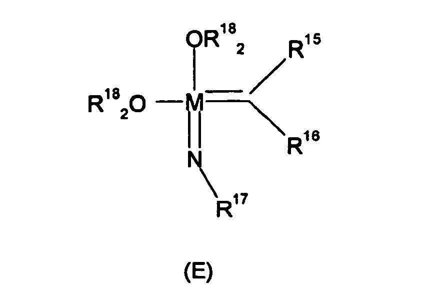 worin
M² Molybdän oder Wolfram ist,
R¹⁵ und R¹⁶ gleich oder verschieden sind und Wasserstoff, C₁-C₂₀-Alkyl, C₂-C₂₀- Alkenyl, C₂-C₂₀-Alkinyl, C₅-C₂₄-Aryl, C₁-C₂₀-Carboxylau C₁-C₂₀-Alkoxy, C₂-C₂₀-Alkenyloxy, C₂-C₂₀-Alkinyloxy, C₅-C₂₄-Aryloxy, C₂-C₂₀- Alkoxycarbonyl, C₁-C₂₀-Alkylthio, C₁-C₂₀ -Alkylsulfonyl oder C₁-C₂₀ Alkylsulfinyl bedeuten,
R¹⁷ and R¹⁸ gleich oder verschieden sind und einen substituierten oder einen halogensubstituierten C₁-C₂₀-Alkyl, C₅-C₂₄-Aryl, C₆-C₃₀-Aralkyl-Rest oder Silikon-enthaltende Analoga davon darstellen.

30. Verfahren gemäß einem oder mehreren der Ansprüche 1-8, wobei ein Katalysator der allgemeinen Formel (F) eingesetzt wird. 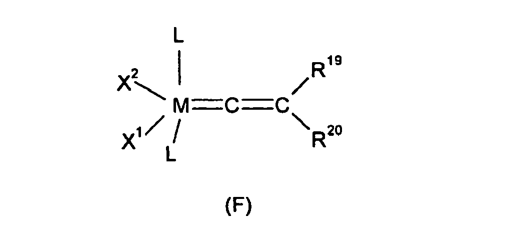 worin
M Ruthenium oder Osmium bedeutet,
X¹ und X² gleich oder verschieden sind und anionische Liganden darstellen, die alle Bedeutungen von X¹ und X² in der allgemeinen Formeln (A) und (B) annehmen können,
L gleiche oder verschiedene Liganden darstellt, die alle Bedeutungen von L in den allgemeinen Formeln (A) und (B) annehmen können und
R¹⁹ and R²⁰ gleich oder verschieden sind und Wasserstoff oder substituiertes oder unsubstituiertes Alkyl bedeuten.

31. Verfahren zur Herstellung von hydriertem Nitrilkautschuk, **dadurch gekennzeichnet, dass** man anschließend an den Metathese-Abbau des Nitrilkautschuks nach einem oder mehreren der Ansprüche 1 bis 30 eine Hydrierung des durch die Metathese abgebauten Nitrilkautschuks durchführt.

## Claims

1. Process for the metathetic degradation of nitrile rubber in the presence of a catalyst and a phosphane or diphosphane, wherein from 0.01 to 1 equivalent of phosphane or diphosphane are used per 1 equivalent of catalyst.

2. Process according to Claim 1, wherein the phosphane or diphosphane is used in an amount in the range from 0.05 to 0.5 equivalents, preferably in an amount in the range from 0.10 to 0.20 equivalents, in each case based on 1 equivalent of catalyst.

3. Process according to Claim 1 or 2, wherein a compound of the general
formula (IA), 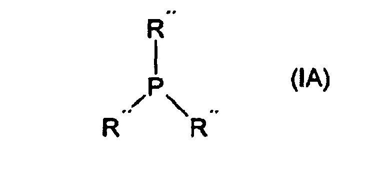 where
all radicals R" are identical or different and are each alkyl, alkenyl, alkadienyl, alkoxy, aryl, heteroaryl, cycloalkyl, cycloalkenyl, cycloalkadienyl, halogen or trimethylsilyl,
is used as phosphane.

4. Process according to Claim 1 or 2, wherein a compound of the general formula (IB), 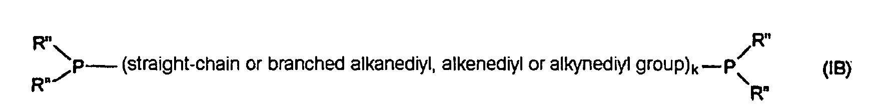 where
all radicals R" are identical or different and are each alkyl, alkenyl, alkadienyl, alkoxy, aryl, heteroaryl, cycloalkyl, cycloalkenyl, cycloalkadienyl, halogen or trimethylsilyl,
k is 0 or 1,
is used as diphosphane.

5. Process according to Claim 3, wherein trialkylphosphanes, tricycloalkylphosphanes, triarylphosphanes, trialkarylphosphanes, triaralkylphosphanes, diarylmonoalkylphosphanes, diarylmonocycloalkyl-phosphanes, dialkylmonoarylphosphanes, dialkylmonocycloalkylphosphanes or dicycloalkylmonoarylphosphanes are used as phosphanes of the general formula (IA).

6. Process according to Claim 3 or 5, wherein phosphanes of the general formula (IA) in which all radicals R" are identical or different and are each phenyl, cyclohexyl, cyclohexenyl, cyclopentyl, cyclopentadienyl, phenylsulphonate or cyclohexylsulphonate are used.

7. Process according to Claim 3, wherein PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-S0₃Na)₃, P(CH₂C₆H₄-SO₃Na)₃, P(iso-Pr)₃, P(CHCH₃(CH₂CH₃))₃, P(cyclopentyl)₃, P(cyclohexyl)_{3,} P(neopentyl)₃, P(C₆H₅CH₂)(C₆H₅)₂, P(NCCH₂CH₂)₂(C6H₅), P[(CH₃)₃C]₂Cl, P[(CH₃)₃C]₂(CH₃), P(tert-Bu)₂(biph), P(C₆H₁₁)₂Cl, P(CH₃)(OCH₂CH₃)₂, P(CH₂=CHCH₂)₃, P(C₄H₃O)₃, P(CH₂OH)₃, P(m-CH₃OC₆H₄)₃, P(C₆F₅)₃, P[(CH₃)₃Si]₃ or P[(CH₃O)₃C₆H₂]₃, where Tol is tolyl, biph is biphenyl, Bu is butyl and Pr is propyl, are used as phosphanes of the general formula (IA).

8. Process according to Claim 4, wherein Cl₂PCH₂CH₂PCl₂, (C₆H₁₁)₂PCH₂P(C₆H₁₁), (CH₃)₂PCH₂CH₂P(CH₃)₂, (C₆H₅)₂PCCP(C₆H₅)₂, (C₆H₅)₂PCH=CHP(C₆H₅)₂, (C₆F₅)₂PCH₂CH₂P(C₆F₅)₂, (C₆H₅)₂P(CH₂)₄P(C₆H₅)₂, (C₆H₅)₂PCH(CH₃)CH(CH₃)P(C₆H₅)₂ or (C₆H₅)₂PCH(CH₃)CH₂P(C₆H₅)₂ are used as diphosphanes of the general formula (IB).

9. Process according to one or more of Claims 1 to 8, wherein a compound of
the general formula (A), 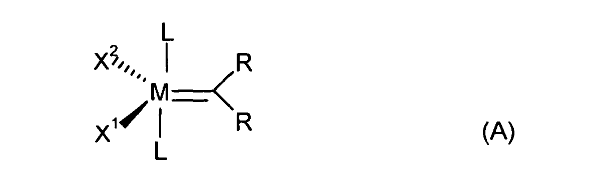 where
M is osmium or ruthenium,
the radicals R are identical or different and are each an alkyl, preferably C₁-C₃₀-alkyl, cycloalkyl, preferably C₃-C₂₀-cycloalkyl, alkenyl, preferably C₂-C₂₀-alkenyl, alkynyl, preferably C₂-C₂₀-alkynyl, aryl, preferably C₅-C₂₄-aryl, carboxylate, preferably C₁-C₂₀-carboxylate, alkoxy, preferably C₁-C₂₀- alkoxy, alkenyloxy, preferably C₂-C₂₀-alkenyloxy, alkynyloxy, preferably C₂-C₂₀-alkynyloxy, aryloxy, preferably C₅-C₂₄-aryloxy, alkoxycarbonyl, preferably C₂-C₂₀-alkoxycarbonyl, alkylamino, preferably C₁-C₃₀- alkylamino, alkylthio, preferably C₁-C₃₀-alkylthio, arylthio, preferably C₅-C₂₄-arylthio, alkylsulphonyl, preferably C₁-C₂₀-alkylsulphonyl, or alkylsulphynyl, preferably C₁-C₂₀- alkylsulphinyl radical, which may in each case optionally be substituted by one or more alkyl, halogen, alkoxy, aryl or heteroaryl radicals,
X¹ and X² are identical or different and are two ligands, preferably anionic ligands, and
the symbols L represent identical or different ligands, preferably uncharged electron donors,
is used as catalyst.

10. Process according to Claim 9, wherein X¹ and X² are identical or different and are each hydrogen, halogen, pseudohalogen, straight-chain or branched C₁-C₃₀-alkyl, C₅-C₂₄-aryl, C₁-C₂₀-alkoxy, C₅-C₂₄-aryloxy, C₃-C₂₀-alkyldiketonate, C₅-C₂₄-aryldiketonate, C₁-C₂₀-carboxylate, C₁-C₂₀-alkylsulphonate, C₅-C₂₄-arylsulphonate, C₁-C₂₀-alkylthiol, C₅-C₂₄-arylthiol, C₁-C₂₀-alkylsulphonyl or C₁-C₂₀-alkylsulphynyl radicals.

11. Process according to Claim 9, wherein X¹ and X² are identical or different and are each halogen, in particular fluorine, chlorine, bromine or iodine, benzoate, C₁-C₅-carboxylate, C₁-C₅-alkyl, phenoxy, C₁-C₅-alkoxy, C₁-C₅-alkylthiol, C₅-C₂₄-arylthiol, C₅-C₂₄-aryl or C₁-C₅-alkylsulphonate.

12. Process according to Claim 9, wherein X¹ and X² are identical and are each halogen, in particular chlorine, CF₃COO, CH₃COO, CFH₂COO, (CH₃)₃CO, (CF₃)₂(CH₃)CO, (CF₃)(CH₃)₂CO, PhO (phenoxy), MeO (methoxy), EtO (ethoxy), tosylate (p-CH₃-C₆H₄-SO₃), mesylate (2,4,6-trimethylphenyl) or CF₃SO₃ (trifluoromethanesulphonate).

13. Process according to Claim 9, wherein the two ligands L are each, independently of one another, a phosphine, sulphonated phosphine, phosphate, phosphinite, phosphonite, arsine, stilbene, ether, amine, amide, sulphoxide, carboxyl, nitrosyl, pyridine, thioether or imidazolidine ("Im") ligand.

14. Process according to Claim 13, wherein the imidazolidine radical (Im) has a
structure of the general formula (IIa) or (IIb) 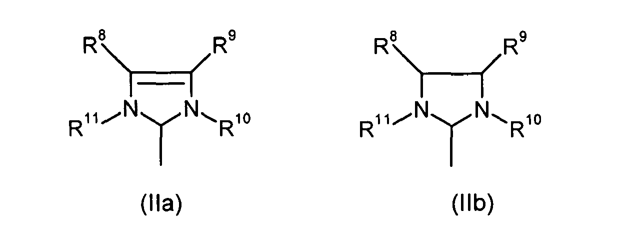 where
R⁸, R⁹, R¹⁰, R¹¹ are identical or different and are each hydrogen, straight- chain or branched C₁-C₃₀-alkyl, C₃-C₂₀-cycloalkyl, C₂-C₂₀- alkenyl, C₂-C₂₀-alkynyl, C₅-C₂₄-aryl, C₁-C₂₀-carboxylate, C₁-C₂₀-alkoxy, C₂-C₂₀-alkenyloxy, C₂-C₂₀-alkynyloxy, C₅-C₂₀-aryloxy, C₂-C₂₀-alkoxycarbonyl, C₁-C₂₀-alkylthio, C₅-C₂₀-arylthio, C₁-C₂₀-alkylsulphonyl, C₁-C₂₀- alkylsulphonate, C₅-C₂₀-arylsulphonate or C₁-C₂₀- alkylsulphinyl.

15. Process according to one or more of Claims 1-14, wherein the catalyst has the structure (III) or (IV), where Cy is in each case cyclohexyl and Mes is in each case 2,4,6-trimethylphenyl.

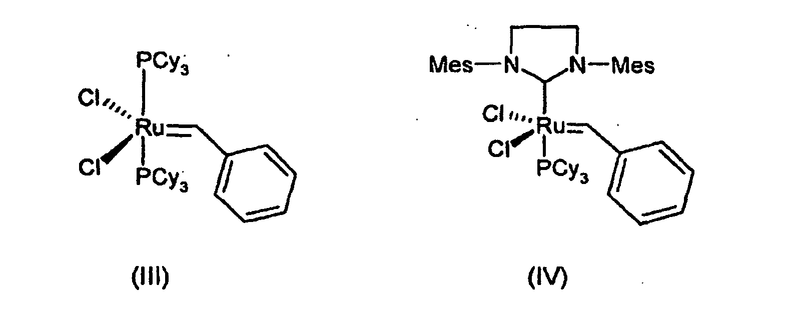

16. Process according to one or more of Claims 1-8, wherein a catalyst of the
general formula (B), 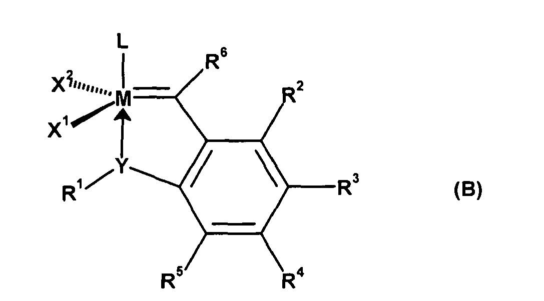 where
M is ruthenium or osmium,
Y is oxygen (O), sulphur (S), an N-R¹ radical or a P-R¹ radical,
X¹ and X² are identical or different ligands,
R¹ is an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphynyl radical which may in each case optionally be substituted by one or more alkyl, halogen, alkoxy, aryl or heteroaryl radicals,
R², R³, R⁴ and R⁵ are identical or different and are each hydrogen or an organic or inorganic radical,
R⁶ is hydrogen or an alkyl, alkenyl, alkynyl or aryl radical and
L is a ligand which has the same meanings as the ligand L in the formula (A) mentioned in Claim 9,
is used.

17. Process according to Claim 16, wherein L is a P(R⁷)₃ radical, where the radicals R⁷ are each, independently of one another, C₁-C₆-alkyl, C₃-C₈-cycloalkyl or aryl, or else a substituted or unsubstituted imidazolidine radical ("Im") which preferably has the structure of one of the general formulae (IIa) and (IIb) mentioned in Claim 14 and particularly preferably one of the following structures (Va-f), where Mes is in each case a 2,4,6-trimethylphenyl radical.

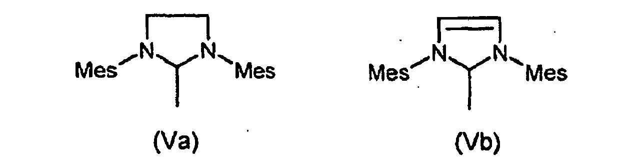

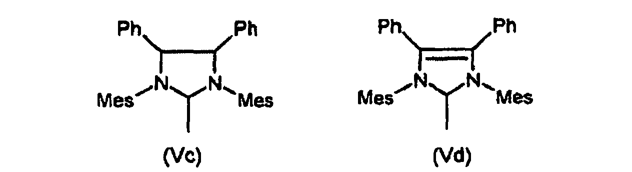

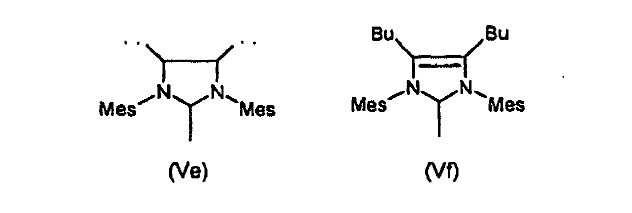

18. Process according to Claim 16 or 17, wherein X¹ and X² in the general formula (B) have the meanings of X¹ and X² in Claims 9-12.

19. Process according to one or more of Claims 16-18, wherein a catalyst of the
general formula (B1), 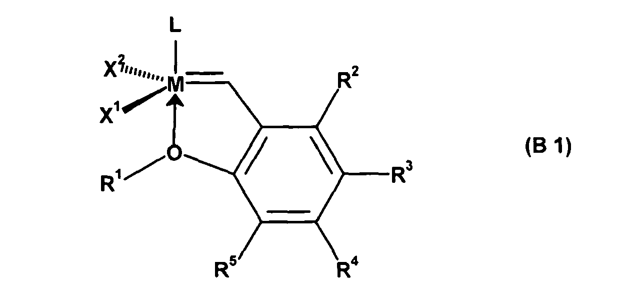 where
M, L, X¹, X², R¹, R², R³, R⁴ and R⁵ have the meanings mentioned for the general formula (B) in Claim 16,
is used.

20. Process according to Claim 19, wherein a catalyst of the general formula
(B1) in which
M is ruthenium,
X¹ and X² are both halogen, in particular chlorine,
R¹ is a straight-chain or branched C₁-C₁₂-alkyl radical,
R², R³, R⁴, R⁵ have the meanings mentioned for the general formula (B) in Claim 16 and
L has the meanings mentioned for the general formula (B) in Claim 16,
is used.

21. Process according to Claim 19, wherein a catalyst of the general formula
(B1) in which
M is ruthenium,
X¹ and X² are both chlorine,
R¹ is an isopropyl radical,
R², R³, R⁴, R⁵ are all hydrogen and
L is a substituted or unsubstituted imidazolidine radical of the formula (IIa) or (IIb) 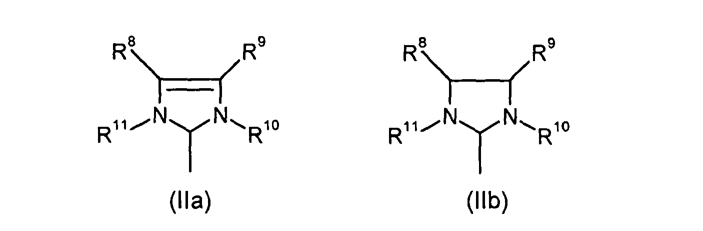 where
R⁸, R⁹, R¹⁰, R¹¹ are identical or different and are each hydrogen, straight-chain or branched C₁-C₃₀-alkyl, C₃-C₂₀-cycloalkyl, C₂-C₂₀- alkenyl, C₂-C₂₀-alkynyl, C₅-C₂₄-aryl, C₁-C₂₀-carboxylate, C₁-C₂₀-alkoxy, C₂-C₂₀-alkenyloxy, C₂-C₂₀-alkynyloxy, C₅-C₂₄-aryloxy, C₂-C₂₀-alkoxycarbonyl, C₁-C₂₀-alkylthio, C₅-C₂₄-arylthio, C₁- C₂₀-alkylsulphonyl, C₁-C₂₀- alkylsulphonate, C₅-C₂₄-arylsulphonate or C₁-C₂₀-alkylsulphynyl,
is used.

22. Process according to Claim 19, wherein a catalyst of the following structure (VI), (VII), (VIII), (IX), (X), (XI), (XII) or (XIII), where Mes is in each case a 2,4,6-trimethylphenyl radical, is used as catalyst of the general structural formula (B1).

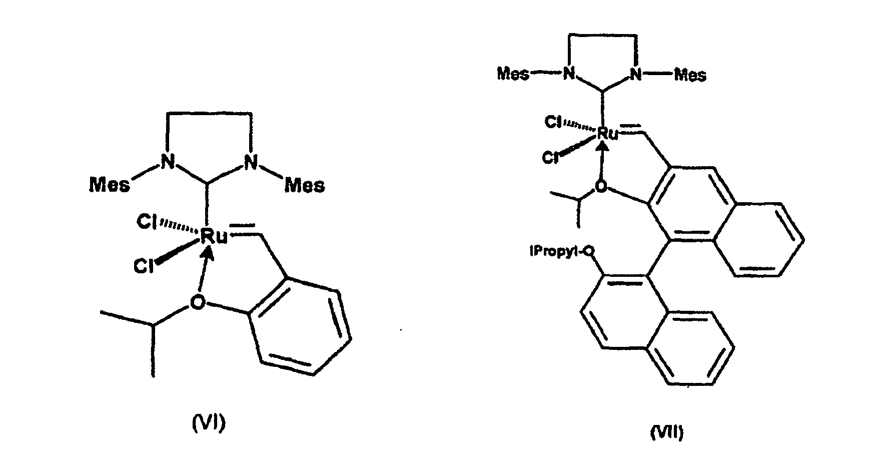

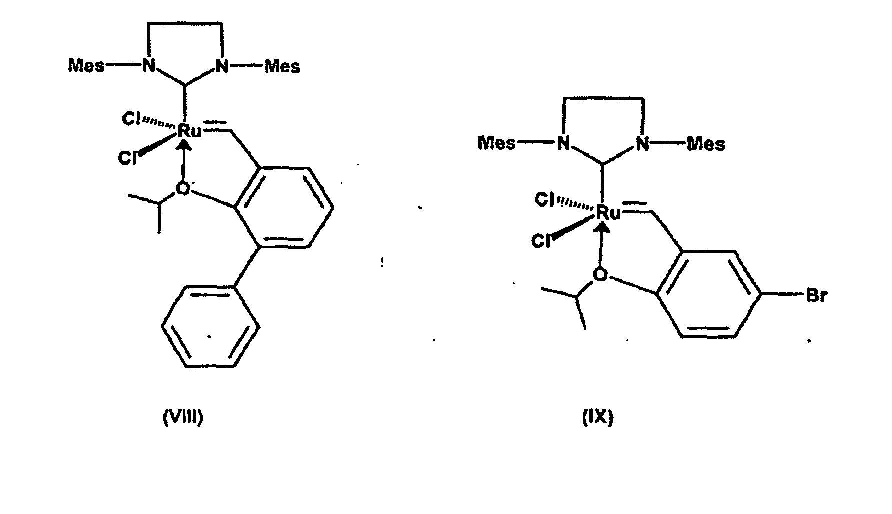

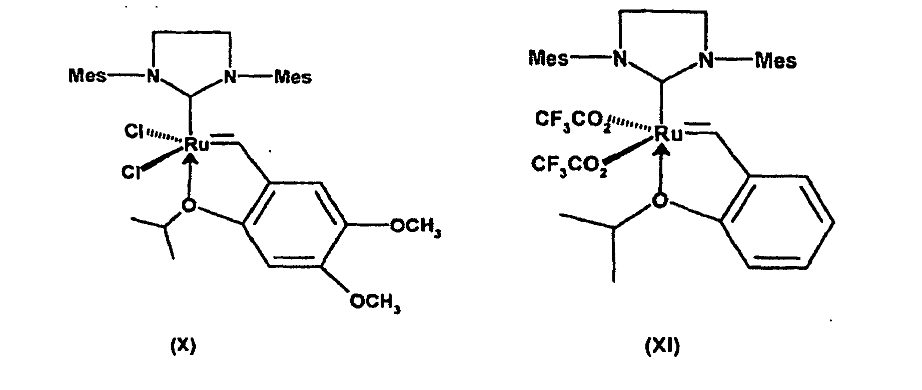

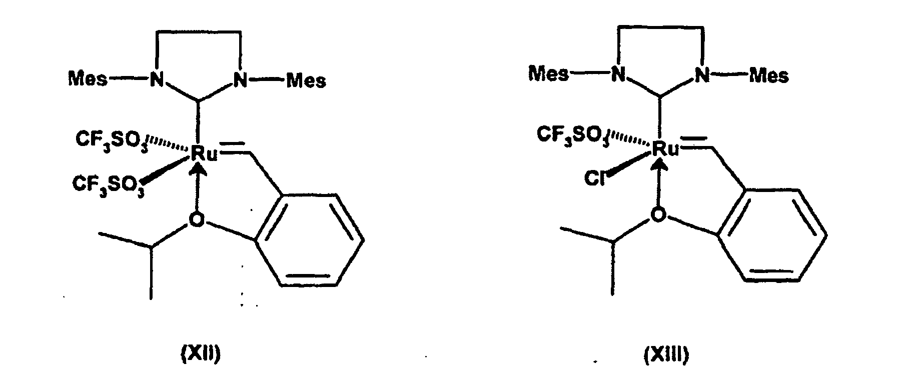

23. Process according to one or more of Claims 16-18, wherein a catalyst of the
general formula (B2), 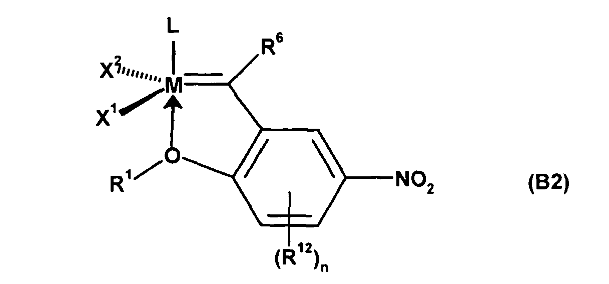 where
M, L, X¹, X², R¹ and R⁶ have the meanings mentioned for the general formula (B) in Claim 16,
the radicals R¹² are identical or different and have the meanings, with the exception of hydrogen, mentioned for the radicals R², R³, R⁴ and R⁵ in the general formula (B) in Claim 16 and
n is 0,1,2 or 3,
is used.

24. Process according to Claim 23, wherein the catalyst of the following structure (XIV) or (XV), where Mes is in each case a 2,4,6-trimethylphenyl radical, is used.

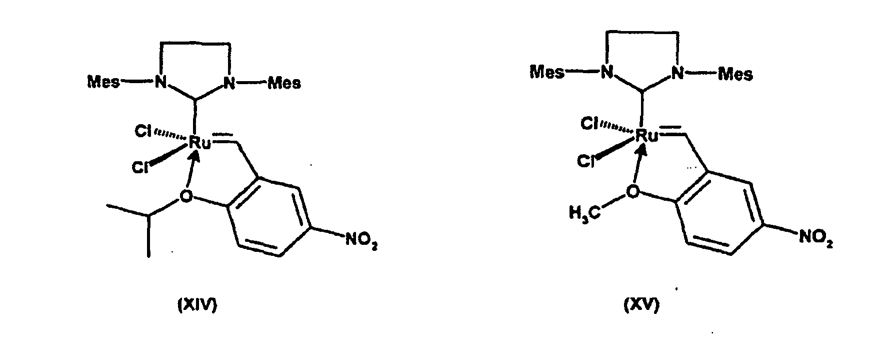

25. Process according to one or more of Claims 16-18, wherein a catalyst of the
general formula (B3), 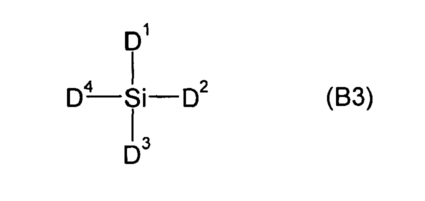 where D¹, D², D³ and D⁴ each have a structure of the general formula (XVI) shown below which is bound via the methylene group to the silicon of the formula (B3), 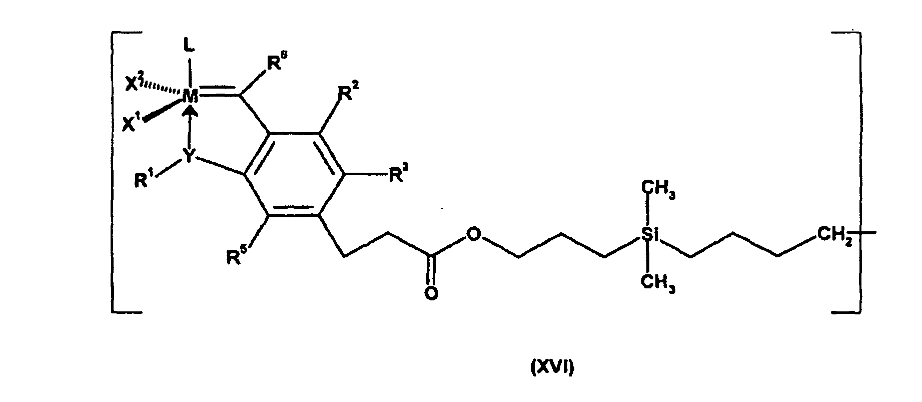 where
M, L, X¹, X², R¹, R², R³, R⁵ and R⁶ have the meanings mentioned for the general formula (B) in Claim 16,
is used.

26. Process according to one or more of Claims 1-8, wherein a catalyst of the general formula (B4), 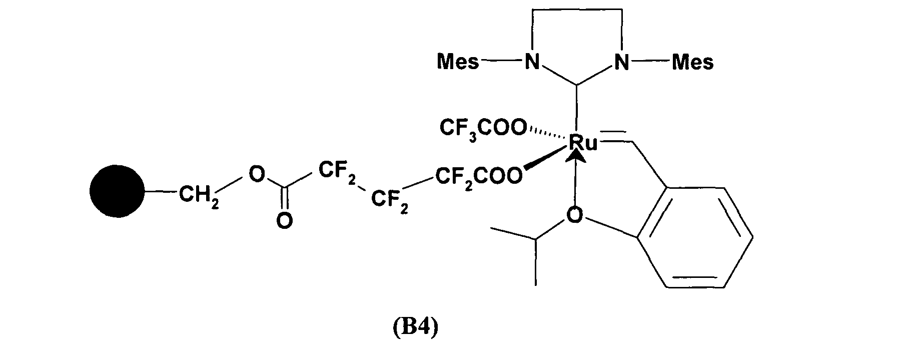 where the symbol 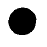
represents a support,
is used.

27. Process according to one or more of Claims 1-8, wherein a catalyst of the
general formula (C), 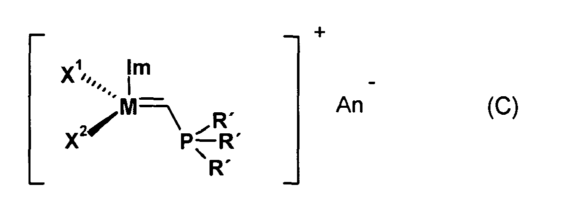 where
M is ruthenium or osmium,
X¹ and X² are identical or different and are anionic ligands,
R' are identical or different and are organic radicals,
Im is a substituted or unsubstituted imidazolidine radical and
An is an anion,
is used.

28. Process according to one or more of Claims 1-8, wherein a catalyst of the
general formula (D), 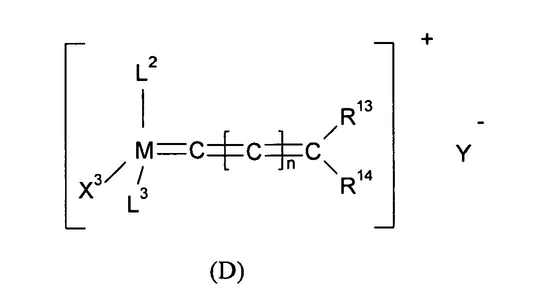 where
M is ruthenium or osmium,
R¹³ and R¹⁴ are each, independently of one another, hydrogen, C₁-C₂₀- alkyl, C₂-C₂₀-alkenyl, C₂-C₂₀-alkynyl, C₅-C₂₄-aryl, C₁-C₂₀- carboxylate, C₁-C₂₀-alkoxy, C₂-C₂₀-alkenyloxy, C₂-C₂₀- alkynyloxy, C₅-C₂₄-aryloxy, C₂-C₂₀-alkoxycarbonyl, C₁-C₂₀- alkylthio, C₁-C₂₀-alkylsulphonyl or C₁-C₂₀-alkylsulphynyl,
X³ is an anionic ligand,
L² is an uncharged π-bonded ligand which may either be monocyclic or polycyclic,
L³ is a ligand selected from the group consisting of phosphines, sulphonated phosphines, fluorinated phosphines, functionalized phosphines having up to three aminoalkyl, ammonioalkyl, alkoxyalkyl, alkoxycarbonylalkyl, hydrocarbonylalkyl, hydroxyalkyl or ketoalkyl groups, phosphites, phosphinites, phosphonites, phosphinamines, arsines, stibines, ethers, amines, amides, imines, sulphoxides, thioethers and pyridines,
Y⁻ is a noncoordinating anion and
n is 0,1,2,3,4 or 5,
is used.

29. Process according to one or more of Claims 1-8, wherein a catalyst of the general formula (E), 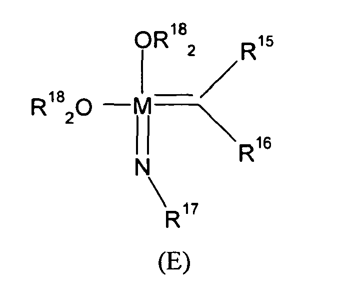 where
M² is molybdenum or tungsten,
R¹⁵ and R¹⁶ are identical or different and are each hydrogen, C₁-C₂₀- alkyl, C₂-C₂₀-alkenyl, C₂-C₂₀-alkynyl, C₅-C₂₄-aryl, C₁-C₂₀- carboxylate, C₁-C₂₀-alkoxy, C₂-C₂₀-alkenyloxy, C₂-C₂₀- alkynyloxy, C₅-C₂₄-aryloxy, C₂-C₂₀-alkoxycarbonyl, C₁-C₂₀- alkylthio, C₁-C₂₀-alkylsulphonyl or C₁-C₂₀-alkylsulphynyl,
R¹⁷ and R¹⁸ are identical or different and are each an unsubstituted or halogen-substituted C₁-C₂₀-alkyl, C₅-C₂₄-aryl, C₆-C₃₀-aralkyl radical or a silicone-containing analogue thereof,
is used.

30. Process according to one or more of Claims 1-8, wherein a catalyst of the
general formula (F), 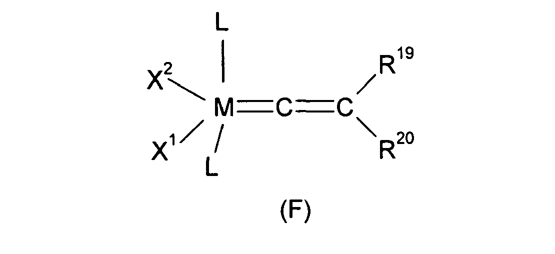 where
M is ruthenium or osmium,
X¹ and X² are identical or different and are anionic ligands which can have all meanings of X¹ and X² in the general formulae (A) and (B),
the symbols L represent identical or different ligands which can have all meanings of L in the general formulae (A) and (B), and
R¹⁹ and R²⁰ are identical or different and are each hydrogen or substituted or unsubstituted alkyl,
is used.

31. Process for preparing hydrogenated nitrile rubber, **characterized in that**, after the metathetic degradation of the nitrile rubber according to one or more of Claims 1 to 30, a hydrogenation of the nitrile rubber which has been degraded by the metathesis is carried out.

## Revendications

1. Procédé pour la dégradation par métathèse de caoutchouc nitrile en présence d'un catalyseur et d'un phosphane ou diphosphane, dans lequel on utilise 0,01 à 1 équivalent de phosphane ou diphosphane pour 1 équivalent de catalyseur.

2. Procédé selon la revendication 1, dans lequel on utilise le phosphane ou diphosphane en une quantité dans la plage allant de 0,05 à 0,5 équivalent, de préférence en une quantité dans la plage allant de 0,10 à 0,20 équivalent, chaque fois par rapport à 1 équivalent de catalyseur.

3. Procédé selon la revendication 1 ou 2, dans lequel on utilise comme phosphane un composé de formule générale (IA), 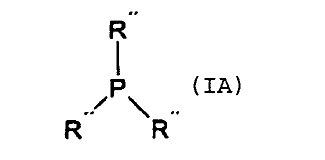 dans laquelle
tous les R" sont identiques ou différents et représentent un atome d'halogène ou un groupe alkyle, alcényle, alcadiényle, alcoxy, aryle, hétéroaryle, cycloalkyle, cycloalcényle, cycloalcadiényle ou triméthylsilyle.

4. Procédé selon la revendication 1 ou 2, dans lequel on utilise comme diphosphane un composé de formule générale (IB), 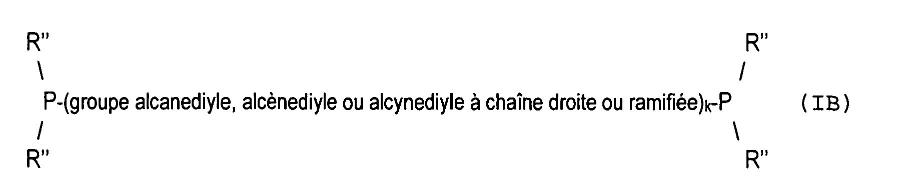 dans laquelle
tous les R" sont identiques ou différents et représentent un atome d'halogène ou un groupe alkyle, alcényle, alcadiényle, alcoxy, aryle, hétéroaryle, cycloalkyle, cycloalcényle,cycloalcadiényle ou triméthylsilyle,
k est 0 ou 1.

5. Procédé selon la revendication 3, dans lequel on utilise comme phosphanes de formule générale (IA) des trialkyl-, tricycloalkyl-, triaryl-, trialkaryl-, triaralkyl-, diaryl-monoalkyl-, diaryl-monocycloalkyl-, dialkyl-monoaryl-, dialkyl-monocycloalkyl- ou dicycloalkyl-monoaryl-phosphanes.

6. Procédé selon la revendication 3 ou 5, dans lequel on utilise des phosphanes de formule générale (IA) dans lesquels tous les R'' sont identiques ou différents et représentent le groupe phényle, cyclohexyle, cyclohexényle, cyclopentyle, cyclopentadiényle, phénylsulfonate ou cyclohexyl-sulfonate.

7. Procédé selon la revendication 3, **caractérisé en ce qu'**on utilise comme phosphanes de formule générale (IA) PPh₃, P(p-Tol)₃, P(o-Tol)₃, PPh (CH₃)₂, P(CF₃)₃, p (p-FC₆H₄)_{3,} P(p-CF₃C₆H₄)₃, P(C₆H₄-SO₃Na)₃, P(CH₂C₆H₄-SO₃Na)₃, P(iso-Pr)₃, P(CHCH₃(CH₂CH₃))₃,
P(cyclopentyle)₃, P(cyclohexyle)₃, P(néopentyle)₃, P(C₆H₅CH₂) (C₆H₅)₂, P(NCCH₂CH₂)₂ (C₆H₂), P[(CH₃)₃C]₂Cl, P[(CH₃)₃C]₂(CH₂), P(tert-Bu)₂(biph), P(C₆H₁₁)₂Cl, P(CH₃) (OCH₂CH₃)₂, P(CH₂=CHCH₂)₃, P(C₄H₃O)₃, P(CH₂OH)₃, P(m-CH₃OC₆H₄)_{3,} P(C₆F₅)_{3,} P[(CH₃)₃Si]₃ ou P[(CH₃O)₃C₆H₂]_{3,} Tol signifiant tolyle, biph signifiant biphényle, Bu signifiant butyle et Pr signifiant propyle.

8. Procédé selon la revendication 4, dans lequel on utilise comme diphosphanes de formule générale (IB) Cl₂PCH₂CH₂PCl₂, (C₆H₁₁)₂PCH₂P(C₆H₁₁) (CH₃)₂PCH₂CH₂P (CH₃)_{2,} (C₆H₅) ₂PCCP (C₆H₅) 2, (C₆H₅) ₂PCH=CHP(C₆H₅) 2, (C₆F₅)₂PCH₂CH₂P (C₆F₅)₂, (C₆H₅)₂P (CH₂) ₄P (C₆H₅)₂, (C₆H₅)₂PCH(CH₃) CH (CH₃) P(C₆H₅)₂ ou (C₆H₅)₂PCH (CH₃) CH₂P (C₆H₅)₂.

9. Procédé selon une ou plusieurs des revendications 1 à 8, dans lequel on utilise comme catalyseur un composé de formule générale (A), 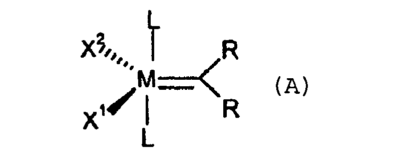 dans laquelle
M représente l'osmium ou le ruthénium,
R sont identiques ou différents et représentent un radical alkyle, de préférence alkyle en C₁-C₃₀, cycloalkyle, de préférence cycloalkyle en C₃-C_{20,} alcényle, de préférence alcényle en C₂-C₂₀, alcynyle, de préférence alcynyle en C₂-C₂₀, aryle, de préférence aryle en C₅-C₂₄, carboxylate, de préférence carboxylate en C₁-C₂₀, alcoxy, de préférence alcoxy en C₁-C₂₀, alcényloxy, de préférence alcényloxy en C₂-C₂₀, alcynyloxy, de préférence alcynyloxy en C₂-C₂₀, aryloxy, de préférence aryloxy en C₅-C₂₄, alcoxycarbonyle, de préférence alcoxycarbonyle en C₂-C₂₀, alkylamino, de préférence alkyl(C₁-C₃₀)amino, alkylthio, de préférence alkyl (C₁-C₃₀) thio, arylthio, de préférence aryl (C₅-C₂₄) thio, alkylsulfonyle, de préférence alkyl (C₁-C₂₀) sulfonyle, ou alkylsulfinyle, de préférence alkyl- (C₁-C₂₀) sulfinyle, qui peuvent tous être éventuellement substitués chacun par un ou plusieurs atomes d'halogène ou radicaux alkyle, alcoxy, aryle ou hétéroaryle,
X¹ et X² sont identiques ou différents et représentent deux ligands, de préférence des ligands anioniques, et
L représente des ligands identiques ou différents, de préférence des donneurs d'électrons neutres.

10. Procédé selon la revendication 9, dans lequel X¹ et X² sont identiques ou différents et représentent un atome d'hydrogène, d'halogène ou de pseudo-halogène, des radicaux alkyle en C₁-C₃₀ à chaîne droite ou ramifiée, aryle en C₅-C₂₄, alcoxy en C₁-C₂₀, aryloxy en C₅-C₂₄, alkyldicétonate en C₃-C₂₀, aryldicétonate en C₅-C₂₄, carboxylate en C₁-C₂₀, alkyl(C₁-C₂) sulfonate, aryl (C₅-C₂₄) sulfonate, alkyl (C₁-C₂₀) thiol, aryl(C₅-C₂₄)-thiol, alkyl(C₁-C₂₀)sulfonyle ou alkyl (C₁-C₂₀) sulfinyle.

11. Procédé selon la revendication 9, dans lequel X¹ et X² sont identiques ou différents et représentent un atome d'halogène, en particulier de fluor, chlore, brome ou iode, un radical benzoate, carboxylate en C₁-C₅, alkyle en C₁-C₅, phénoxy, alcoxy en C₁-C₅ alkyl (C₁-C₅) thiol, aryl (C₅-C₂₄) thiol, aryle en C₅-C₂₄ ou alkyl (C₁-C₅) sulfonate.

12. Procédé selon la revendication 9, dans lequel x¹ et X² sont identiques et représentent un atome d'halogène, en particulier de chlore, CF₃COO, CH₃COO, CFH₂COO, (CH₃) _{3CO}, (CF₃)₂ (CH₃) CO, (CF₃) (CH₃) ₂CO, PhO (phénoxy), MeO (méthoxy), EtO (éthoxy), tosylate (p-CH₃-C₆H₄-SO₃) , mésylate (2, 4,6-triméthylphényle) ou CF₃SO₃(trifluorométhanesulfonate).

13. Procédé selon la revendication 9, dans lequel les deux ligands L représentent, indépendamment l'un de l'autre, un ligand phosphine, phosphine sulfonée, phosphate, phosphinite, phosphonite, arsine, stilbène, éther, amine, amide, sulfoxyde, carboxy, nitrosyle, pyridine, thioéther ou un ligand imidazolidine (« Im »).

14. Procédé selon la revendication 13, dans lequel le radical imidazolidine (Im) présente une structure de formule générale (IIa) ou (IIb), 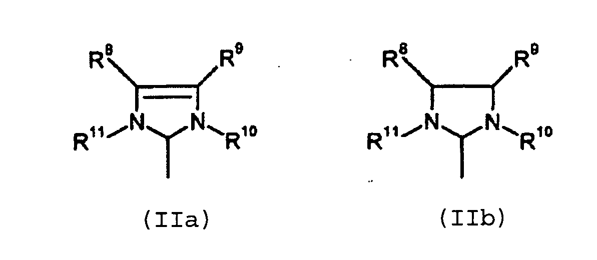 formules dans lesquelles
R⁸, R⁹, R¹⁰ R¹¹ sont identiques ou différents et représentent un atome d'hydrogène, un groupe alkyle en C₁-C₃₀ à chaîne droite ou ramifiée, cycloalkyle en C₃-C_{20,} alcényle en C₂C₂₀, alcynyle en C₂-C₂₀, aryle en C₅-C₂₄, carboxylate en C₁-C₂₀, alcoxy en C₁-C₂₀, alcényloxy en C₂-C₂₀, alcynyloxy en C₂-C₂₀, aryloxy en C₅-C₂₀, alcoxycarbonyle en C₂-C_{20,} alkyl (C₁-C₂₀) thio, aryl (C₅-C₂₀) thio, alkyl (C₁-C₂₀) sulfonyle, alkyl (C₁-C₂₀) sulfonate, aryl (C₅-C₂₀) sulfonate ou alkyl (C₁-C₂₀)- sulfinyle.

15. Procédé selon une ou plusieurs des revendications 1 à 14, dans lequel le catalyseur possède la structure (III) ou (IV), Cy représentant chaque fois le groupe cyclohexyle et Mes représentant chaque fois le groupe 2,4,6-triméthylphényle.

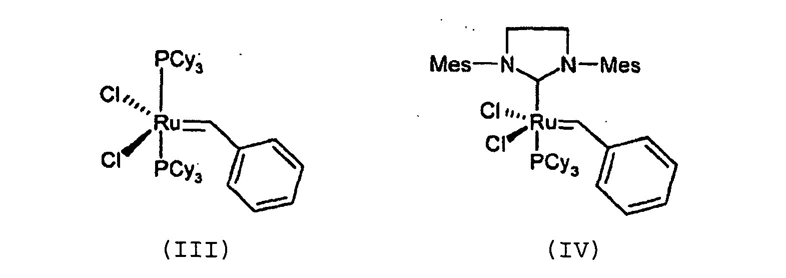

16. Procédé selon une ou plusieurs des revendications 1 à 8, dans lequel on utilise un catalyseur de formule générale (B), 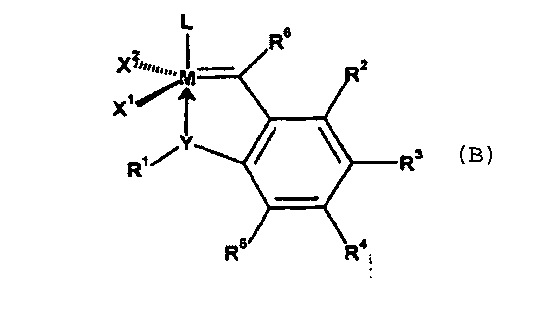 dans laquelle
M représente le ruthénium ou l'osmium,
Y représente un atome d'oxygène (O), de soufre (S), un radical N-R¹ ou un radical P-R¹,
X¹ et X² sont des ligands identiques ou différents
R¹ représente un radical alkyle, cycloalkyle, alcényle, alcynyle, aryle, alcoxy, alcényloxy, alcynyloxy, aryloxy, alcoxycarbonyle, alkylamino, alkylthio, arylthio, alkylsulfonyle ou alkylsulfinyle, qui peuvent tous être éventuellement substitués chacun par un ou plusieurs atomes d'halogène ou radicaux alkyle, alcoxy, aryle ou hétéroaryle,
R² R³, R⁴ et R⁵ sont identiques ou différents et représentent un atome d'hydrogène, des radicaux organiques ou inorganiques,
R⁶ représente un atome d'hydrogène, un radical alkyle, alcényle, alcynyle ou un radical aryle et
L est un ligand qui a les mêmes significations que le ligand L dans la formule (A) indiquée dans la revendication 9.

17. Procédé selon la revendication 16, dans lequel L représente un radical P(R⁷)₃, R⁷ représentant chaque fois indépendamment un groupe alkyle en C₁-C₆, cycloalkyle en C₃-C₈ ou aryle, ou bien un radical imidazolidine (« Im ») éventuellement substitué, qui possède la structure des formules générales (IIa) et (IIb) indiquées dans la revendication 14 et de façon particulièrement préférée l'une des structures (Va-f) ci-après, Mes représentant chaque fois un radical 2,4,6-triméthylphényle,

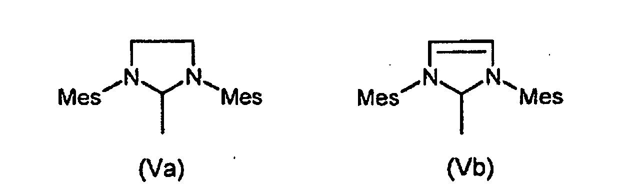

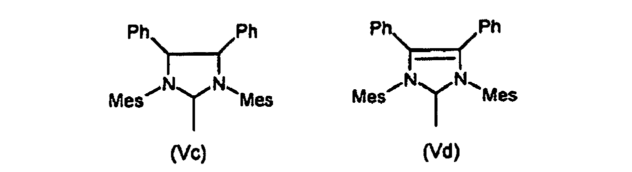

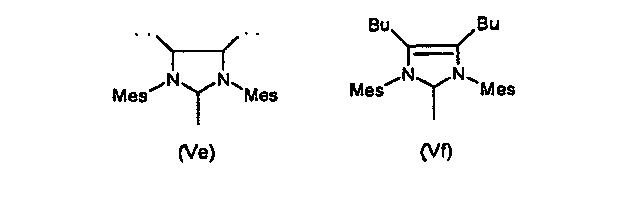

18. Procédé selon la revendication 16 ou 17, dans lequel X¹ et X² ont dans la formule générale (B) les significations que X¹ et X² ont dans les revendications 9-12.

19. Procédé selon une ou plusieurs des revendications 16 à 18, dans lequel on utilise un catalyseur selon la formule générale (B1), 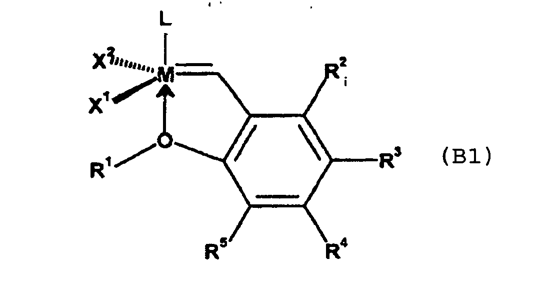 dans laquelle
M, L, X¹, X², R¹, R², R³, R⁴ et R⁵ ont les significa- tions données pour la formule générale (B) dans la revendication 16.

20. Procédé selon la revendication 19, dans lequel on utilise un catalyseur selon la formule générale (B1), dans laquelle
M représente le ruthénium,
X¹ et X² représentent simultanément un atome d'halogène, en particulier de chlore,
R¹ représente un radical alkyle en C₁-C₁₂ à chaîne droite ou ramifiée,
R² R³, R⁴, R⁵ ont les significations indiquées pour la formule générale (B) dans la revendication 16 et
L a les significations indiquées pour la formule générale (B) dans la revendication 16.

21. Procédé selon la revendication 19, dans lequel on utilise un catalyseur selon la formule générale (B1), dans laquelle
M représente le ruthénium,
X¹ et X² représentent simultanément un atome de chlore,
R¹ représente un radical isopropyle,
R², R³, R⁴, R⁵ représentent tous un atome d'hydrogène et
L représente un radical imidazolidine éventuellement substitué, de formule générale (IIa) ou (IIb), 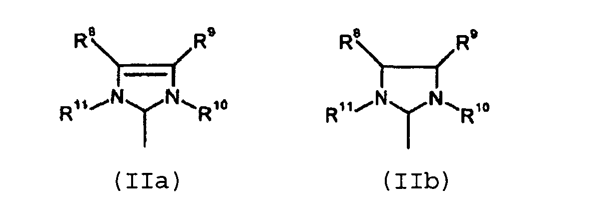 formules dans lesquelles
R⁸, R⁹, R¹⁰, R¹¹ sont identiques ou différents et représentent un atome d'hydrogène, un groupe alkyle en C₁-C₃₀ à chaîne droite ou ramifiée, cycloalkyle en C₃-C₂₀, alcényle en C₂-C₂₀, alcynyle en C₂-C_{20,}aryle en C₅-C₂₄, carboxylate en C₁-C₂₀, alcoxy en C₁-C₂₀, alcényloxy en C₂-C₂₀,alcynyloxy en C₂-C₂₀, aryloxy en C₅-C₂₄, alcoxycarbonyle en C₂-C₂₀, alkyl (C₁-C₂₀) thio, aryl (C₅-C₂₄) thio, alkyl (C₁-C₂₀) sulfonyle, alkyl (C₁-C₂₀) sulfonate, aryl (C₅-C₂₄) sulfonate ou alkyl (C₁-C₂₀) sulfinyle.

22. Procédé selon la revendication 19, dans lequel on utilise comme catalyseur de formule développée (B1) un catalyseur des structures (VI), (VII), (VIII), (IX), (X), (XI), (XII) ou (XIII) suivantes, Mes représentant chaque fois un radical 2,4,6-triméthylphényle.

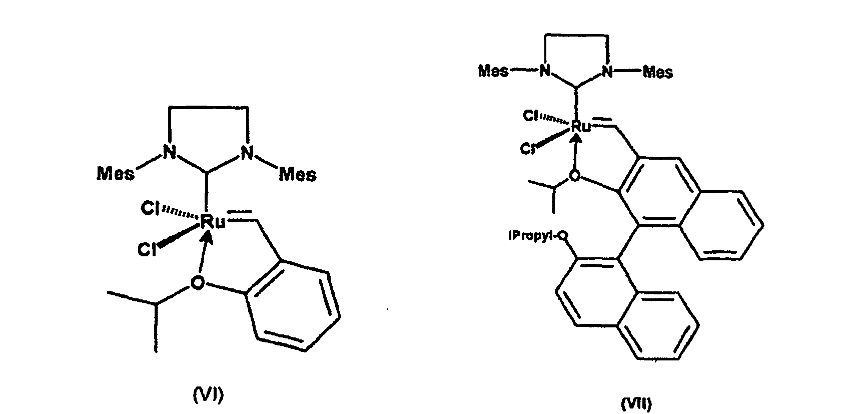

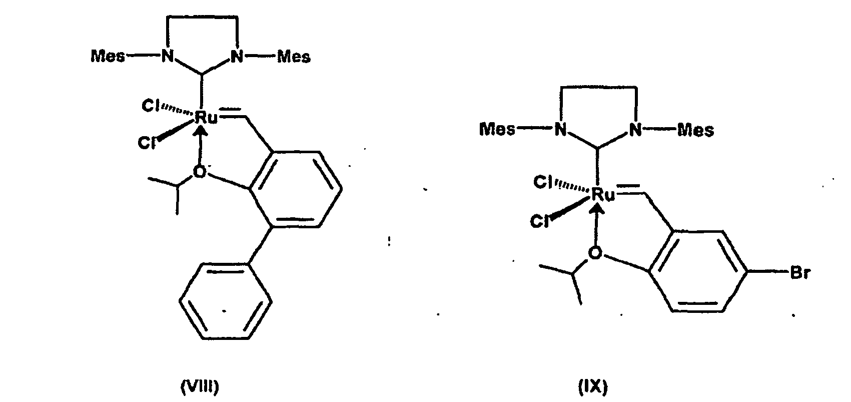

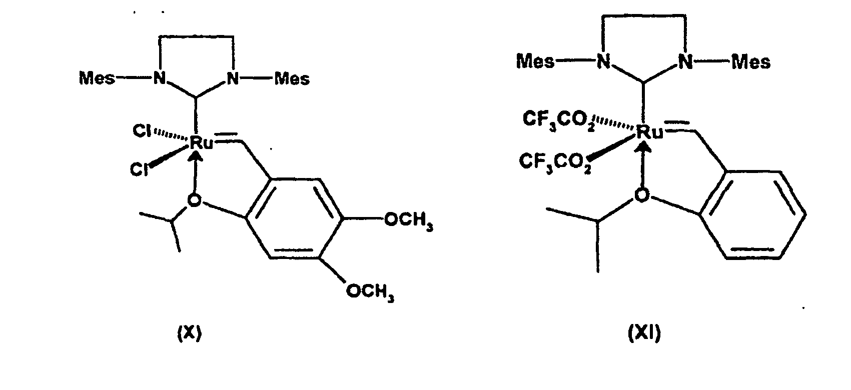

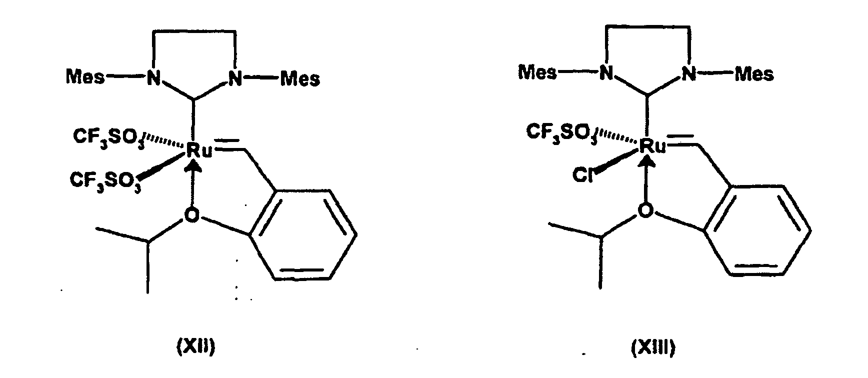

23. Procédé selon une ou plusieurs des revendications 16-18, dans lequel on utilise un catalyseur de formule générale (B2), 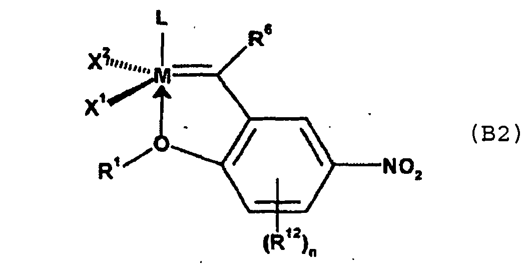 dans laquelle
M, L, X¹, X², R¹ et R⁶ ont les significations indiquées pour la formule générale (B) dans la revendication 16,
R¹² sont identiques ou différents et ont les significations indiquées dans la revendication 16 pour les radicaux R², R³, R⁴ et R⁵ dans la formule générale (B), hormis celle d'un atome d'hydrogène et
n est égal à 0, 1, 2 ou 3.

24. Procédé selon la revendication 23, dans lequel on utilise le catalyseur ayant les structures (XIV) ou (XV) suivantes, Mes représentant chaque fois un radical 2,4,6-triméthylphényle.

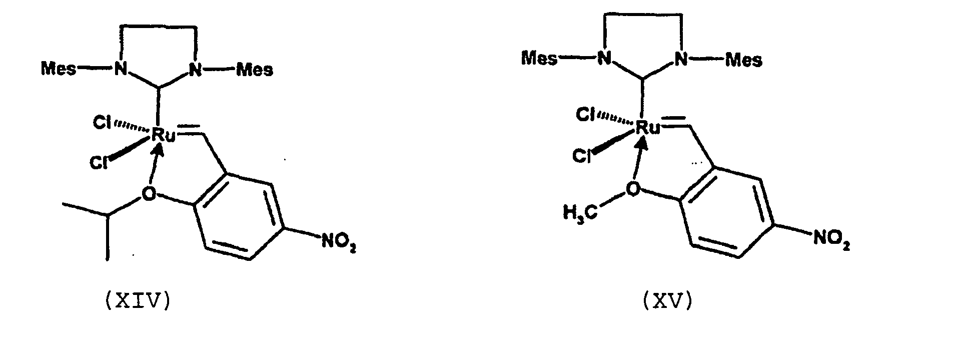

25. Procédé selon une ou plusieurs des revendications 16-18, dans lequel on utilise un catalyseur de formule générale (B3), 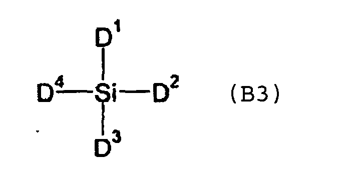 dans laquelle D¹, D², D³ et D⁴ ont chacun une structure de formule générale (XVI) représentée ci-après, qui est liée par le groupe méthylène au silicium de la formule (B3) et 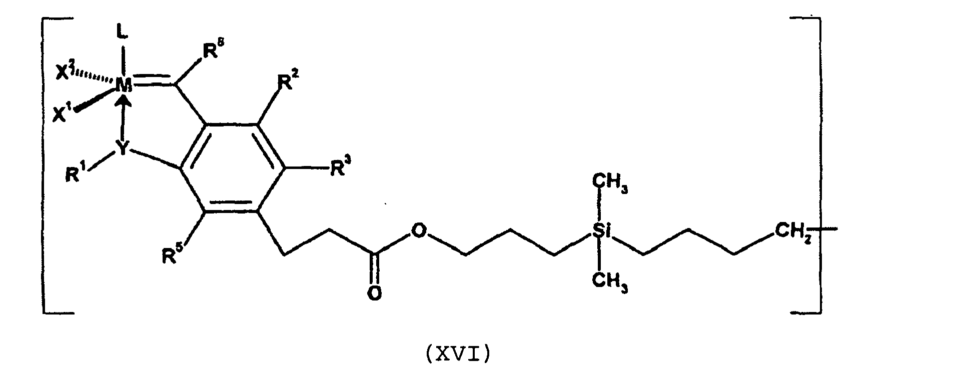 Formule dans laquelle
M, L, X¹, X², R¹, R², R³, R⁵ et R⁶ ont les significa- tions indiquées pour la formule générale (B) dans la revendication 16.

26. Procédé selon une ou plusieurs des revendications 1-8, dans lequel on utilise un catalyseur de formule générale (B4), 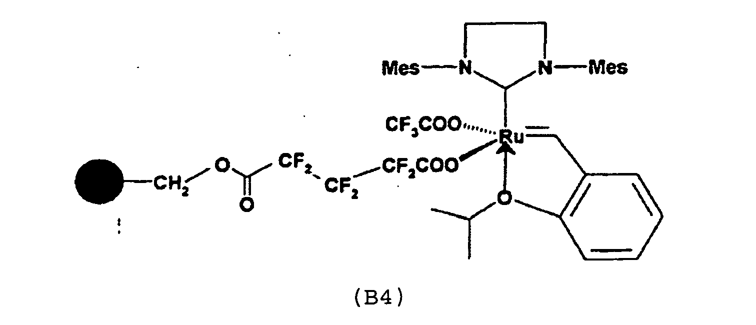 dans laquelle le symbole 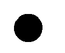
représente un support.

27. Procédé selon une ou plusieurs des revendications 1-8, dans lequel on utilise un catalyseur de formule générale (C), 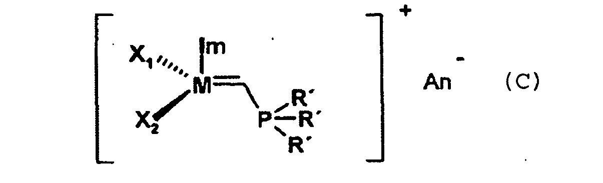 dans laquelle
M représente le ruthénium ou l'osmium,
X¹ et X² sont identiques ou différents et représentent des ligands anioniques,
R' sont identiques ou différents et représentent des radicaux organiques,
Im représente un radical imidazolidine éventuellement substitué et
An représente un anion.

28. Procédé selon une ou plusieurs des revendications 1-8, dans lequel on utilise un catalyseur de formule générale (D), 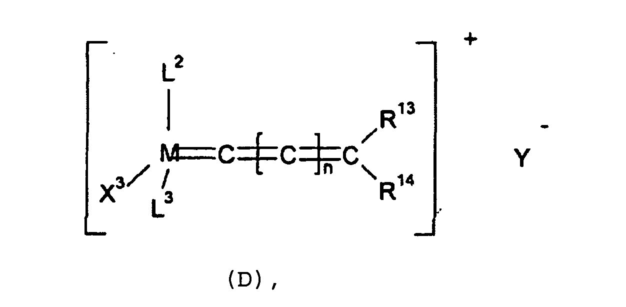 dans laquelle
M représente le ruthénium ou l'osmium,
R¹³ et R¹⁴ représentent, indépendamment l'un de l'autre, un atome d'hydrogène, un radical alkyle en C₁-C₂₀, alcényle en C₂-C₂₀, alcynyle en C₂-C₂₀, aryle en C₅-C₂₄, carboxylate en C₁-C₂₀, alcoxy en C₁-C₂₀, alcényloxy en C₂-C₂₀, alcynyloxy en C₂-C₂₀, aryloxy en C₅-C₂₄, alcoxycarbonyle en C₂-C₂₀, alkyl (C₁-C₂₀) thio, alkyl (C₁-C₂₀)- sulfonyle ou alkyl (C₁-C₂₀) sulfinyle,
X³ est un ligand anionique,
L² est un ligand neutre à liaison π, indépendamment du fait qu'il est mono- ou polycyclique,
L³ représente un ligand choisi dans le groupe des phosphines, phosphines sulfonées, phosphines fluorées, phosphines fonctionnalisées comportant jusqu'à trois groupes aminoalkyle, ammoniumalkyle, alcoxyalkyle, alcoxycarbonylalkyle, hydroxycarbonylalkyle, hydroxyalkyle ou cétoalkyle, des phosphites, phosphinites, phosphonites, phosphinamines, arsines, stilbènes, éthers, amines, amides, imines, sulfoxydes, thioéthers et pyridines,
Y⁻ est un anion non coordiné et
n 0, 1, 2, 3, 4 ou 5.

29. Procédé selon une ou plusieurs des revendications 1-8, dans lequel on utilise un catalyseur de formule générale (E), 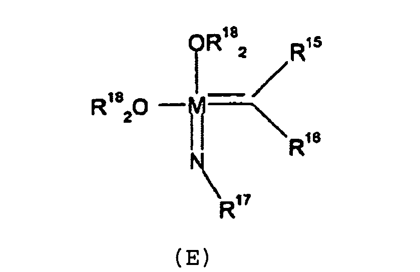 dans laquelle
M² est le molybdène ou le tungstène,
R¹⁵ et R¹⁶ sont identiques ou différents et représentent un atome d'hydrogène, un radical alkyle en C₁-C₂₀, alcényle en C₂-C_{20,} alcynyle en C₂-C₂₀, aryle en C₅-C₂₄, carboxylate en C₁-C₂₀, alcoxy en C₁-C₂₀, alcényloxy en C₂-C₂₀, alcynyloxy en C₂-C₂₀, aryloxy en C₅-C₂₄, alcoxycarbonyle en C₂-C₂₀, alkyl (C₁-C₂₀) thio, alkyl (C₁-C₂₀) - sulfonyle ou alkyl(C₁-C₂₀)sulfinyle,
R¹⁷ et R¹⁸ sont identiques ou différents et représentent un groupe radical alkyle en C₁-C₂₀, aryle en C₅-C₂₄, aralkyle en C₆-C₃₀, non substitué ou substitué par halogène ou des analogues siliciés de ceux-ci.

30. Procédé selon une ou plusieurs des revendications 1-8, dans lequel on utilise un catalyseur de formule générale (F), 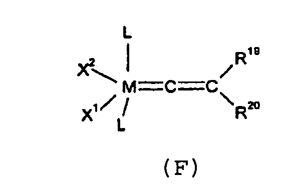 dans laquelle
M représente le ruthénium ou l'osmium,
X¹ et X² sont identiques ou différents et représentent des ligands anioniques qui peuvent adopter toutes les significations de X¹ et X² dans les formules générales (A) et (B),
L représente des ligands identiques ou différents, qui peuvent adopter toutes les significations de L dans les formules générales (A) et (B) et
R¹⁹ et R²⁰ sont identiques ou différents et représentent un atome d'hydrogène ou un groupe alkyle substitué ou non substitué.

31. Procédé pour la production de caoutchouc nitrile hydrogéné, **caractérisé en ce qu'**à la suite de la dégradation par métathèse du caoutchouc nitrile on effectue selon une ou plusieurs des revendications 1 à 30 une hydrogénation du caoutchouc nitrile dégradé par la métathèse.
